# EUROPÄISCHE PATENTANMELDUNG

(11) **EP 4 279 307 A1**
(43) Veröffentlichungstag der Anmeldung: **22.11.2023**
(21) Anmeldenummer: 22174661.3
(22) Anmeldetag: 20.05.2022
(51) Int. Cl.: B60K 6/26, B60K 6/365, B60K 6/40, H02K 7/116, H02K 7/12, H02K 16/00, F16H 3/00, H02K 7/10, F16H 3/54, F16H 3/66

(54) **ANTRIEBSEINHEIT**

(71) Anmelder: Tatus, Andreas, 06110 Halle (DE)
(72) Erfinder: Müller, Jim Mario, 06110 Halle (DE)

(57) **Zusammenfassung**

Die Erfindung betrifft eine Antriebseinheit zumindest enthaltend ein Gehäuse 1, darin zumindest angeordnet eine elektrische Maschine, bestehend aus einem Stator, welcher zumindest zwei Statorsegmente besitzt, und weiterhin bestehend aus einem Rotor, welcher zumindest zwei Rotorsegmente besitzt, die jeweils über zumindest eine Bremse 13 oder eine Rücklaufsperre verfügen, welche über eine feste Verbindung mit dem Gehäuse 1 verfügt,
und ein mehrgängiges Planetengetriebe, bestehend aus zumindest einem, koaxial zur Hauptachse 2 angeordneten, einfachen Planetengetriebe 6.1, bestehend aus zumindest einem Hohlrad 10.1, einem Trägerrad 8.1 und einem Sonnenrad 7.1.

## Beschreibung

Die Erfindung betrifft eine Antriebseinheit gemäß der im Oberbegriff des Patentanspruchs 1 näher definierten Art.

Es sind nach Stand der Technik elektrische Maschinen, wie beispielsweise Elektromotoren und Elektrogeneratoren, bekannt. Aufgabe von Elektromotoren ist es, elektrische Energie in kinetische Energie umzuwandeln. Sie setzen eine elektrische Leistung in eine mechanische Leistung um. Diese mechanische Leistung wird mit einem bestimmten Drehmoment bei einer bestimmten Umdrehungszahl an der Abtriebswelle bereitgestellt. Elektrogeneratoren werden hingegen eingesetzt, um eine mechanische Leistung in eine elektrische Leistung umzusetzen. Elektrische Maschinen sind in verschiedenen Baugrößen, mit verschiedener Leistung bekannt. Sie bestehen nach dem Stand der Technik zumeist aus mindestens einem Stator und mindestens einem Rotor. Der Rotor wird unter Nutzung von Anziehungs- und Abstoßungskräften, die mehrere Magnetfelder aufeinander ausüben, durch den Stator in eine Drehbewegung versetzt. Der Stator oder der Rotor besitzt Permanentmagnete und der andere Bestandteil elektrische Spulen, oder Stator und Rotor besitzen elektrische Spulen. Es gibt weiterhin Ausführungen, bei welchen das umlaufende Magnetfeld des Rotors durch magnetisierbare Eisenkerne mit Polen erzeugt wird. Solche Motoren werden als Reluktanzmotoren bezeichnet. Magnetisierbare Eisenkerne mit Polen werden in der Literatur auch als Blechpakete bezeichnet.

Es ist bekannt, dass ein Zusammenhang zwischen den Größen: Leistung der elektrischen Maschine, der Umdrehungszahl ihrer Ab- oder Antriebswelle und dem Drehmoment an ihrer An- oder Abtriebswelle besteht. Um Drehmomente zu wandeln, kommen mechanische Getriebe zum Einsatz.

Es sind mechanische Getriebe bekannt, welche die Umdrehungszahl zwischen ihrer Antriebswelle und ihrer Abtriebswelle umwandeln. Dabei wird ein bestimmtes Drehmoment bei einer bestimmten Umdrehungszahl der jeweiligen Welle in ein anderes bestimmtes Drehmoment mit einer anderen bestimmten Umdrehungszahl der jeweils anderen Welle umgewandelt und für den entsprechenden Anwendungsfall bereitgestellt.

Es sind weiterhin auch mechanische Getriebe in Form von mehrgängigen Planetengetrieben bekannt. Dabei sind einfache Planetengetriebe Stand der Technik. Es sind einfache Planetengetriebe bekannt, welche aus einem Sonnenrad, einem Hohlrad und einem Planetenträger mit einem oder mehreren daran befestigten Planetenrädern bestehen. Weiterhin sind als mehrgängige Planetengetriebe auch zusammengesetzte Planetengetriebe bekannt, welche aus mehreren einfachen Planetengetrieben aufgebaut sind. Dabei gibt es Ausführungen bei welchen mehrere einfache Planetengetriebe drehfest gekoppelt sind. Die Schaltung der Gänge innerhalb der mehrgängigen Planetengetriebe erfolgt nach Stand der Technik über verschiedenartige Schaltelemente. Hierbei kommen kraftschlüssige Verbindungselemente zum Einsatz, welche mechanisch oder auch über Magnetkräfte einen Kraftschluss herstellen. Als mechanisch kraftschlüssige Verbindungselemente sind weiterhin Bremsvorrichtungen und radial ausgebildete Überholkupplungen, auch in Funktion von Rücklaufsperren oder auch Freiläufen, bekannt. Es sind weiterhin Rücklaufsperren bekannt, deren Sperrrichtung für einen Kraftschluss hinsichtlich des Drehsinns umkehrbar ist. Zudem sind Rücklaufsperren Stand der Technik, welche abschaltbar sind. Hierbei sind Ausführungen mit Klemmkörpern, Klemmrollen und weitere Ausführungen bekannt.

Zudem sind Kombinationen aus elektrischen Maschinen und mehrgängigen Planetengetrieben bekannt. Derartige Kombinationen, bei welchen das mehrgängige Planetengetriebe ganz oder teilweise innerhalb des Rotors der elektrischen Maschine liegt, sind zum Beispiel aus DE 10 2007 021 359 B4 oder DE 44 07 714 C1 oder DE 10 2012 210 242 A1 oder DE 10 2020 106 248 A1 bekannt.

Der vorliegenden Erfindung liegt die Aufgabe zugrunde, eine Antriebseinheit bestehend aus mindestens einer elektrischen Maschine und einem mehrgängigen Planetengetriebe zur Verfügung zu stellen, die gegenüber dem Stand der Technik weniger Bauteile aufweist, einen höheren Gesamtwirkungsgrad der Antriebseinheit und eine kompaktere Bauweise aufweist.

Diese Aufgabe wird durch die erfindungsgemäße Antriebseinheit nach Anspruch 1 gelöst.

Erfindungswesentlich ist, dass zumindest zwei Statorsegmente des Stators der elektrischen Maschine mit zumindest einer Verschiebevorrichtung 21 parallel zur Hauptachse 2 verschiebbar sind und die zumindest zwei Rotorsegmente jeweils getrennt voneinander drehfest mit dem Sonnenrad 7.1, mit dem Hohlrad 10.1 oder mit dem Trägerrad 8.1 verbunden sind.

Die erfindungsgemäße Antriebseinheit enthält zumindest ein Gehäuse 1, darin zumindest angeordnet
- eine elektrische Maschine,
   bestehend aus einem Stator, welcher zumindest zwei Statorsegmente besitzt,
   und weiterhin bestehend aus einem Rotor, welcher zumindest zwei Rotorsegmente besitzt, die jeweils über zumindest eine Bremse 13 oder eine Rücklaufsperre verfügen, welche über eine feste Verbindung mit dem Gehäuse 1 verfügt,
- und ein mehrgängiges Planetengetriebe, bestehend aus zumindest einem, koaxial zur Hauptachse 2 angeordneten, einfachen Planetengetriebe 6.1, bestehend aus zumindest einem Hohlrad 10.1, einem Trägerrad 8.1 und einem Sonnenrad 7.1

In der erfindungsgemäßen Antriebseinheit wird die elektrische Leistung der elektrischen Maschine auf die zumindest zwei Statorsegmente, nämlich Statorsegment 4.1 und Statorsegment 4.2, verteilt. Durch die Verschiebbarkeit der Statorsegmente können sie einzeln oder zusammen ein oder beide Rotorsegmente, welche wiederum jeweils getrennt voneinander drehfest mit einem Bestandteil des einfachen Planetengetriebes verbunden sind, antreiben.

Erfindungsgemäß können ausschließlich Bremsen und Rücklaufsperren zum Einsatz kommen. Schaltelemente in der Funktion von Kupplungen sind nicht erforderlich. Damit wird auch der Gesamtwirkungsgrad der erfindungsgemäßen Antriebseinheit durch die Reduzierung der Reibungsverluste, welche beim Einsatz von Kupplungen zum Beispiel durch Schleppverluste zu verzeichnen sind, erhöht. Durch die erfindungsgemäße Anordnung des mehrgängigen Planetengetriebes innerhalb der Rotorsegmente der elektrischen Maschine erfolgt eine Reduktion der Baugröße gegenüber dem Stand der Technik.

Die Erfindung betrifft eine Antriebseinheit, die zum Beispiel zum Antrieb von Kraftfahrzeugen, Luft- oder Wasserfahrzeugen oder auch anderen technischen Geräten oder Maschinen, welche elektrische Energie in kinetische Energie umwandeln und diese bei bestimmten Drehmomenten mit bestimmten Umdrehungszahlen als Drehbewegung bereitstellen, genutzt werden kann. Zugleich betrifft die Erfindung auch eine Antriebseinheit, welche, sofern sie nach dem Stand der Technik als planetengetriebegestützter Generator eingesetzt wird, kinetische in elektrische Energie umwandeln kann. Die elektrische Gesamtnennleistung der erfindungsgemäßen Antriebseinheit wird in beiden Fällen erfindungsgemäß auf verschiedene bewegliche Statorsegmente der elektrischen Maschine verteilt.

Die Erfindung besteht aus einem Gehäuse, darin angeordnet, eine elektrischen Maschine, insbesondere ein Elektromotor oder ein Generator, bestehend aus einem Stator, welcher aus zumindest zwei Statorsegmenten besteht, und einem Rotor, welcher aus zumindest zwei Rotorsegmenten besteht, wobei zumindest zwei Statorsegmente des Stators der elektrischen Maschine mit einer Verschiebevorrichtung parallel zur Hauptachse verschiebbar angeordnet sind. Die Verschiebbarkeit der Statorsegmente des Stators wird durch eine Verschiebevorrichtung 21 nach dem Stand der Technik zum Beispiel durch eine mechanisch, elektromechanisch oder hydraulisch verschiebbare Befestigung 19 sichergestellt. Die Führung 20 der Befestigung ist fest mit dem Gehäuse 1 verbunden. Die Steuerung dieser Bewegung erfolgt durch elektronische Steuergeräte nach dem Stand der Technik.

Ein elektronisches Steuergerät im Sinne der Erfindung ist ein elektronisches Modul, welches elektrische Maschinen oder auch elektrische Schaltelemente, wie zum Beispiel Relais oder Magnetschalter oder andere elektronische Module, steuert und regelt.

Ein Segment des Stators im Sinne der Erfindung, bezeichnet als Statorsegment, ist immer als eine Teilmenge des Stators; ein Segment des Rotors im Sinne der Erfindung, bezeichnet als Rotorsegment, immer als eine Teilmenge des Rotors definiert.

Statorsegmente im Sinne der Erfindung sind Bogensegmente, die als Teile eines die Hauptachse 2 der elektrischen Maschine umschließenden geometrischen Rings bestimmt sind. Diese können innerhalb oder außerhalb des Radius der Rotorsegmente angeordnet sein. Ein Statorsegment ist als einzelnes Bogensegment dieses geometrischen Rings definiert. Die Summe der Winkel der Bogensegmente, welche innerhalb des Radius der Rotorsegmente angeordnet sind, ist kleiner als 360 Grad. Die Summe der Winkel der Bogensegmente, welche außerhalb des Radius der Rotorsegmente angeordnet sind, ist kleiner als 360 Grad. Die Rotationsachse des geometrischen Ringes ist die Hauptachse 2 im Sinne der Erfindung.

Rotorsegmente im Sinne der Erfindung sind als ringförmige Teile eines die Hauptachse 2 der elektrischen Maschine umschließenden Rings bestimmt. Sie umschließen jeweils die Hauptachse 2, wobei die Rotorsegmente nacheinander auf der Hauptachse 2, welche die Rotationsachse der Rotorsegmente ist, angeordnet sind. Zwischen den einzelnen Rotorsegmenten bestehen Zwischenräume.

Als Hauptachse 2 im Sinne der Erfindung wird die Rotationsachse des Sonnenrades des einfachen Planetengetriebes des mehrgängigen Planetengetriebes oder die Rotationsachse der Sonnenräder der einfachen Planetengetriebe bei Ausführungen der erfindungsgemäßen Antriebseinheit bestehend aus zusammengesetzten Planetengetrieben definiert.

Eine Verschiebevorrichtung 21 im Sinne der Erfindung ist eine Baugruppe, die der Verschiebung der Statorsegmente parallel zur Hauptachse 2 dient und aus Führungen 20, zumindest einer Befestigung 19 je Statorsegment und Servomotoren 18 mit Gewindespindeln 17 aufgebaut ist. Die Führungen 20 und die Servomotoren 18 sind fest mit dem Gehäuse 1 verbunden.

Neben der elektrischen Maschine besteht die erfindungsgemäße Antriebseinheit aus einem mehrgängigen Planetengetriebe, enthaltend ein einfaches Planetengetriebe oder ein aus mehreren einfachen Planetengetrieben zusammengesetztes Planetengetriebe. Mehrgängige Planetengetriebe, welche aus mehreren Planetengetrieben zusammengesetzt sind, werden in der Fachliteratur als zusammengesetzte Planetengetriebe bezeichnet.

Die einzelnen verschiebbaren Statorsegmente der elektrischen Maschine treiben verschiedene Rotorsegmente der elektrischen Maschine an, welche mit jeweils einem Bestandteil des Planetengetriebes fest verbunden sind. Der Rotor wird unter Nutzung von Anziehungs- und Abstoßungskräften, die mehrere Magnetfelder aufeinander ausüben, durch den Stator in eine Drehbewegung versetzt. Die Statorsegmente besitzen elektrische Spulen 22, auf welche die der elektrischen Maschine zugeführte elektrische Leistung durch elektronische Steuergeräte über elektrische Zuleitungen verteilt wird. Die Rotorsegmente besitzen Permanentmagnete 5, elektrische Spulen 22 oder magnetisierbare Eisenkerne mit Polen. Das oder die einfachen Planetengetriebe können in einem um die Hauptachse 2 des mehrgängigen Planetengetriebes drehbar gelagerten Planetengetriebegehäuse angeordnet sein. Dieses Planetengetriebegehäuse kann eine Ausformung der Welle des Hohlrades des jeweiligen einfachen Planetengetriebes darstellen. Es sind jedoch auch Ausbildungen möglich, bei denen das Planetengetriebegehäuse Ausformungen anderer Wellen von anderen Bestandteilen des einfachen Planetengetriebes darstellen kann.

Als mechanische Schaltelemente des mehrgängigen Planetengetriebes sind Überholkupplungen, Rücklaufsperren oder Bremsvorrichtungen vorgesehen.

Ein einfaches Planetengetriebe im Sinne der Erfindung besteht zumindest aus einem Hohlrad, einem Trägerrad und einem Sonnenrad. Am Trägerrad sind ein oder mehrere Planetenräder befestigt.

Als Bestandteile eines einfachen Planetengetriebes im Sinne der Erfindung sind das Hohlrad, das Trägerrad und das Sonnenrad definiert.

Das mehrgängige Planetengetriebe kann für entsprechende Anwendungsfälle um weitere einfache Planetengetriebe erweitert werden. Verfügt das mehrgängige Planetengetriebe über mehr als ein einfaches Planetengetriebe, verfügt die erfindungsgemäße Antriebseinheit konstruktionsbedingt demnach auch über mehr als zwei Rotorsegmente, da zum Antrieb für jedes weitere einfache Planetengetriebe mindestens ein weiteres Rotorsegment benötigt wird. Konstruktionsbedingt ist in diesem Falle eine Haltevorrichtung 15 für zumindest ein Schaltelement erforderlich.

Eine Haltevorrichtung 15 im Sinne der Erfindung ist eine mechanische Halterung mit einer festen Verbindung zu einem Haltepunkt am Gehäuse 1, welche in einen ausreichend bemessenen Zwischenraum zwischen zwei Rotorsegmente eingreift und durch ein an ihr befestigtes Schaltelement, insbesondere durch eine Bremse oder eine Rücklaufsperre, zumindest einen Bestandteil des einfachen Planetengetriebes, welcher erfindungsgemäß mit einem Rotorsegment fest verbunden ist, welches zwischen zwei benachbarten Rotorsegmenten angeordnet ist, blockierbar ist.

Damit die Funktion der Haltevorrichtung 15 auch während des Betriebs der erfindungsgemäßen Antriebseinheit und in den verschiedenen Schaltzuständen des mehrgängigen Planetengetriebes sichergestellt ist, muss sie zudem so angeordnet sein, dass sie nicht nur in einen ausreichend bemessenen Zwischenraum zwischen zwei Rotorsegmenten eingreift, sondern gleichermaßen auch in einen ausreichend bemessenen Zwischenraum zwischen den Bogensegmenten des Stators, welche als Statorsegmente definiert sind, eingreift. Dieser Zwischenraum ergibt sich dadurch, dass die Summe der Winkel der Bogensegmente, somit der Statorsegmente, welche innerhalb des Radius der Rotorsegmente angeordnet sind, und die Summe der Winkel der Bogensegmente, somit der Statorsegmente, welche außerhalb des Radius der Rotorsegmente angeordnet sind, jeweils kleiner als 360 Grad ist. Je nach Ausführung der Erfindung ist durch eine weitere an der Haltevorrichtung 15 befestigte Bremse oder Rücklaufsperre auch zusätzlich ein weiterer benachbarter Bestandteil eines einfachen Planetengetriebes blockierbar. An der Haltevorrichtung 15 kann wahlweise oder auch in Kombination mindestens eine Rücklaufsperre, die gegebenenfalls hinsichtlich des Drehsinns umschaltbar ausgeführt sein kann, oder / und mindestens eine Bremse befestigt sein. Es kann an der Haltevorrichtung auch zumindest eine weitere elektrische Maschine 16 nach dem Stand der Technik befestigt sein.

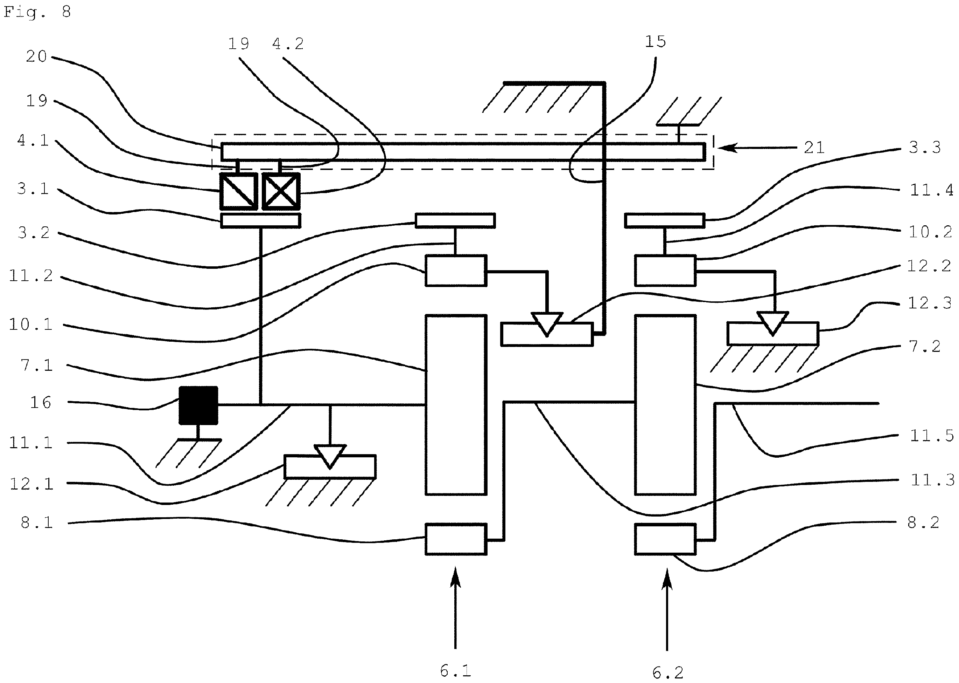

Die weitere elektrische Maschine 16 kann auch je nach Ausführung direkt am Gehäuse 1 angebracht sein. Ihre elektrische Leistung ist Bestandteil der Gesamtnennleistung der erfindungsgemäßen Antriebseinheit. Der Einsatz einer weiteren elektrischen Maschine 16 ist vorteilhaft, wenn das mehrgängige Planetengetriebe der erfindungsgemäßen Antriebseinheit aus zumindest zwei einfachen Planetengetrieben aufgebaut ist und durch den Einsatz einer weiteren elektrischen Maschine 16 eine höhere Anzahl schaltbarer Gänge mit gleichmäßigen Stufensprüngen in der Gangabstufung bereitgestellt werden soll. Solche Ausführungen sind in den Fig. 8 bis 14 und Fig. 16 und 17 dargestellt.

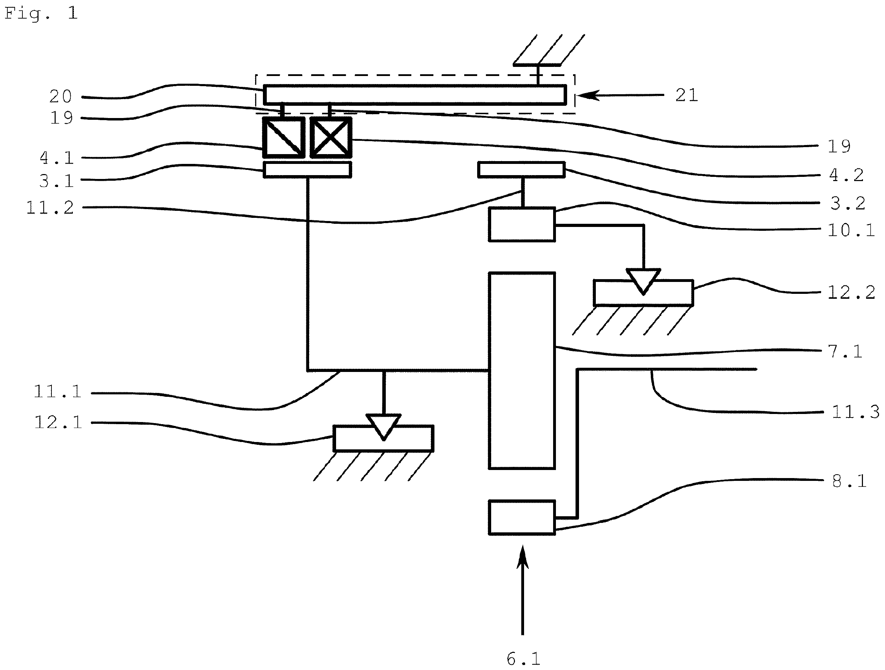

Die schaltbaren Gänge verschiedener Beispiele für mögliche Ausführungen der erfindungsgemäßen Antriebseinheit, dargestellt in den Spalten 1 bis 4 der Tabelle 1, in Bezug auf die Anzahl vorhandener Rotorsegmente und gegebenenfalls auf die Verschaltung bei Ausführungen, bei welchen das mehrgängige Planetengetriebe der erfindungsgemäßen Antriebseinheit als zusammengesetztes Planetengetriebe ausgebildet ist, wie sie auch in den Fig. 1 bis 17 und Fig. 20 bis 25 abgebildet sind, mit einer Spreizung wie sie in Spalte 6 der Tabelle 1 dargestellt ist, stellen sich dar, wie in Spalte 5 der Tabelle 1 dargestellt.

**Tabelle 1**

| Anzahl der einfachen Planetengetriebe | Anzahl verschiebbarer Statorsegmente | Anzahl weiterer elektrischer Maschinen | Anzahl der Rotorsegmente | Anzahl schaltbarer Gänge | Spreizung |
|---|---|---|---|---|---|
| 1 | 2 | 0 | 2 | 3 | 2,618 |
| 1 | 2 | 0 | 2 | 4 | 4,24 |
| 2 | 2 | 1 | 3 | 7 | 6,85 |
| 2 | 3 | 0 | 3 | 7 | 6,85 |
| 3 | 2 | 2 | 4 | 15 | 17,94 |
| 3 | 4 | 0 | 4 | 15 | 17,94 |
| 4 | 2 | 3 | 5 | 31 | 46,97 |
| 4 | 5 | 0 | 5 | 31 | 46,97 |

Die Steuerung des Energieflusses zwischen elektrischer Energiequelle und den Statorsegmenten des Stators der elektrischen Maschine und auch möglicher weiterer elektrischer Maschinen 16 erfolgt durch elektronische Steuergeräte. Diese schalten und regeln den Stromfluss zur elektrischen Maschine und gegebenenfalls zu den weiteren elektrischen Maschinen 16.

Erfolgt die Verschiebung der Statorsegmente des Stators zum Beispiel auf elektromechanische Weise, erfolgt die Steuerung der Servomotoren 18 der Verschiebevorrichtung 21 durch elektronische Steuergeräte, die den Stromfluss zu den Servomotoren 18 steuern und regeln.

Weiterhin ist bei Ausführungen der erfindungsgemäßen Antriebseinheit mit einem mehrgängigen Planetengetriebe, bestehend aus mehr als einem einfachen Planetengetriebe, besonders vorteilhaft, dass das Verhältnis der Anzahl der Zähne des Sonnenrades eines einfachen Planetengetriebes zur Anzahl der Zähne des Hohlrades desselben einfachen Planetengetriebes bevorzugt mit 1 zu 1,618 bestimmt ist. Dies ist besonders vorteilhaft, da hierdurch keiner der Stufensprünge des mehrgängigen Planetengetriebes größer als 1,618 ist. Zudem werden so Gänge des mehrgängigen Planetengetriebes mit annähernd gleichen Stufensprüngen bereitgestellt und die Stufensprünge annähernd gleichmäßig auf die Spreizung des mehrgängigen Planetengetriebes zwischen dem niedrigstem und dem höchsten Gang verteilt. Da eine Realisierung eines exakten Verhältnisses der Anzahl der Zähne des Sonnenrades eines einfachen Planetengetriebes zur Anzahl der Zähne des Hohlrades desselben einfachen Planetengetriebes von 1 zu 1,618 nur mit entsprechend hohen Zahnzahlen von Sonnenrad und Hohlrad des einfachen Planetengetriebes erfolgen kann, ist bei der Konstruktion ein Verhältnis der Zahnzahlen von Sonnenrad und Hohlrad anzustreben, welches diesem Verhältnis bei möglichst niedrigen Zahnzahlen nahekommt. Dabei werden bei zunehmender Abweichung vom Verhältnis der Anzahl der Zähne des Sonnenrades eines einfachen Planetengetriebes zur Anzahl der Zähne des Hohlrades desselben einfachen Planetengetriebes von 1 zu 1,618 einzelne Stufensprünge zwischen den Gängen größer, andere wiederum kleiner als 1,618. Demnach wird vorgeschlagen, ein Verhältnis der Anzahl der Zähne des Sonnenrades eines einfachen Planetengetriebes zur Anzahl der Zähne des Hohlrades desselben einfachen Planetengetriebes zwischen 1 zu 1,46 und 1 zu 1,77 zu wählen, um möglichst gleichmäßige Stufensprünge zwischen den Gängen zu erreichen.

Die Anzahl möglicher schaltbarer Gänge für verschiedene beispielhafte Ausführungen der Erfindung sind in Spalte 5 der Tabelle 1 aufgeführt. Die Angabe zur Anzahl der schaltbaren Gänge und die Angabe der Spreizung der verschiedenen beispielhaften Ausführungen des mehrgängigen Planetengetriebes der erfindungsgemäßen Antriebseinheit, dargestellt in Spalte 6 der Tabelle 1, sind hierbei auf einen Aufbau aus einfachen Planetengetrieben bezogen, bei denen das Verhältnis der Anzahl der Zähne des Sonnenrades eines einfachen Planetengetriebes zur Anzahl der Zähne des Hohlrades desselben einfachen Planetengetriebes im ersten und in allen weiteren einfachen Planetengetrieben mit näherungsweise 1 zu 1,618 bestimmt ist. Bei Ausführungen mit einem mehrgängigen Planetengetriebe bestehend aus zwei oder mehr einfachen Planetengetrieben ist die Verschaltung wie in Fig. 8 bis 14 und Fig. 16 bis 17 dargestellt.

Weiterhin ist es bei Ausführungen der erfindungsgemäßen Antriebseinheit mit einem mehrgängigen Planetengetriebe, bestehend aus mehr als einem einfachen Planetengetriebe, insbesondere hier bei Ausführungen mit zwei einfachen Planetengetrieben, bei welchen das Verhältnis der Anzahl der Zähne von Sonnenrad 7.1 zur Anzahl der Zähne von Hohlrad 10.1 im ersten Planetengetriebe 6.1 und das Verhältnis der Anzahl der Zähne von Sonnenrad 7.2 zur Anzahl der Zähne von Hohlrad 10.2 im zweiten Planetengetriebe 6.2 mit vorzugsweise 1 zu 1,618, bei einer Abweichung im Bereich von 1 zu 1,46 bis 1 zu 1,77 bestimmt ist, besonders vorteilhaft, um die installierte elektrische Gesamtnennleistung der erfindungsgemäßen Antriebseinheit vollumfänglich zu nutzen, dass die Verteilung der elektrischen Leistung in der elektrischen Maschine der erfindungsgemäßen Antriebseinheit bei einer Ausführung mit zumindest zwei verschiebbaren Statorsegmenten des Stators und einer weiteren elektrischen Maschine in einem bestimmten Teilungsverhältnis, dargestellt in Tabelle 2, erfolgt.

**Tabelle 2**

| | Statorsegment 4.2 mit | Statorsegment 4.1 mit | weitere |
|---|---|---|---|
| | Rotorsegment 3.1, | Rotorsegment 3.1, | elektrische |
| | Rotorsegment 3.2 oder | Rotorsegment 3.2 oder | Maschine 16 |
| | Rotorsegment 3.3 | Rotorsegment 3.3 | |
| berechneter Anteil an der elektrischen Gesamtnennleistung | 61,8% | 23,6% | 14,6% |

Es sind dabei einem Statorsegment 4.2 des Stators näherungsweise 61,8 Prozent, dem anderen Statorsegment 4.1 näherungsweise 23,6 Prozent und der weiteren elektrischen Maschine 16 näherungsweise 14,6 Prozent von 100 Prozent der elektrischen Gesamtnennleistung der erfindungsgemäßen Antriebseinheit zuzuordnen. Technisch ist ein solches exaktes Teilungsverhältnis nicht oder nur mit unverhältnismäßigem Aufwand zu erreichen, so dass eine größtmögliche Annäherung an dieses Teilungsverhältnis angestrebt wird. Dieses wird erreicht, indem sich das Verhältnis der Anzahl der elektrischen Spulen 22 von Statorsegment 4.1 zur Anzahl der elektrischen Spulen 22 von Statorsegment 4.2 am prozentualen Anteil des jeweiligen Statorsegments an der elektrischen Gesamtnennleistung der erfindungsgemäßen Antriebseinheit orientiert, was einem Verhältnis der Anzahl der elektrischen Spulen 22 von Statorsegment 4.1 zur Anzahl der elektrischen Spulen 22 des Statorsegments 4.2 von 1 zu 2,5 entspricht, wobei es damit nächstmöglich zum angestrebten idealen Verhältnis von 1 zu 2,618 liegt.

Wenn hohe Drehzahlen von Rotorsegment 3.1, Rotorsegment 3.2 und Rotorsegment 3.3 des Rotors angestrebt werden, so ist es vorteilhaft, eine möglichst geringe Anzahl an elektrischen Spulen 22 auf Statorsegment 4.1 und Statorsegment 4.2 des Stators zu verteilen, wobei es möglichst eine geringe Abweichung vom Verhältnis der Anzahl der elektrischen Spulen 22 von Statorsegment 4.1 zur Anzahl der elektrischen Spulen 22 des Statorsegments 4.2 von 1 zu 2,618 geben soll. Um dreiphasige Drehfelder sicherzustellen, muss zudem die Anzahl der elektrische Spulen 22 jedes Statorsegmentes des Stators durch drei teilbar sein. Vorteilhaft in Bezug auf die maximale Ausnutzung der bereitgestellten elektrischen Gesamtnennleistung der erfindungsgemäßen Antriebseinheit ist hierbei ein Verhältnis der Anzahl der elektrischen Spulen 22 von sechs elektrischen Spulen 22 am Statorsegment 4.1 des Stators zu fünfzehn elektrischen Spulen 22 am Statorsegment 4.2 des Stators. Der Quotient der Anzahl der elektrischen Spulen 22 von Statorsegment 4.2 und der Anzahl der elektrischen Spulen 22 von Statorsegment 4.1 beträgt 2,5 und liegt somit nächstmöglich dem angestrebten Wert von 2,618.

Sofern die erfindungsgemäße Antriebseinheit für den Betrieb eines Kraftfahrzeugs genutzt werden soll, ist es wirtschaftlich vorteilhaft, im Aufbau der erfindungsgemäßen Antriebseinheit ausschließlich Rücklaufsperren einzusetzen, um den Konstruktionsaufwand zu senken. Jedoch ist in diesem Falle die Rekuperation nur in einem Gang möglich. Es kann, sofern im Anwendungsfall benötigt, auch vorteilhaft sein, eine oder weitere Rücklaufsperren der erfindungsgemäßen Antriebseinheit durch Bremsen zu ersetzen. Obwohl dies den Aufwand der Konstruktion erhöht und es zu Schleppverlusten im Bereich der Bremsen kommt, erhöht sich der Grad der Rekuperation.

Sofern eine Umkehr des Drehsinns an der Abtriebswelle benötigt wird, was zum Beispiel bei Kraftfahrzeugen mit Rückwärtsgang der Fall ist, kann diese Funktionalität mit der erfindungsgemäßen Antriebseinheit bereitgestellt werden, indem zum Beispiel durch ein elektronisches Steuergerät der Drehsinn der elektrischen Maschine umgekehrt wird. Hierbei ist es erforderlich, je nach gewünschtem Übersetzungsverhältnis im Rückwärtsgang die Rücklaufsperren in Bezug auf die Sperrrichtung umschaltbar auszubilden. Um den konstruktiven Aufwand zu verringern und wenn nur bestimmte Übersetzungsverhältnisse im Rückwärtsgang benötigt werden, kann der konstruktionsbedingte Aufwand dadurch besonders vorteilhaft verringert werden, dass einzelne Rücklaufsperren nicht umschaltbar, sondern abschaltbar ausgebildet werden.

Wenn höhere Drehmomente der erfindungsgemäßen Antriebseinheit bei gleicher elektrischer Gesamtnennleistung der erfindungsgemäßen Antriebseinheit benötigt werden, kann die erfindungsgemäße Antriebseinheit mit weiteren einfachen Planetengetrieben oder anderen Getrieben nach Stand der Technik erweitert werden.

Um die Hohlräder der einfachen Planetengetriebe der erfindungsgemäßen Antriebseinheit zu lagern und gleichzeitig die notwendige Schmiermittelmenge während des Betreibens des mehrgängigen Planetengetriebes gering zu halten, ist es besonders vorteilhaft, die einzelnen einfachen Planetengetriebe innerhalb des Gehäuses der erfindungsgemäßen Antriebseinheit in Planetengetriebegehäusen schmiermitteldicht zu kapseln.

Beim Einsatz der erfindungsgemäßen Antriebseinheit zum Beispiel in Kraftfahrzeugen ist es auch vorteilhaft, die für den Betrieb der erfindungsgemäßen Antriebseinheit benötigte elektrische Energie durch einen von einem Verbrennungsmotor angetriebenen Generator zu erzeugen und/oder falls benötigt in einem temporären Energiespeicher zwischenzuspeichern und dann zum Antrieb der erfindungsgemäßen Antriebseinheit zu nutzen.

Die Einsatzfelder der erfindungsgemäßen Antriebseinheit in ihren verschiedenen Ausformungen sind vielfältig. So ist ein wirtschaftlicher Einsatz der erfindungsgemäßen Antriebseinheit in Kraftfahrzeugen, Luft- und Wasserfahrzeugen, aber auch in Werkzeugmaschinen oder auch Windkraftanlagen, hier jedoch in der Funktion eines Generators, möglich.

Bevorzugt ist, dass die zwei Statorsegmente des Stators das Statorsegment 4.1 und das Statorsegment 4.2 sind, die zwei Rotorsegmente des Rotors das Rotorsegment 3.1 und das Rotorsegment 3.2 sind und die Rücklaufsperren Rücklaufsperre 12.1 und Rücklaufsperre 12.2 sind.

Bevorzugt ist weiterhin, dass der Rotor zumindest drei Rotorsegmente besitzt und das mehrgängige Planetengetriebe aus zumindest zwei koaxial zur Hauptachse 2 angeordneten einfachen Planetengetrieben besteht, wobei das Sonnenrad 7.1, das Hohlrad 10.1 oder das Trägerrad 8.1, welches nicht drehfest mit dem Rotorsegment 3.1, mit dem Rotorsegment 3.2 oder mit dem Rotorsegment 3.3 verbunden ist, mit dem Sonnenrad 7.2, mit dem Hohlrad 10.2 oder mit dem Trägerrad 8.2 verbunden ist, welches weder mit dem Rotorsegment 3.1, mit dem Rotorsegment 3.2, mit dem Rotorsegment 3.3 noch mit der Abtriebswelle der erfindungsgemäßen Antriebseinheit verbunden ist, wobei am Planetengetriebe 6.1 zwei Rotorsegmente, nämlich das Rotorsegment 3.1 und das Rotorsegment 3.2, befestigt sind und am Planetengetriebe 6.2 ein Rotorsegment, nämlich das Rotorsegment 3.3, befestigt ist, und die Antriebseinheit zumindest eine Haltevorrichtung 15, die an zumindest einem Haltepunkt fest mit dem Gehäuse 1 verbunden ist, enthält, die so angeordnet ist, dass mit einer an ihr befestigten Rücklaufsperre 12.2 oder mit einer an ihr befestigten Bremse 13 zumindest das Rotorsegment, welches zwischen zwei benachbarten Rotorsegmenten angeordnet ist, blockierbar ist.

Diese Ausformung der erfindungsgemäßen Antriebseinheit führt zu einer Erhöhung der Anzahl der möglichen sinnvollen Gänge und zudem zu einer Erhöhung der Spreizung des mehrgängigen Planetengetriebes der erfindungsgemäßen Antriebseinheit im Vergleich zur Ausführung der erfindungsgemäßen Antriebseinheit mit einem mehrgängigen Planetengetriebe, welches aus nur einem einfachen Planetengetriebe besteht. Im Vergleich zum Stand der Technik bei vergleichbaren Antriebseinheiten wird eine Antriebseinheit zur Verfügung gestellt, welche eine kompaktere Bauweise hat.

Bevorzugt ist weiterhin, dass die Rotorsegmente das Rotorsegment 3.1, das Rotorsegment 3.2 und das Rotorsegment 3.3 sind und die einfachen Planetengetriebe das Planetengetriebe 6.1 und das Planetengetriebe 6.2 sind.

Bevorzugt ist weiterhin, dass durch eine weitere elektrische Maschine 16, nämlich einen Elektromotor, das Sonnenrad 7.1, das Hohlrad 10.1 oder das Trägerrad 8.1 des Planetengetriebes 6.1, welches drehfest mit dem Rotorsegment 3.1 verbunden ist, antreibbar ist.

Diese Ausformung der erfindungsgemäßen Antriebseinheit erhöht die Anzahl der möglichen sinnvollen Gänge und führt zudem zu einer Erhöhung der Spreizung des mehrgängigen Planetengetriebes der erfindungsgemäßen Antriebseinheit. Die Verwendung einer weiteren elektrischen Maschine 16 zum Antrieb eines Rotorsegments anstatt eines weiteren, dritten und verschiebbaren Statorsegments stellt eine Vereinfachung gegenüber einer Konstruktion mit drei verschiebbaren Statorsegmenten bei ähnlicher Funktionalität mit sechs sinnvollen Gängen dar und reduziert damit den Konstruktionsaufwand demgegenüber.

Bevorzugt ist weiterhin, dass das Verhältnis der Anzahl der Zähne von Sonnenrad 7.1 zur Anzahl der Zähne von Hohlrad 10.1 im Planetengetriebe 6.1 und das Verhältnis der Anzahl der Zähne von Sonnenrad 7.2 zur Anzahl der Zähne von Hohlrad 10.2 im Planetengetriebe 6.2 im Bereich zwischen 1 zu 1,46 und 1 zu 1,77, besonders bevorzugt bei 1 zu 1,618, liegt.

Das ist besonders vorteilhaft, da so im Gegensatz zu anderen möglichen Ausführungen der erfindungsgemäßen Antriebseinheit mit einem mehrgängigen Planetengetriebe eine höhere Anzahl schaltbarer Gänge mit gleichmäßigen Stufensprüngen in der Gangabstufung bereitgestellt wird.

Bevorzugt ist weiterhin, dass das Verhältnis der Anzahl der Zähne von Sonnenrad 7.1 zur Anzahl der Zähne von Hohlrad 10.1 im Planetengetriebe 6.1 und das Verhältnis der Anzahl der Zähne von Sonnenrad 7.2 zur Anzahl der Zähne von Hohlrad 10.2 im Planetengetriebe 6.2 im Bereich zwischen 1 zu 1,46 und 1 zu 1,77, besonders bevorzugt bei 1 zu 1,618, liegt und das Statorsegment 4.1 des Stators über sechs elektrische Spulen 22 verfügt und das Statorsegment 4.2 des Stators über fünfzehn elektrische Spulen 22 verfügt, wobei durch die Statorsegmente, nämlich Statorsegment 4.1 und Statorsegment 4.2, ausschließlich dreiphasige Drehfelder erzeugt werden können.

Das ist besonders vorteilhaft, da so im Gegensatz zu anderen möglichen Ausführungen der erfindungsgemäßen Antriebseinheit mit dem besonderen Verhältnis der Zähne von Sonnenrad zu Hohlrad von näherungsweise 1 zu 1,618 in allen einfachen Planetengetrieben die maximal mögliche Drehzahl der Rotorsegmente der elektrischen Maschine der erfindungsgemäßen Antriebseinheit und somit auch die maximal mögliche Drehzahl der Abtriebswelle der erfindungsgemäßen Antriebseinheit erhöht werden kann. Dabei stellt ein Verhältnis von sechs elektrischen Spulen 22 auf Statorsegment 4.1 zu fünfzehn elektrischen Spulen 22 auf Statorsegment 4.2, was einem Verhältnis von 1 zu 2,5 entspricht, im Zusammenhang mit den dreiphasigen Drehfeldern, welche die Statorsegmente zum Antrieb der Rotorsegmente der elektrischen Maschine der erfindungsgemäßen Antriebseinheit erzeugen, das Optimum dar. Das Verhältnis von 1 zu 2,5 kommt dabei bei möglichst geringer Anzahl von zu verwendenden elektrischen Spulen 22 dem angestrebten Verhältnis von 1 zu 2,618 am nächsten. Bei entsprechender Dimensionierung der weiteren elektrischen Maschine 16 wird es somit möglich, einem Statorsegment des Stators näherungsweise 61,8 Prozent, dem anderen Statorsegment näherungsweise 23,6 Prozent und der weiteren elektrischen Maschine 16 näherungsweise 14,6 Prozent der elektrischen Gesamtnennleistung der erfindungsgemäßen Antriebseinheit zuzuordnen.

Besonders bevorzugt ist weiterhin die Verwendung einer Antriebseinheit gemäß zumindest einem der Ansprüche 1 bis 7 für ein Kraftfahrzeug, Luft- oder Wasserfahrzeug, für Werkzeugmaschinen oder als Generator in einer Windkraftanlage.

Antriebseinheiten nach dem Stand der Technik werden zum Antreiben von Kraftfahrzeugen, Luft- und Wasserfahrzeugen genutzt, wobei die erfindungsgemäße Antriebseinheit einen wirtschaftlicheren Betrieb ermöglicht, da sie einen kompakteren Aufbau bei vergleichbarer Funktionalität bietet. Dies gilt auch für die Verwendung in Werkzeugmaschinen und den Einsatz als Generator in einer Windkraftanlage.

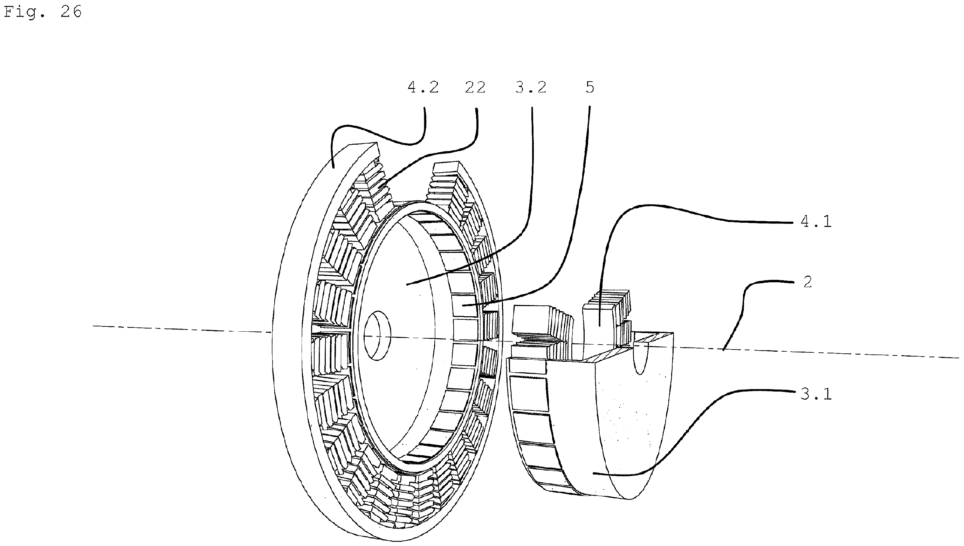

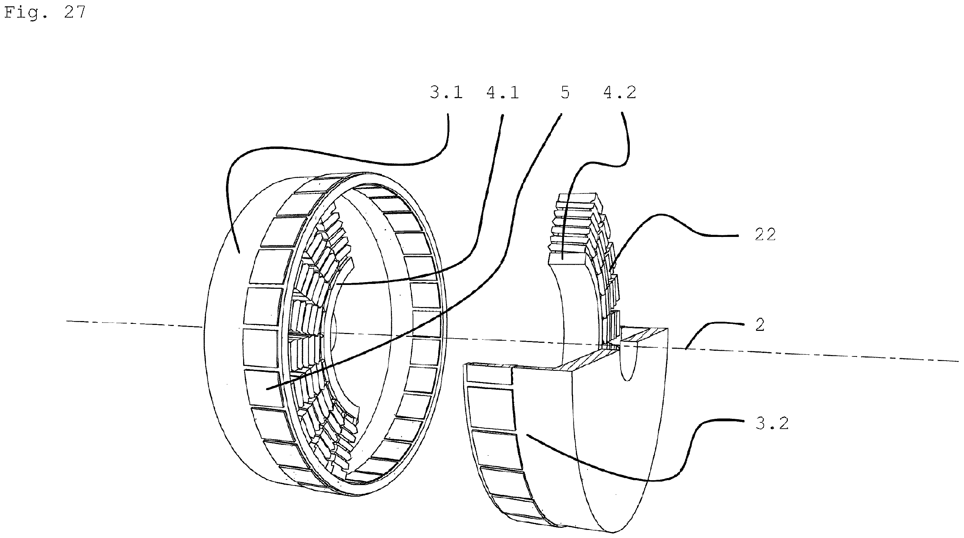

Vorteilhafte Ausgestaltungen der erfindungsgemäßen Antriebseinheit werden in den Unteransprüchen 2 bis 5 beschrieben. Die Merkmale der Ansprüche können in jeder technisch sinnvollen Art und Weise kombiniert werden, wobei hierzu weiterhin auch die nachfolgende Beschreibung als auch die Merkmale aus den Fig. 1 bis 27 sowie den Tabellen 1 bis 7 als Grundlage dienen können. In Unteranspruch 6 werden Verwendungsgebiete der erfindungsgemäßen Antriebseinheit benannt.

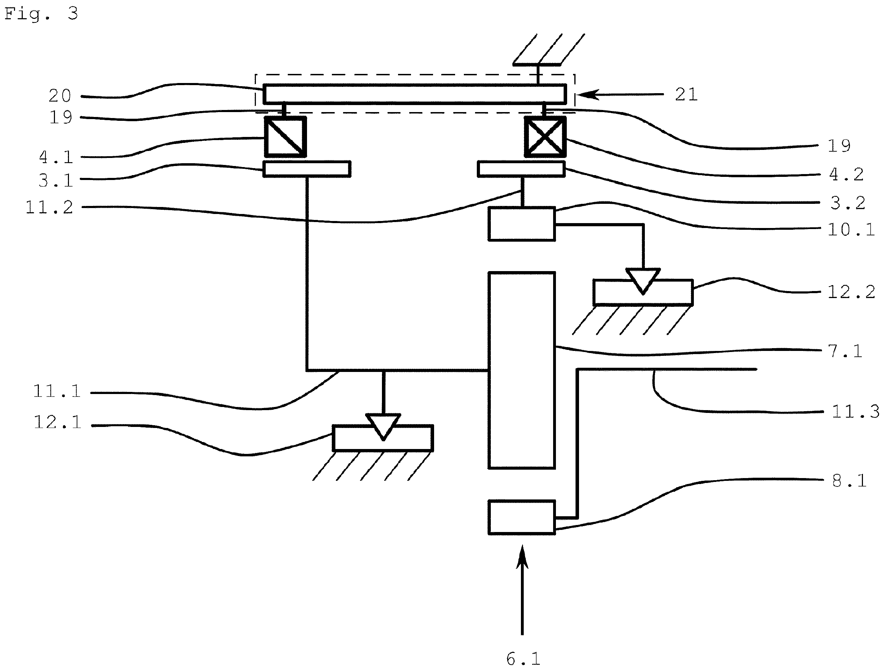

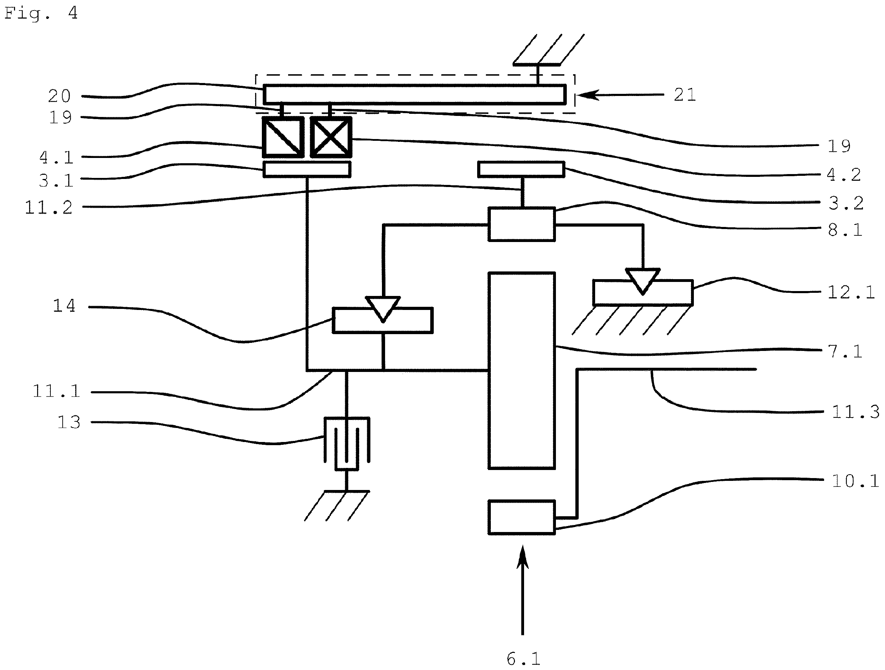

Die Erfindung wird nachfolgend anhand verschiedener Ausführungsbeispiele bezüglich Aufbau, Inbetriebnahme, Funktion und Gangwechsel vom niedrigsten bis zum höchsten Gang unter Bezugnahme auf die Fig. 1 bis 27 näher beschrieben, wobei
Fig. 1 bis 3
   Erstes Ausführungsbeispiel mit zwei verschiebbaren Statorsegmenten, nämlich Statorsegment 4.1 und Statorsegment 4.2, welche außerhalb des Radius der zwei Rotorsegmente, nämlich Rotorsegment 3.1 und Rotorsegment 3.2, angeordnet sind, zwei Rotorsegmenten, nämlich Rotorsegment 3.1 und Rotorsegment 3.2, einem einfachen Planetengetriebe 6.1 und zwei Rücklaufsperren, Rücklaufsperre 12.1 und Rücklaufsperre 12.2;
   Fig. 1 erstes Ausführungsbeispiel, erster Gang
   Fig. 2 erstes Ausführungsbeispiel, zweiter Gang
   Fig. 3 erstes Ausführungsbeispiel, dritter Gang
Fig. 4 bis 7
   Zweites Ausführungsbeispiel mit zwei verschiebbaren Statorsegmenten, nämlich Statorsegment 4.1 und Statorsegment 4.2, welche außerhalb des Radius der zwei Rotorsegmente, nämlich Rotorsegment 3.1 und Rotorsegment 3.2, angeordnet sind, zwei Rotorsegmenten, nämlich Rotorsegment 3.1 und Rotorsegment 3.2, einem einfachen Planetengetriebe 6.1 und einer Rücklaufsperre 12.1, einer Überholkupplung 14 und einer Bremse 13
   Fig. 4 zweites Ausführungsbeispiel, erster Gang

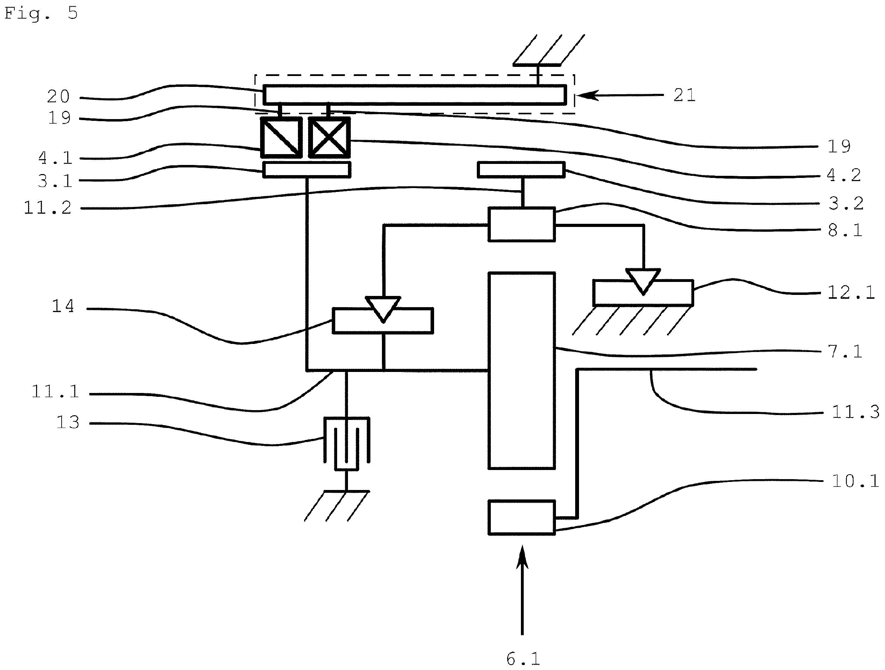

   Fig. 5 zweites Ausführungsbeispiel, zweiter Gang

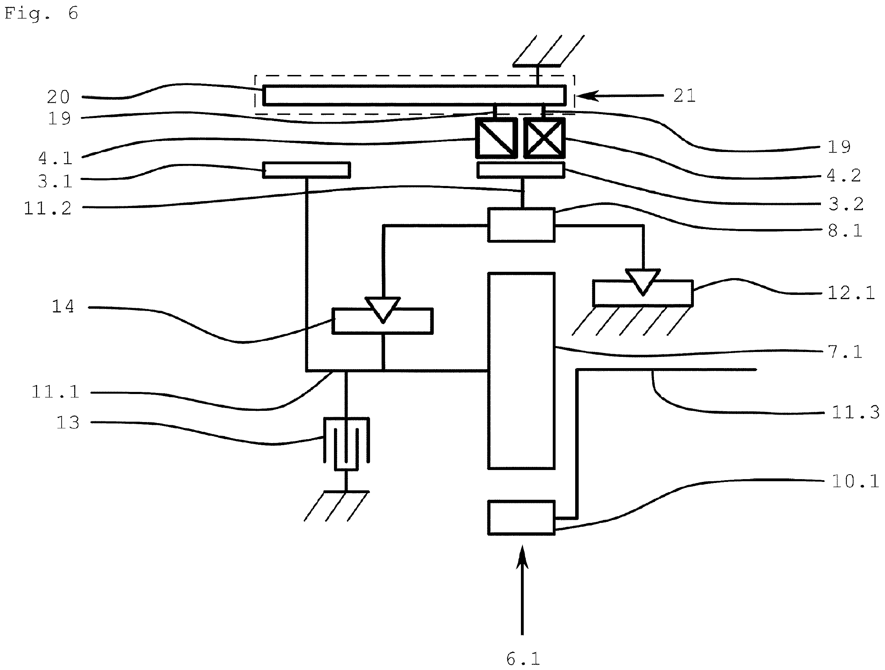

   Fig. 6 zweites Ausführungsbeispiel, dritter Gang

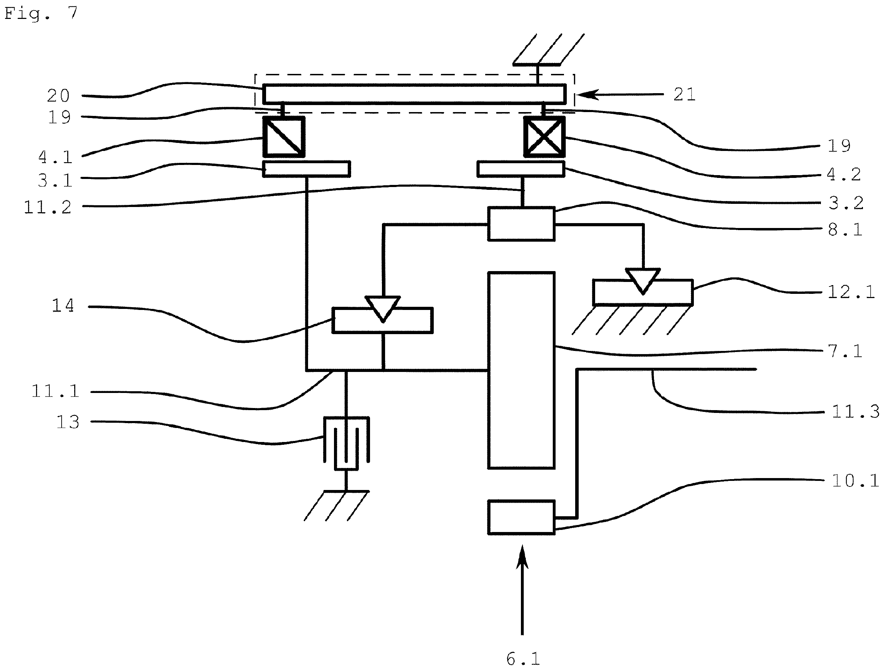

   Fig. 7 zweites Ausführungsbeispiel, vierter Gang
Fig. 8 bis 13
   Drittes Ausführungsbeispiel mit zwei verschiebbaren Statorsegmenten, nämlich Statorsegment 4.1 und Statorsegment 4.2, welche außerhalb des Radius der drei Rotorsegmente, nämlich Rotorsegment 3.1, Rotorsegment 3.2 und Rotorsegment 3.3, angeordnet sind, drei Rotorsegmenten, nämlich Rotorsegment 3.1, Rotorsegment 3.2 und Rotorsegment 3.3, zwei einfachen Planetengetrieben, nämlich Planetengetriebe 6.1 und Planetengetriebe 6.2, drei Rücklaufsperren, nämlich Rücklaufsperre 12.1, Rücklaufsperre 12.2 und Rücklaufsperre 12.3, und einer Haltevorrichtung 15, sowie einer weiteren elektrischen Maschine 16;
   Fig. 8 drittes Ausführungsbeispiel, erster Gang

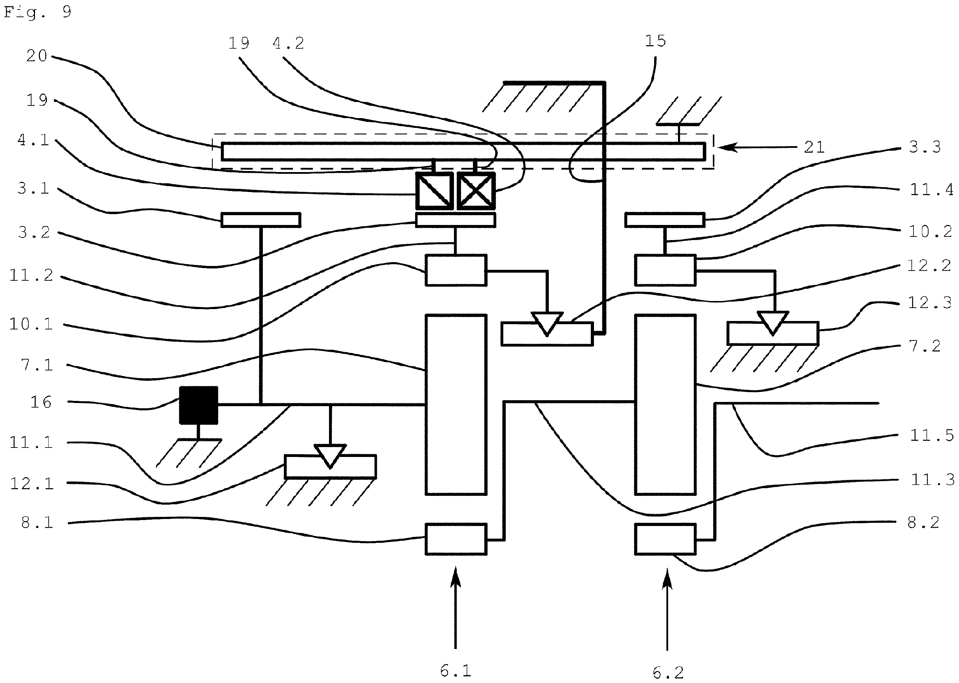

   Fig. 9 drittes Ausführungsbeispiel, zweiter Gang

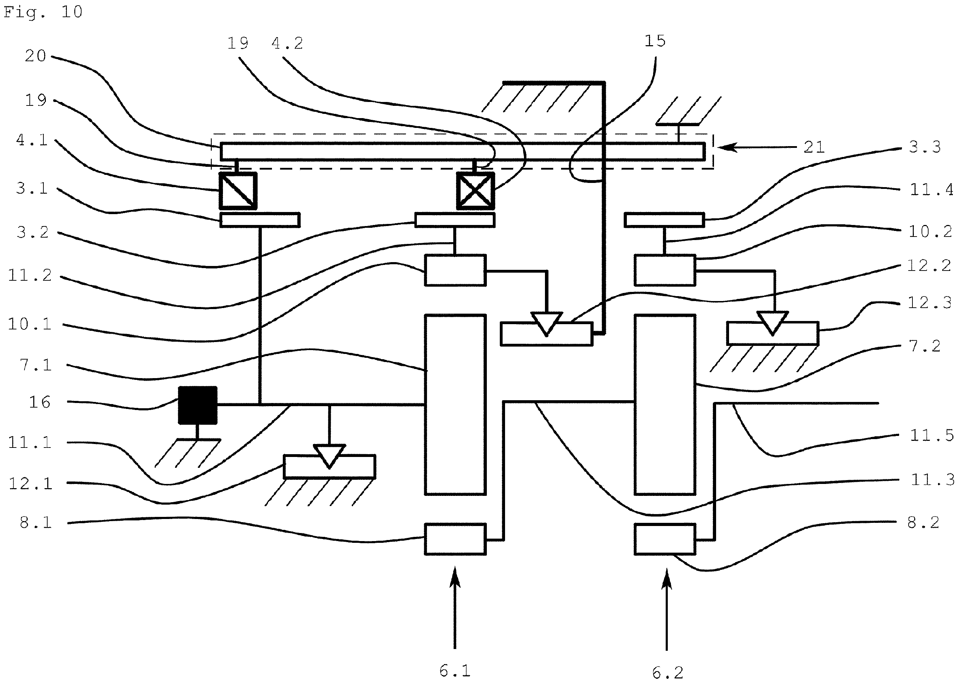

   Fig. 10drittes Ausführungsbeispiel, dritter Gang

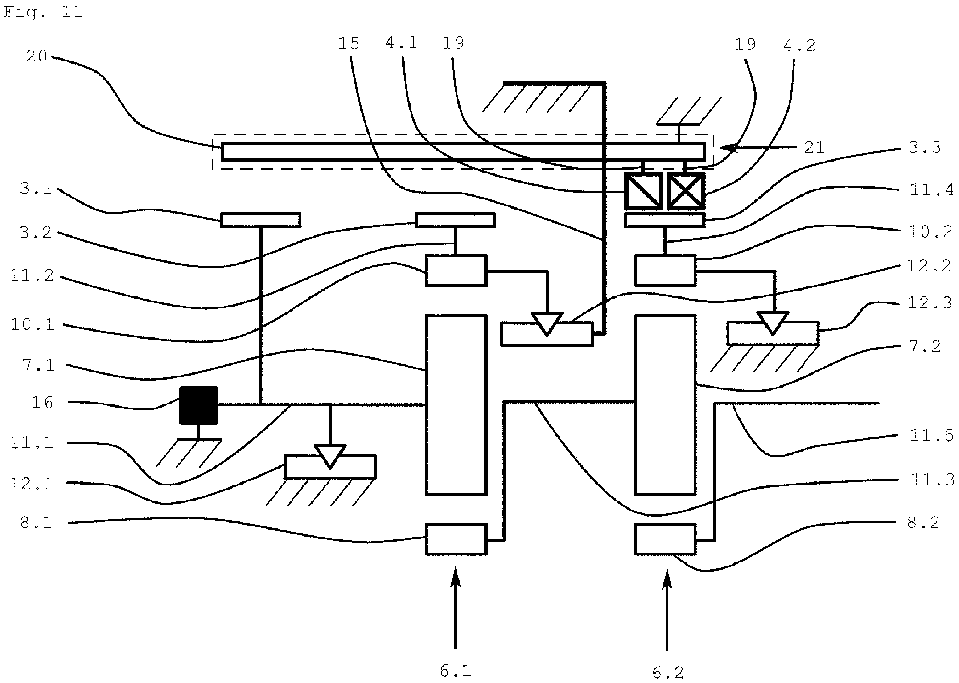

   Fig. 11drittes Ausführungsbeispiel, vierter Gang

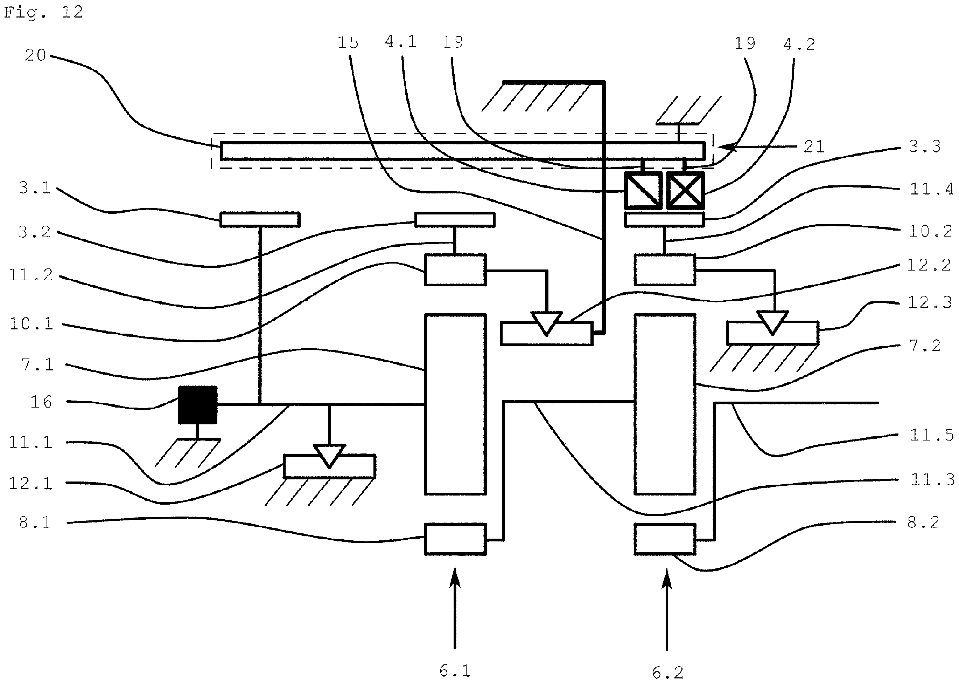

   Fig. 12drittes Ausführungsbeispiel, fünfter Gang

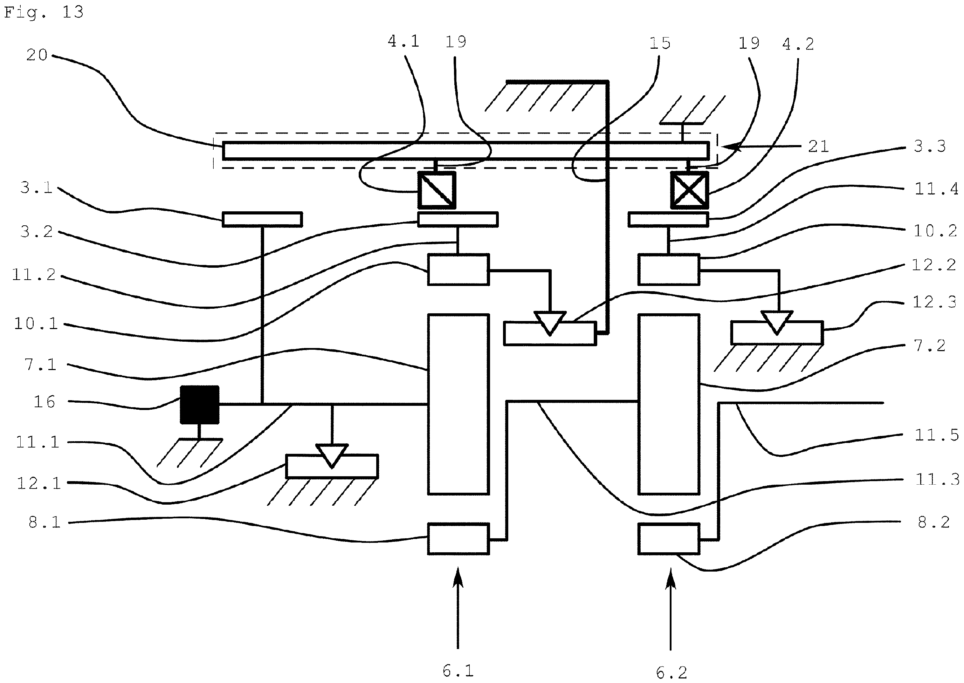

   Fig. 13drittes Ausführungsbeispiel, sechster Gang
Fig. 14
   Viertes Ausführungsbeispiel mit zwei verschiebbaren Statorsegmenten, nämlich Statorsegment 4.1 und Statorsegment 4.2, welche außerhalb des Radius der drei Rotorsegmente, nämlich Rotorsegment 3.1, Rotorsegment 3.2 und Rotorsegment 3.3, angeordnet sind, drei Rotorsegmenten, nämlich Rotorsegment 3.1, Rotorsegment 3.2 und Rotorsegment 3.3, zwei einfachen Planetengetrieben, nämlich Planetengetriebe 6.1 und Planetengetriebe 6.2, zwei Rücklaufsperren, nämlich Rücklaufsperre 12.1 und Rücklaufsperre 12.2, einer Bremse 13 und einer Haltevorrichtung 15, sowie einer weiteren elektrischen Maschine 16;

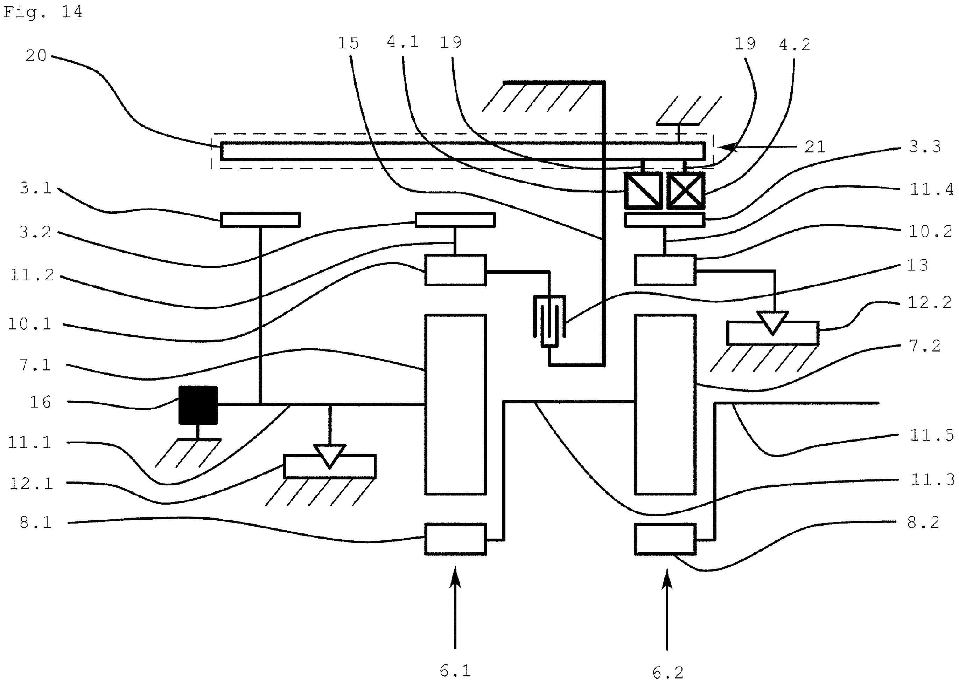

   Fig. 14viertes Ausführungsbeispiel, fünfter Gang
Fig. 15
   Perspektivische Darstellung der Verschiebevorrichtung 21 am ersten Ausführungsbeispiel gemäß Fig. 3, Darstellung ohne Rücklaufsperre 12.1
Fig. 16
   Drittes Ausführungsbeispiel im Schaltzustand des sechsten Gangs in einer schematisierten Schnittdarstellung, Darstellung ohne Führung 20 und mit nur zwei Gewindespindeln 17 und nur zwei Servomotoren 18 und nur zwei Befestigungen 19
Fig. 17
   Drittes Ausführungsbeispiel mit perspektivischer Darstellung der Haltevorrichtung 15 im mehrgängigen Planetengetriebe der erfindungsgemäßen Antriebseinheit, Darstellung ohne Rücklaufsperre 12.1 und Rücklaufsperre 12.3 und ohne Gehäuse 1
Fig. 18
   Drittes und viertes Ausführungsbeispiel mit Darstellung der Lage der Haltevorrichtung 15 zwischen dem Statorsegment 4.1 und Statorsegment 4.2 der erfindungsgemäßen Antriebseinheit
Fig. 19
   Drittes und viertes Ausführungsbeispiel, schematische Darstellung von Statorsegment 4.1 und Statorsegment 4.2 mit Darstellung der Verteilung der elektrischen Spulen 22 auf Statorsegment 4.1 und Statorsegment 4.2 der erfindungsgemäßen Antriebseinheit
Fig. 20 bis 22
   Fünftes Ausführungsbeispiel mit zwei verschiebbaren Statorsegmenten, nämlich Statorsegment 4.1 und Statorsegment 4.2, wobei Statorsegment 4.1 innerhalb und Statorsegment 4.2 außerhalb des Radius von Rotorsegment 3.1 und Rotorsegment 3.2 angeordnet ist, zwei Rotorsegmenten, nämlich Rotorsegment 3.1 und Rotorsegment 3.2, einem einfachen Planetengetriebe 6.1 und zwei Rücklaufsperren, nämlich Rücklaufsperre 12.1 und Rücklaufsperre 12.2;

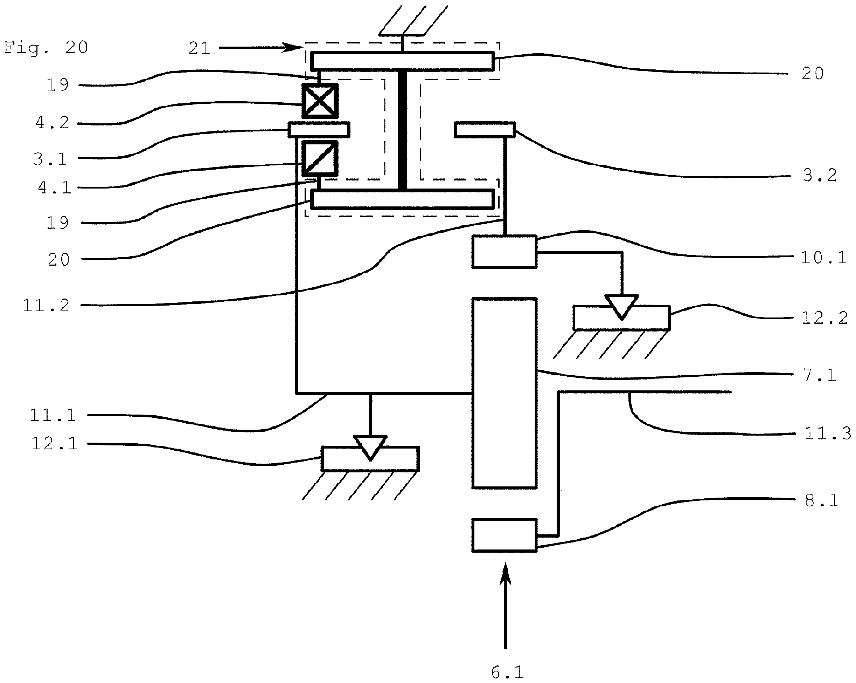

   Fig. 20fünftes Ausführungsbeispiel, erster Gang

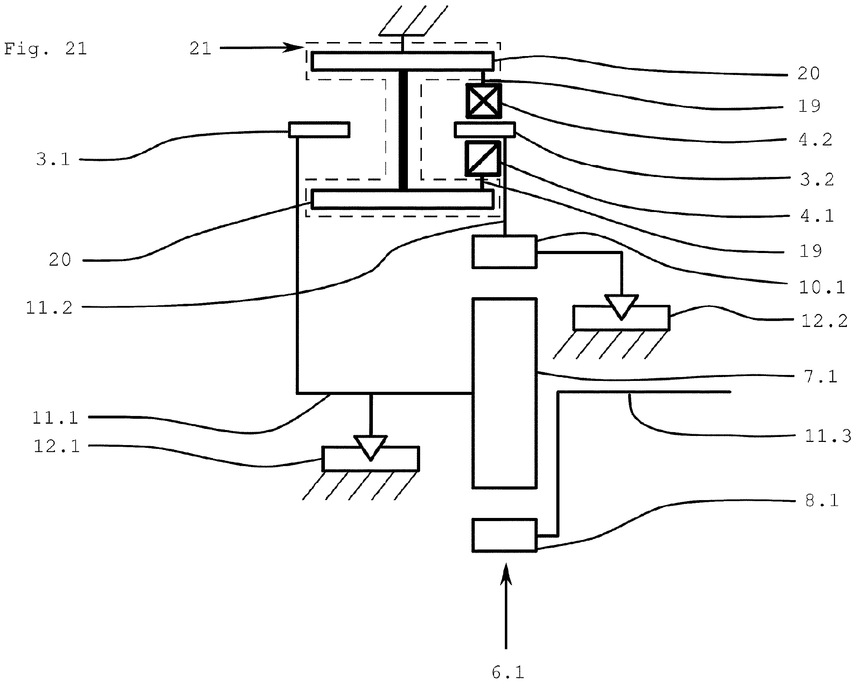

   Fig. 21fünftes Ausführungsbeispiel, zweiter Gang

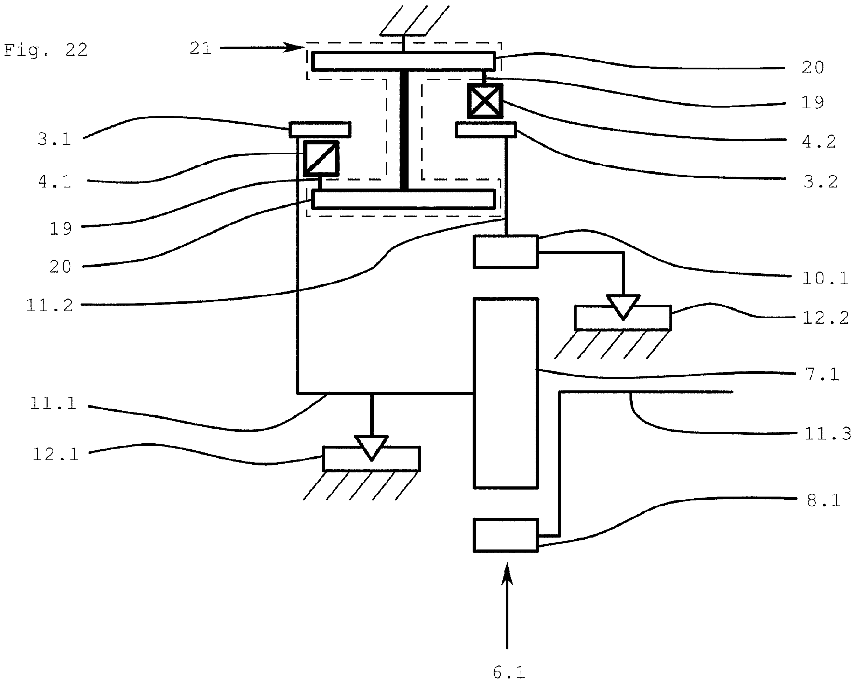

   Fig. 22fünftes Ausführungsbeispiel, dritter Gang
Fig. 23 bis 25
   Sechstes Ausführungsbeispiel mit zwei verschiebbaren Statorsegmenten, nämlich Statorsegment 4.1 und Statorsegment 4.2, welche innerhalb des Radius von Rotorsegment 3.1 und Rotorsegment 3.2 angeordnet sind, zwei Rotorsegmenten, nämlich Rotorsegment 3.1 und Rotorsegment 3.2, einem einfachen Planetengetriebe 6.1 und zwei Rücklaufsperren, nämlich Rücklaufsperre 12.1 und Rücklaufsperre 12.2;

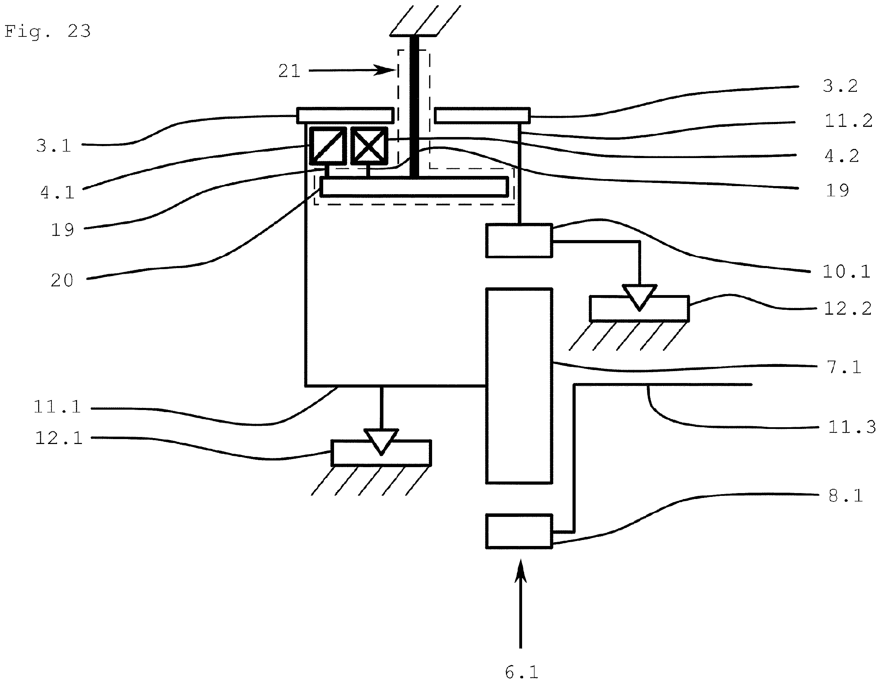

   Fig. 23sechstes Ausführungsbeispiel, erster Gang

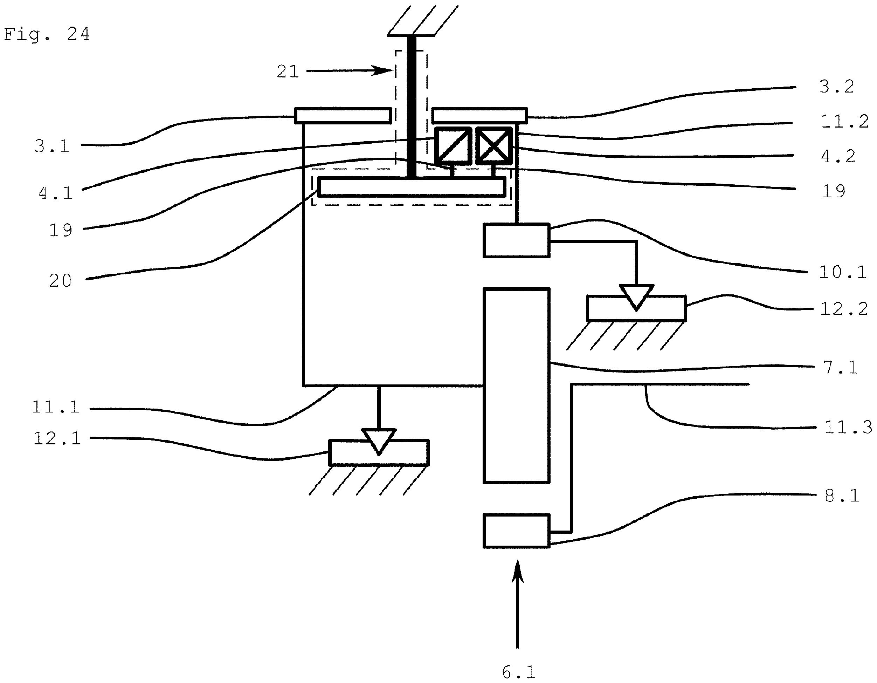

   Fig. 24sechstes Ausführungsbeispiel, zweiter Gang

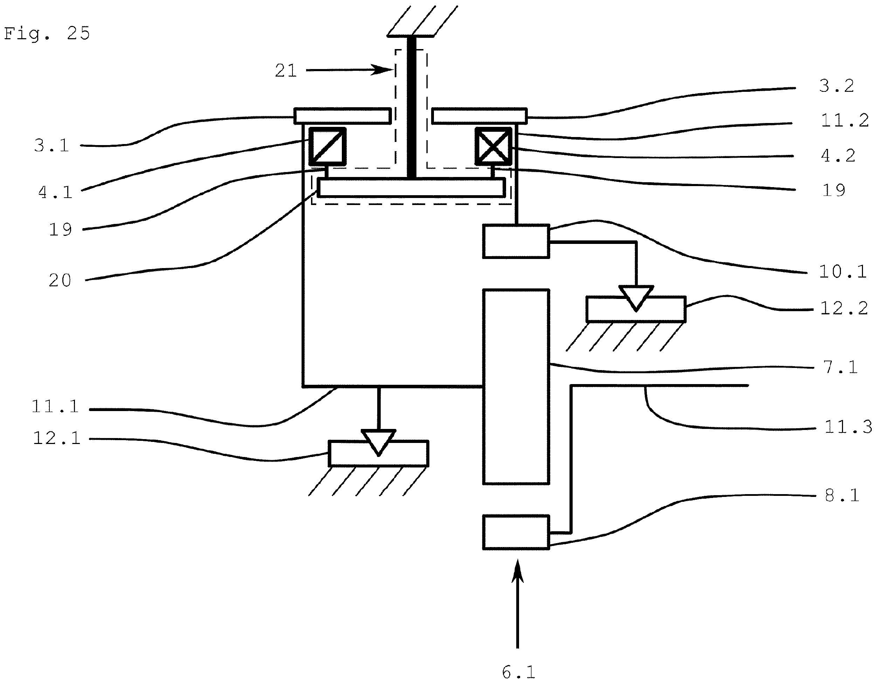

   Fig. 25sechstes Ausführungsbeispiel, dritter Gang
Fig. 26
   Fünftes Ausführungsbeispiel im Schaltzustand des dritten Gangs, Darstellung von Rotorsegment 3.1 und Rotorsegment 3.2, der verschiebbaren Statorsegmente, nämlich Statorsegment 4.1 und Statorsegment 4.2, wobei Statorsegment 4.1 innerhalb und Statorsegment 4.2 außerhalb des Radius von Rotorsegment 3.1 und Rotorsegment 3.2 angeordnet ist, sowie der elektrischen Spulen 22 und der Permanentmagnete 5, Rotorsegment 3.1 angeschnitten
Fig. 27
   Sechstes Ausführungsbeispiel im Schaltzustand des dritten Gangs, Darstellung von Rotorsegment 3.1 und Rotorsegment 3.2, der zwei verschiebbaren Statorsegmente, nämlich Statorsegment 4.1 und Statorsegment 4.2, die innerhalb des Radius von Rotorsegment 3.1 und Rotorsegment 3.2 angeordnet sind, sowie der elektrischen Spulen 22 und der Permanentmagnete 5; Rotorsegment 3.2 angeschnitten

Ein erstes Ausführungsbeispiel der erfindungsgemäßen Antriebseinheit mit drei Gängen wird im Folgenden anhand der Fig. 1 bis 3 und Fig. 15 erläutert und dargestellt und besteht aus einem Gehäuse 1, einer elektrischen Maschine und einem mehrgängigen Planetengetriebe, bestehend aus einem einfachen Planetengetriebe 6.1, wobei dieses über Rotorsegment 3.1 und Rotorsegment 3.2 von der elektrischen Maschine angetrieben wird.

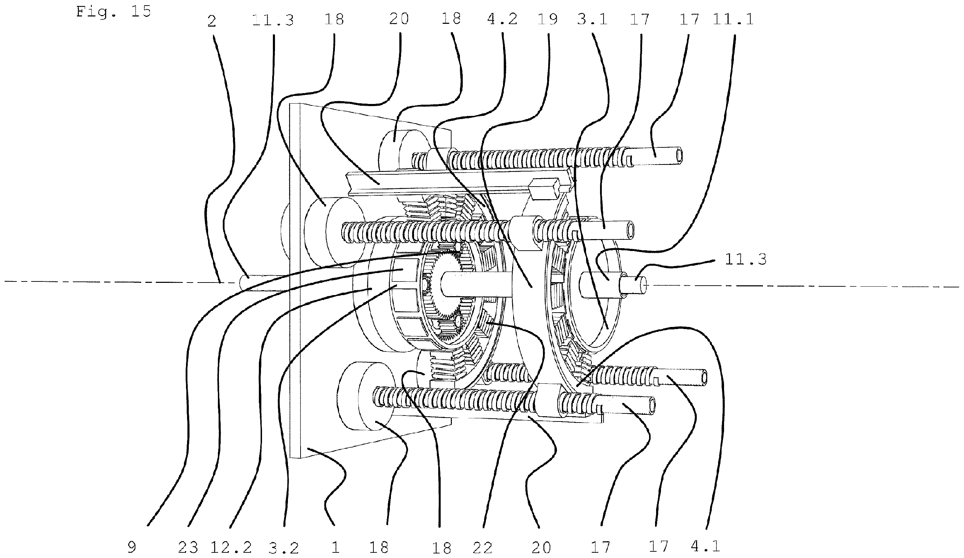

Die elektrische Maschine besteht aus einem Stator, welcher aus Statorsegment 4.1 und Statorsegment 4.2 besteht, und weiterhin aus einem Rotor, welcher aus Rotorsegment 3.1 und Rotorsegment 3.2 besteht. Statorsegment 4.1 und Statorsegment 4.2 der elektrischen Maschine sind außerhalb des Radius von Rotorsegment 3.1 und Rotorsegment 3.2 der elektrischen Maschine angeordnet. Auf Statorsegment 4.1 und Statorsegment 4.2 sind elektrische Spulen 22 und auf Rotorsegment 3.1 und Rotorsegment 3.2 sind Permanentmagnete 5 angeordnet. Weiterhin besteht die elektrische Maschine aus einer Verschiebevorrichtung 21. Die Verschiebevorrichtung 21 ist aus vier Gewindespindeln 17 mit elektrischem Servomotor 18, Führungen 20, und Befestigungen 19 aufgebaut und in Fig. 15 dargestellt.

Das mehrgängige Planetengetriebe besteht aus einem einfachen Planetengetriebe 6.1 in einem Planetengetriebegehäuse. Das einfache Planetengetriebe 6.1 besteht aus Sonnenrad 7.1, Hohlrad 10.1 und Trägerrad 8.1 mit Planetenrädern 9. Weiterhin besteht das mehrgängige Planetengetriebe aus der Welle 11.1, der Welle 11.2 und der Welle 11.3 sowie aus Rücklaufsperre 12.1 und Rücklaufsperre 12.2.

Die Welle 11.1, die als Hohlwelle ausgebildet ist, ist drehbar auf der Welle 11.3 gelagert und verbindet Rotorsegment 3.1 des Rotors mit dem Sonnenrad 7.1. Die Welle 11.1 ist zugleich mit der Rücklaufsperre 12.1 verbunden. Die Rücklaufsperre 12.1 verfügt weiterhin über eine feste Verbindung mit dem Gehäuse 1.

Die Welle 11.2 in Ausbildung eines Planetengetriebegehäuses ist einerseits drehbar auf der Welle 11.1 und andererseits drehbar auf der Welle 11.3 gelagert. Weiterhin sind an Welle 11.2 das Hohlrad 10.1 und das Rotorsegment 3.2 des Rotors befestigt. Die Welle 11.2 ist zugleich mit der Rücklaufsperre 12.2 verbunden. Die Rücklaufsperre 12.2 verfügt weiterhin über eine feste Verbindung mit dem Gehäuse 1.

Die Welle 11.3 ist im Ausführungsbeispiel die Abtriebswelle der erfindungsgemäßen Antriebseinheit. Sie ist auf der Hauptachse 2 angeordnet und drehbar im Gehäuse 1 gelagert. Die Welle 11.3 ist fest mit dem Trägerrad 8.1 verbunden.

Das einfache Planetengetriebe 6.1 des mehrgängigen Planetengetriebes wird bei dieser Ausführung der Antriebseinheit über Rotorsegment 3.1 und Rotorsegment 3.2 angetrieben. Das Rotorsegment 3.1 ist in diesem Ausführungsbeispiel fest über Welle 11.1 mit dem Sonnenrad 7.1 verbunden. Das Rotorsegment 3.2 ist in diesem Ausführungsbeispiel fest über Welle 11.2 mit dem Hohlrad 10.1 verbunden.

Die Richtung des Drehsinns des Antriebs von Rotorsegment 3.1 und Rotorsegment 3.2 entspricht der Richtung des Drehsinns des Antriebs der Welle 11.3, welche die Abtriebswelle der erfindungsgemäßen Antriebseinheit ist. Die Rücklaufsperre 12.1 und die Rücklaufsperre 12.2 verhindern, dass sich Rotorsegment 3.1 und Rotorsegment 3.2 und alle mit ihnen fest verbundenen Bestandteile des einfachen Planetengetriebes 6.1 entgegen der Richtung des Drehsinns des Antriebs der Welle 11.3 drehen können.

Statorsegment 4.1 und Statorsegment 4.2 des Stators sind jeweils an einer Befestigung 19 der Verschiebevorrichtung 21 befestigt. Jede Befestigung 19 ist parallel zur Hauptachse 2 verschiebbar in einer Führung 20 gelagert, welche fest mit dem Gehäuse 1 verbunden ist. Jede Befestigung 19 weist zwei Innengewinde auf, durch welche jeweils eine Gewindespindel 17, welche parallel zur Hauptachse 2 angeordnet ist, läuft. Die jeweilige Gewindespindel 17 ist einerseits drehbar im Gehäuse 1 gelagert und andererseits fest mit einem Servomotor 18 verbunden, welcher wiederum fest mit dem Gehäuse 1 verbunden ist. Die Steuerung des jeweiligen Servomotors 18 erfolgt durch elektronische Steuergeräte. Je nach benötigter Bewegungsrichtung von Statorsegment 4.1 und Statorsegment 4.2 wird diese durch Links- oder Rechtslauf der jeweils zugeordneten Servomotoren 18 sichergestellt.

Die Funktionsweise der erfindungsgemäßen Antriebseinheit im ersten Ausführungsbeispiel wird im Folgenden anhand ihrer verschiedenen Schaltzustände und deren Übergängen erläutert. Dabei erfolgt die Beschreibung der Abfolge der Schaltzustände vom ersten Gang mit dem höchsten Drehmoment an der Abtriebswelle in Bezug auf die Leistung der elektrischen Maschine bis zum dritten Gang mit dem geringsten Drehmoment an der Abtriebswelle in Bezug auf die Leistung der elektrischen Maschine.

Im ersten Gang sind Statorsegment 4.1 und Statorsegment 4.2 so positioniert, dass sie das Rotorsegment 3.1 antreiben, sobald durch elektronische Steuergeräte der elektrische Energiefluss von einer elektrischen Energiequelle zu Statorsegment 4.1 und Statorsegment 4.2 geschaltet wird. Diese versetzen bei Zuschaltung des elektrischen Energieflusses das Rotorsegment 3.1 nunmehr in eine Drehbewegung. Dies erfolgt bis zu der Drehzahl, die maximal durch die elektrische Maschine erreicht werden kann. Das Rotorsegment 3.1 treibt über die Welle 11.1 das Sonnenrad 7.1 an. Die an der Welle 11.1 angeordnete Rücklaufsperre 12.1 befindet sich im Freilauf. Ein Rücklauf des Hohlrades 10.1 entgegen der Richtung des Drehsinns des Antriebs der Welle 11.3 wird durch die Rücklaufsperre 12.2 verhindert.

Somit treibt das Sonnenrad 7.1 in diesem Schaltzustand über die Planetenräder 9 das Trägerrad 8.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit stellt an der Welle 11.3 das maximale Drehmoment in Bezug auf die Leistung der elektrischen Maschine im ersten Gang bereit. Dieser Schaltzustand ist in Fig. 1 dargestellt.

Der Wechsel vom ersten Gang in den zweiten Gang erfolgt durch Neupositionierung von Statorsegment 4.1 und Statorsegment 4.2 mit der Verschiebevorrichtung 21 so, dass sie das Rotorsegment 3.2 antreiben können, sobald durch elektronische Steuergeräte der elektrische Energiefluss von einer elektrischen Energiequelle zu Statorsegment 4.1 und Statorsegment 4.2 geschaltet wird.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen.

Im zweiten Gang wird durch elektronische Steuergeräte der elektrische Energiefluss von einer elektrischen Energiequelle zu Statorsegment 4.1 und Statorsegment 4.2 geschaltet. Diese versetzen das Rotorsegment 3.2 nunmehr in eine Drehbewegung.

Das Rotorsegment 3.2 treibt das Hohlrad 10.1 an. Die Rücklaufsperre 12.2 befindet sich im Freilauf. Die Drehzahl des Hohlrades 10.1 erhöht sich. Das führt dazu, dass das Sonnenrad 7.1 negativ beschleunigt wird und zeitgleich eine Erhöhung der Drehzahl des Trägerrades 8.1, welches durch das Hohlrad 10.1 über die Planetenräder 9 angetrieben wird, zu verzeichnen ist. Da das Sonnenrad 7.1 nicht mehr durch das Rotorsegment 3.1 angetrieben wird, verringert sich die Drehzahl des Sonnenrades 7.1 bis zum Stillstand. Der Rücklauf des Sonnenrades 7.1 wird durch die Rücklaufsperre 12.1 verhindert. Die Drehzahl des Trägerrades 8.1 erhöht sich. Dies erfolgt bis zu der Drehzahl, die maximal durch die elektrische Maschine erreicht werden kann.

Das Trägerrad 8.1 treibt die Welle 11.3 an, welche im Ausführungsbeispiel die Abtriebswelle der erfindungsgemäßen Antriebseinheit ist.

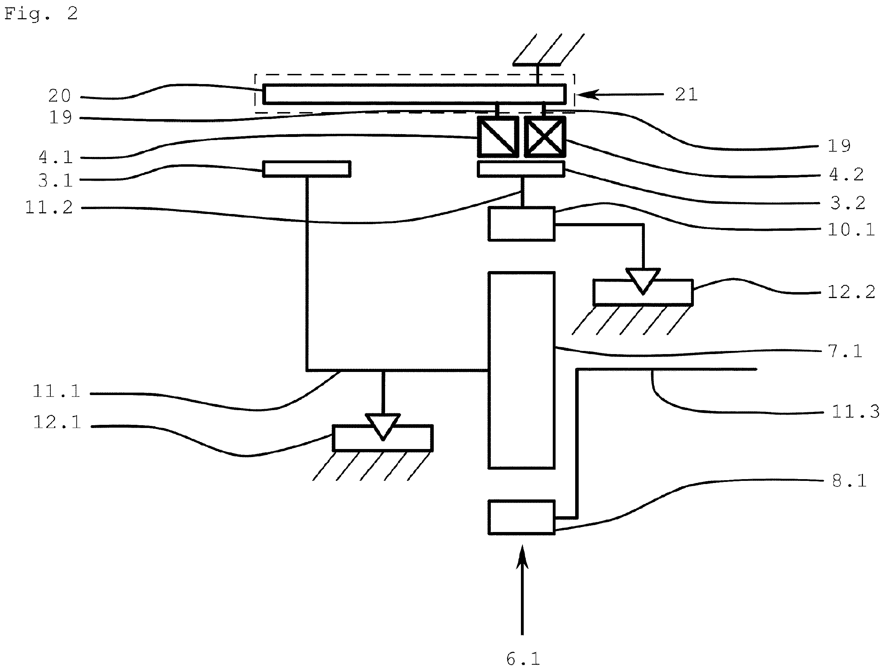

Dieser Schaltzustand der erfindungsgemäßen Antriebseinheit im zweiten Gang stellt an der Welle 11.3 ein geringeres Drehmoment in Bezug auf die Leistung der elektrischen Maschine, jedoch bei höherer Drehzahl an der Welle 11.3 als im ersten Gang, bereit. Dieser Schaltzustand ist in Fig. 2 dargestellt.

Der Wechsel vom zweiten Gang in den dritten Gang erfolgt durch Neupositionierung des Statorsegments 4.1 mit der Verschiebevorrichtung 21 so, dass es das Rotorsegment 3.1 antreiben kann, sobald durch elektronische Steuergeräte der elektrische Energiefluss von einer elektrischen Energiequelle zum Statorsegment 4.1 geschaltet wird.

Es ist erforderlich, während der Neupositionierung des Statorsegments 4.1 den elektrischen Energiefluss zum Statorsegment 4.1 durch elektronische Steuergeräte zu unterbrechen.

Das Statorsegment 4.2 treibt über das Rotorsegment 3.2 weiterhin das mehrgängige Planetengetriebe an.

Im dritten Gang wird durch elektronische Steuergeräte der elektrische Energiefluss von einer elektrischen Energiequelle zum Statorsegment 4.1 geschaltet. Dieses versetzt das Rotorsegment 3.1 nunmehr in eine Drehbewegung.

Die Drehzahl des Rotorsegments 3.1 erhöht sich. Zeitgleich wird die Zufuhr der elektrischen Leistung zum Statorsegment 4.2 durch elektronische Steuergeräte abgesenkt, damit auch die Drehzahl von Rotorsegment 3.2 abgesenkt, bis die Drehzahlen von Rotorsegment 3.1 und Rotorsegment 3.2 annähernd synchron sind. Nachdem die Synchronisierung der Drehzahlen von Rotorsegment 3.1 und Rotorsegment 3.2 erfolgt ist, wird ihre Drehzahl bis zu der Drehzahl erhöht, die maximal durch die elektrische Maschine erreicht werden kann.

Das Rotorsegment 3.1 treibt über die Welle 11.1 das Sonnenrad 7.1 an. Die an der Welle 11.1 angeordnete Rücklaufsperre 12.1 befindet sich im Freilauf. Weiterhin treibt das Rotorsegment 3.2 das Hohlrad 10.1 an. Die Rücklaufsperre 12.2 befindet sich im Freilauf.

Somit treiben das Sonnenrad 7.1 und das Hohlrad 10.1 in diesem Schaltzustand über die Planetenräder 9 das Trägerrad 8.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit im dritten Gang stellt an der Welle 11.3 das geringste Drehmoment in Bezug auf die Leistung der elektrischen Maschine bei maximaler Drehzahl an der Welle 11.3 bereit. Dieser Schaltzustand ist in Fig. 3 dargestellt.

Ein zweites Ausführungsbeispiel der erfindungsgemäßen Antriebseinheit mit vier Gängen wird im Folgenden anhand der Fig. 4 bis 7 erläutert und dargestellt und besteht aus einem Gehäuse 1, in den Fig. 4 bis 7 nicht dargestellt, einer elektrischen Maschine und einem mehrgängigen Planetengetriebe, wobei dieses über Rotorsegment 3.1 und Rotorsegment 3.2 von der elektrischen Maschine angetrieben wird.

Die elektrische Maschine besteht aus einem Stator, welcher aus Statorsegment 4.1 und Statorsegment 4.2 besteht, und weiterhin aus einem Rotor, welcher aus Rotorsegment 3.1 und Rotorsegment 3.2 besteht. Statorsegment 4.1 und Statorsegment 4.2 der elektrischen Maschine sind außerhalb des Radius von Rotorsegment 3.1 und Rotorsegment 3.2 der elektrischen Maschine angeordnet. Auf Statorsegment 4.1 und Statorsegment 4.2 sind elektrische Spulen 22, in den Fig. 4 bis 7 nicht dargestellt, und auf Rotorsegment 3.1 und Rotorsegment 3.2 sind Permanentmagnete 5, in den Fig. 4 bis 7 nicht dargestellt, angeordnet. Weiterhin besteht die elektrische Maschine aus einer Verschiebevorrichtung 21. Die Verschiebevorrichtung 21 ist aus vier Gewindespindeln 17 mit elektrischem Servomotor 18, in den Fig. 4 bis 7 nicht dargestellt, Führungen 20, und Befestigungen 19 aufgebaut.

Das mehrgängige Planetengetriebe besteht aus einem einfachen Planetengetriebe 6.1 in einem Planetengetriebegehäuse. Das einfache Planetengetriebe 6.1 besteht aus Sonnenrad 7.1, Hohlrad 10.1 und Trägerrad 8.1 mit Planetenrädern 9, in den Fig. 4 bis 7 nicht dargestellt. Weiterhin besteht das mehrgängige Planetengetriebe aus der Welle 11.1, der Welle 11.2 und der Welle 11.3 sowie der Bremse 13, der Überholkupplung 14 und der Rücklaufsperre 12.1.

Die Welle 11.1, die als Hohlwelle ausgebildet ist, ist drehbar auf der Welle 11.3 gelagert und verbindet Rotorsegment 3.1 des Rotors mit dem Sonnenrad 7.1. Die Welle 11.1 ist weiterhin mit der Überholkupplung 14 verbunden, welche andererseits fest mit der Welle 11.2 verbunden ist. Die Welle 11.1 ist zudem mit der Bremse 13, welche fest mit dem Gehäuse 1 verbunden ist, verbunden.

Die Welle 11.2 ist einerseits drehbar auf der Welle 11.1 und andererseits drehbar auf der Welle 11.3 gelagert. Weiterhin sind an Welle 11.2 das Trägerrad 8.1 und das Rotorsegment 3.2 des Rotors befestigt. Die Welle 11.2 ist zugleich mit der Rücklaufsperre 12.1 verbunden. Die Rücklaufsperre 12.1 verfügt weiterhin über eine feste Verbindung mit dem Gehäuse 1.

Die Welle 11.3 ist im Ausführungsbeispiel die Abtriebswelle der erfindungsgemäßen Antriebseinheit. Sie ist auf der Hauptachse 2 angeordnet und drehbar im Gehäuse 1 gelagert. Die Welle 11.3 ist fest mit dem Hohlrad 10.1 verbunden.

Das einfache Planetengetriebe 6.1 des mehrgängigen Planetengetriebes wird bei dieser Ausführung der Antriebseinheit über die Rotorsegment 3.1 und Rotorsegment 3.2 angetrieben.

Das Rotorsegment 3.1 ist in diesem Ausführungsbeispiel fest über Welle 11.1 mit dem Sonnenrad 7.1 verbunden. Das Rotorsegment 3.2 ist in diesem Ausführungsbeispiel fest über Welle 11.2 mit dem Trägerrad 8.1 verbunden.

Statorsegment 4.1 und Statorsegment 4.2 des Stators sind jeweils an einer Befestigung 19 der Verschiebevorrichtung 21 befestigt. Jede Befestigung 19 ist parallel zur Hauptachse 2 verschiebbar in einer Führung 20 gelagert, welche fest mit dem Gehäuse 1 verbunden ist. Jede Befestigung 19 weist zwei Innengewinde auf, durch welche jeweils eine Gewindespindel 17, welche parallel zur Hauptachse 2 angeordnet ist, läuft. Die jeweilige Gewindespindel 17 ist einerseits drehbar im Gehäuse 1 gelagert und andererseits fest mit einem Servomotor 18 verbunden, welcher wiederum fest mit dem Gehäuse 1 verbunden ist. Die Steuerung des jeweiligen Servomotors 18 erfolgt durch elektronische Steuergeräte. Je nach benötigter Bewegungsrichtung von Statorsegment 4.1 und Statorsegment 4.2 wird diese durch Links- oder Rechtslauf der jeweils zugeordneten Servomotoren 18 sichergestellt.

Die Funktionsweise der erfindungsgemäßen Antriebseinheit im zweiten Ausführungsbeispiel wird im Folgenden anhand ihrer verschiedenen Schaltzustände und deren Übergängen erläutert. Dabei erfolgt die Beschreibung der Abfolge der Schaltzustände vom ersten Gang mit dem höchsten Drehmoment an der Abtriebswelle in Bezug auf die Leistung der elektrischen Maschine bis zum vierten Gang mit dem geringsten Drehmoment an der Abtriebswelle in Bezug auf die Leistung der elektrischen Maschine.

Im ersten Gang sind Statorsegment 4.1 und Statorsegment 4.2 so positioniert, dass sie das Rotorsegment 3.1 antreiben, sobald durch elektronische Steuergeräte der elektrische Energiefluss von einer elektrischen Energiequelle zu Statorsegment 4.1 und Statorsegment 4.2 geschaltet wird. Diese versetzen bei Zuschaltung des elektrischen Energieflusses das Rotorsegment 3.1 nunmehr in eine Drehbewegung entgegen dem Drehsinn der Abtriebswelle, welche im Ausführungsbeispiel die Welle 11.3 ist. Dies erfolgt bis zu der Drehzahl, die maximal durch die elektrische Maschine erreicht werden kann. Das Rotorsegment 3.1 treibt über die Welle 11.1 das Sonnenrad 7.1 an. Die an der Welle 11.1 angeordnete Bremse 13 ist deaktiviert. Ein Rücklauf des Trägerrades 8.1 entgegen der Richtung des Drehsinns des Antriebs der der Welle 11.3, welche die Abtriebswelle der erfindungsgemäßen Antriebseinheit ist, wird durch die Rücklaufsperre 12.1 verhindert. Die Überholkupplung 14 befindet sich im Freilauf.

Somit treibt das Sonnenrad 7.1 in diesem Schaltzustand über die Planetenräder 9 das Hohlrad 10.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit stellt an der Welle 11.3 das maximale Drehmoment in Bezug auf die Leistung der elektrischen Maschine im ersten Gang bereit. Dieser Schaltzustand ist in Fig. 4 dargestellt.

Der Wechsel vom ersten Gang in den zweiten Gang erfolgt zunächst durch die Unterbrechung des elektrischen Energiefluss von einer elektrischen Energiequelle zu Statorsegment 4.1 und Statorsegment 4.2 durch elektronische Steuergeräte.

Im Folgenden werden Statorsegment 4.1 und Statorsegment 4.2 durch elektronische Steuergeräte in den Generatorbetrieb versetzt und die elektrische Energie von Statorsegment 4.1 und Statorsegment 4.2 durch elektronische Steuergeräte zu einem elektrischen Verbraucher geleitet. Das führt zu einer Abnahme der Drehzahl des Rotorsegments 3.1, die durch das Versetzen von Statorsegment 4.1 und Statorsegment 4.2 in den Generatorbetrieb beschleunigt wird. Zeitgleich führt das auch dazu, dass das Rotorsegment 3.2 und das mit ihm über Welle 11.2 verbundene Trägerrad 8.1 im Drehsinn der Welle 11.3 in eine Drehbewegung versetzt werden. Die Drehzahl des Rotorsegments 3.2 erhöht sich während sich zeitgleich die Drehzahl des Rotorsegments 3.1 und die Drehzahl des mit diesem über Welle 11.1 fest verbundenen Sonnenrads 7.1 bis hin zum Stillstand verringert. Mit Stillstand des Rotorsegments 3.1 wird durch elektronische Steuergeräte der Generatorbetrieb von Statorsegment 4.1 und Statorsegment 4.2 abgeschaltet.

Im zweiten Gang sind Statorsegment 4.1 und Statorsegment 4.2 so positioniert, dass sie das Rotorsegment 3.1 antreiben können. Durch elektronische Steuergeräte wird der elektrische Energiefluss von einer elektrischen Energiequelle zu Statorsegment 4.1 und Statorsegment 4.2 so geschaltet, dass das Rotorsegment 3.1 nunmehr in eine Drehbewegung mit demselben Drehsinn der Welle 11.3 versetzt wird. Die Drehzahl des mit dem Rotorsegment 3.1 fest über die Welle 11.1 verbundenen Sonnenrades 7.1 erhöht sich. Die an der Welle 11.1 angeordnete Bremse 13 ist deaktiviert, die Rücklaufsperre 12.1 befindet sich im Freilauf. Sobald die Drehzahl des Sonnenrades 7.1 im Zuge seiner Drehzahlerhöhung die Drehzahl des Trägerrades 8.1 erreicht, schaltet die Überholkupplung 14 vom Freilauf in den Kupplungszustand, was dazu führt, dass das Rotorsegment 3.1 über die Welle 11.1 das Sonnenrad 7.1 und zeitgleich über Welle 11.1, die damit verbundene Überholkupplung 14 und nachfolgend die Welle 11.2 das Trägerrad 8.1 antreibt. Das Trägerrad 8.1 treibt nun gemeinsam mit dem Sonnenrad 7.1 über die Planetenräder 9 das Hohlrad 10.1 an. Der Drehsinn der Welle 11.1 und Welle 11.2 entspricht in diesem Schaltzustand dem Drehsinn der Welle 11.3, welche im Ausführungsbeispiel die Abtriebswelle der erfindungsgemäßen Antriebseinheit ist.

Die Drehzahlen des Trägerrades 8.1, des Sonnenrades 7.1 und des Hohlrades 10.1 und damit auch die Drehzahl der Welle 11.3 erhöhen sich synchron. Dies erfolgt bis zu der Drehzahl, die maximal durch die elektrische Maschine erreicht werden kann.

Dieser Schaltzustand der erfindungsgemäßen Antriebseinheit im zweiten Gang stellt an der Welle 11.3 ein geringeres Drehmoment in Bezug auf die Leistung der elektrischen Maschine, jedoch bei höherer Drehzahl an der Welle 11.3 als im ersten Gang, bereit. Dieser Schaltzustand ist in Fig. 5 dargestellt.

Der Wechsel vom zweiten Gang in den dritten Gang erfolgt zunächst durch die Unterbrechung des elektrischen Energieflusses von einer elektrischen Energiequelle zu Statorsegment 4.1 und Statorsegment 4.2 durch elektronische Steuergeräte. Die Bremse 13 wird durch elektronische Steuergeräte aktiviert und bremst die Welle 11.1 ab und blockiert diese bei Stillstand. Nun erfolgt eine Neupositionierung von Statorsegment 4.1 und Statorsegment 4.2 mit der Verschiebevorrichtung 21 so, dass sie das Rotorsegment 3.2 antreiben können, sobald durch elektronische Steuergeräte der elektrische Energiefluss von einer elektrischen Energiequelle zu Statorsegment 4.1 und Statorsegment 4.2 geschaltet wird.

Im dritten Gang sind Statorsegment 4.1 und Statorsegment 4.2 so positioniert, dass sie das Rotorsegment 3.2 antreiben. Durch elektronische Steuergeräte wird der elektrische Energiefluss von einer elektrischen Energiequelle zu Statorsegment 4.1 und Statorsegment 4.2 so geschaltet, dass das Rotorsegment 3.2 nunmehr in eine Drehbewegung mit demselben Drehsinn der Welle 11.3 versetzt wird. Die Drehzahl des mit dem Rotorsegment 3.2 fest über die Welle 11.2 verbundenen Trägerrades 8.1 erhöht sich. Die Überholkupplung 14 und die Rücklaufsperre 12.1 befinden sich im Freilauf. Das Trägerrad 8.1 treibt nun über die Planetenräder 9 das Hohlrad 10.1 an. Die Drehzahlen des Trägerrades 8.1, des Hohlrades 10.1 und damit auch die Drehzahl der Welle 11.3, welche in diesem Ausführungsbeispiel die Abtriebswelle der erfindungsgemäßen Antriebseinheit ist, erhöhen sich. Dies erfolgt bis zu der Drehzahl, die maximal durch die elektrische Maschine erreicht werden kann.

Dieser Schaltzustand der erfindungsgemäßen Antriebseinheit im dritten Gang stellt an der Welle 11.3 ein geringeres Drehmoment in Bezug auf die Leistung der elektrischen Maschine, jedoch bei höherer Drehzahl an der Welle 11.3 als im zweiten Gang, bereit. Dieser Schaltzustand ist in Fig. 6 dargestellt.

Der Wechsel vom dritten Gang in den vierten Gang erfolgt zunächst durch die Unterbrechung des elektrischen Energieflusses von einer elektrischen Energiequelle zum Statorsegment 4.1 durch elektronische Steuergeräte. Nun erfolgt eine Neupositionierung des Statorsegments 4.1 mit der Verschiebevorrichtung 21 so, dass es das Rotorsegment 3.1 antreiben kann, sobald durch elektronische Steuergeräte der elektrische Energiefluss von einer elektrischen Energiequelle zum Statorsegment 4.1 geschaltet wird. Das Statorsegment 4.2 treibt währenddessen weiterhin das Rotorsegment 3.2 an.

Nun wird durch elektronische Steuergeräte der elektrische Energiefluss von einer elektrischen Energiequelle zum Statorsegment 4.1 geschaltet. Das Statorsegment 4.1 versetzt bei Zuschaltung des elektrischen Energieflusses das Rotorsegment 3.1 nunmehr in eine Drehbewegung im entgegengesetzten Drehsinn in Bezug auf den Drehsinn der Welle 11.3, welche in diesem Ausführungsbeispiel die Abtriebswelle der erfindungsgemäßen Antriebseinheit ist. Dazu wird durch elektronische Steuergeräte die Bremse 13 gelöst. Die Drehzahl des Rotorsegments 3.1 erhöht sich.

Zeitgleich wird die Zufuhr der elektrischen Leistung zum Statorsegment 4.2 durch elektronische Steuergeräte soweit abgesenkt, damit auch die Drehzahl von Rotorsegment 3.2 soweit abgesenkt, bis die Drehzahlen von Rotorsegment 3.1 und Rotorsegment 3.2 annähernd synchron sind, wobei der Drehsinn von Rotorsegment 3.1 und Rotorsegment 3.2 gegensätzlich ist. Die Rücklaufsperre 12.1 und die Überholkupplung 14 befinden sich im Freilauf.

Nachdem die Synchronisierung der Drehzahlen von Rotorsegment 3.1 und Rotorsegment 3.2 erfolgt ist, wird ihre Drehzahl bis zu der Drehzahl erhöht, die maximal durch die elektrische Maschine erreicht werden kann.

Dieser Schaltzustand der erfindungsgemäßen Antriebseinheit im vierten Gang stellt an der Welle 11.3 das geringste Drehmoment in Bezug auf die Leistung der elektrischen Maschine, jedoch bei höchstmöglicher Drehzahl an der Welle 11.3, bereit. Dieser Schaltzustand ist in Fig. 7 dargestellt.

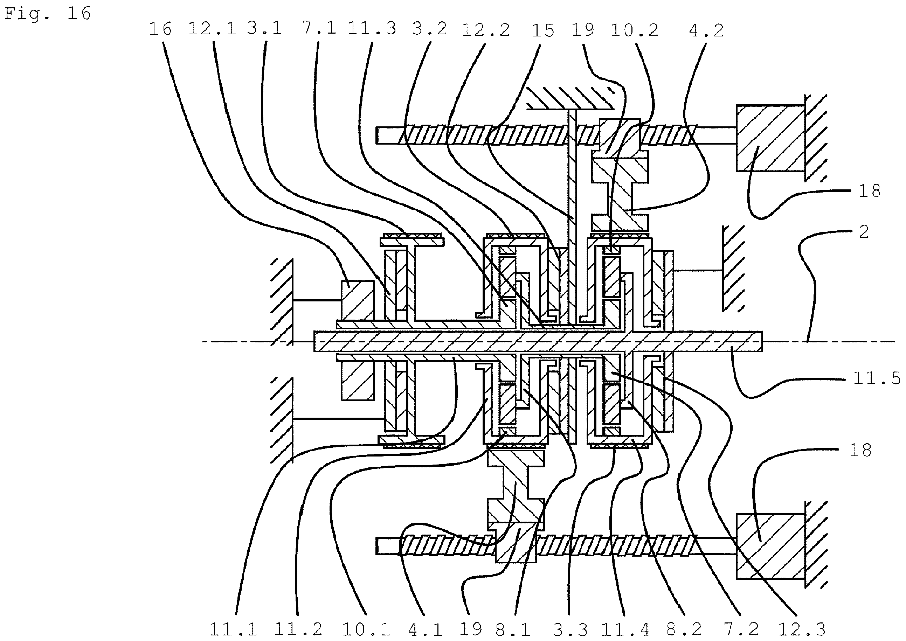

Ein drittes Ausführungsbeispiel der erfindungsgemäßen Antriebseinheit mit sechs Gängen wird im Folgenden anhand der Fig. 8 bis 13 und Fig. 16 bis 19 erläutert und dargestellt und besteht aus einem Gehäuse 1, in den Fig. 8 bis 13 und Fig. 16 bis 19 nicht dargestellt, einer elektrischen Maschine, einer weiteren elektrischen Maschine 16 nach Stand der Technik und einem mehrgängigen Planetengetriebe, bestehend aus zwei einfachen Planetengetrieben, Planetengetriebe 6.1 und Planetengetriebe 6.2, wobei das mehrgängige Planetengetriebe über Rotorsegment 3.1, Rotorsegment 3.2 und Rotorsegment 3.3 von der elektrischen Maschine und weiterhin über die Welle 11.1 von der weiteren elektrischen Maschine 16 angetrieben wird. Weiterer Bestandteil der erfindungsgemäßen Antriebseinheit ist eine Haltevorrichtung 15. Diese ist im Ausführungsbeispiel 3 in Fig. 16 bis 18 dargestellt.

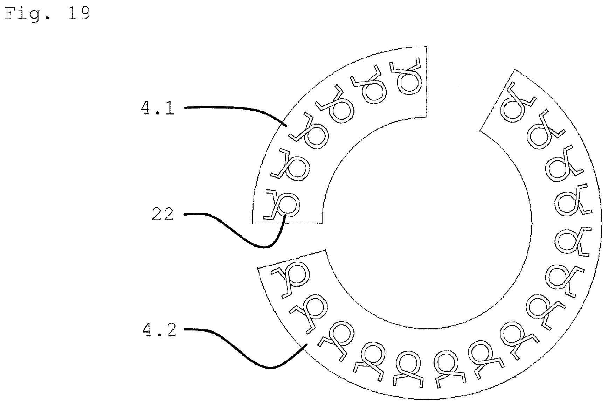

Die elektrische Maschine besteht aus einem Stator, welcher aus Statorsegment 4.1 und Statorsegment 4.2 besteht, und weiterhin aus einem Rotor, welcher aus Rotorsegment 3.1, Rotorsegment 3.2 und Rotorsegment 3.3 besteht. Statorsegment 4.1 und Statorsegment 4.2 der elektrischen Maschine sind außerhalb des Radius von Rotorsegment 3.1, Rotorsegment 3.2 und Rotorsegment 3.3 der elektrischen Maschine angeordnet. Auf Statorsegment 4.1 und Statorsegment 4.2 sind elektrische Spulen 22 und auf Rotorsegment 3.1, Rotorsegment 3.2 und Rotorsegment 3.3 sind Permanentmagnete 5 angeordnet. Das Statorsegment 4.1 verfügt im Ausführungsbeispiel über sechs elektrische Spulen, das Statorsegment 4.2 verfügt hingegen über fünfzehn elektrische Spulen 22, wie in Fig. 19 schematisch dargestellt.

Weiterhin besteht die elektrische Maschine aus einer Verschiebevorrichtung 21. Die Verschiebevorrichtung 21 ist aus vier Gewindespindeln 17 mit elektrischem Servomotor 18, Führungen 20, und Befestigungen 19 aufgebaut.

Die Gesamtnennleistung der elektrischen Maschine der erfindungsgemäßen Antriebseinheit sowie der weiteren elektrischen Maschine 16, ist verteilt, wie in Tabelle 2 dargestellt.

Dabei sind die maximal erreichbaren Drehzahlen von Rotorsegmen 3.1, Rotorsegment 3.2 und Rotorsegment 3.3 sowie die Drehzahl der Welle 11.5, welche im Ausführungsbeispiel die Abtriebswelle der erfindungsgemäßen Antriebseinheit darstellt, und die Drehzahl der der Welle 11.1, welche im Ausführungsbeispiel die Abtriebswelle der weiteren elektrischen Maschine 16 darstellt, annähernd gleich.

Das mehrgängige Planetengetriebe besteht im Ausführungsbeispiel aus dem einfachen Planetengetriebe 6.1 und dem einfachen Planetengetriebe 6.2, jeweils in einem Planetengetriebegehäuse. Das einfache Planetengetriebe 6.1 besteht aus Sonnenrad 7.1, Hohlrad 10.1 und Trägerrad 8.1 mit Planetenrädern 9, in den Fig. 8 bis 13 und Fig. 16, 18 und 19 nicht dargestellt. Das einfache Planetengetriebe 6.2 besteht aus Sonnenrad 7.2, Hohlrad 10.2 und Trägerrad 8.2 mit Planetenrädern 9, in den Fig. 8 bis 13 und Fig. 16, 18 und 19 nicht dargestellt.

Weiterhin besteht das mehrgängige Planetengetriebe aus der Welle 11.1, der Welle 11.2, der Welle 11.3, der Welle 11.4 und der Welle 11.5 sowie den Rücklaufsperre 12.1, Rücklaufsperre 12.2 und Rücklaufsperre 12.3.

Im vorliegenden Ausführungsbeispiel beträgt das Verhältnis der Anzahl der Zähne von Sonnenrad 7.1 zur Anzahl der Zähne von Hohlrad 10.1 im einfachen Planetengetriebe 6.1 und das Verhältnis der Anzahl der Zähne von Sonnenrad 7.2 zur Anzahl der Zähne von Hohlrad 10.2 im Planetengetriebe 6.2 1 zu ~1,618.

Die Welle 11.1, die als Hohlwelle ausgebildet ist, und zudem die Abtriebswelle der weiteren elektrischen Maschine 16 nach Stand der Technik ist, ist drehbar auf der Welle 11.5 gelagert und verbindet Rotorsegment 3.1 des Rotors mit dem Sonnenrad 7.1. Die Welle 11.1 ist zugleich mit der Rücklaufsperre 12.1 verbunden. Die Rücklaufsperre 12.1 verfügt weiterhin über eine feste Verbindung mit dem Gehäuse 1. Weiterhin verfügt auch die weitere elektrische Maschine 16 über eine feste Verbindung mit dem Gehäuse 1.

Die Welle 11.2, die als Hohlwelle ausgebildet ist, in Ausbildung eines Planetengetriebegehäuses, ist einerseits drehbar auf der Welle 11.1 und andererseits drehbar auf der Welle 11.3 gelagert. Weiterhin sind an Welle 11.2 das Hohlrad 10.1 und das Rotorsegment 3.2 des Rotors befestigt. Die Welle 11.2 ist zugleich mit der Rücklaufsperre 12.2 verbunden. Die Rücklaufsperre 12.2 ist zudem fest mit der Haltevorrichtung 15 verbunden, welche wiederum fest mit dem Gehäuse 1 verbunden ist.

Die Welle 11.3, die als Hohlwelle ausgebildet ist, ist drehbar auf der Welle 11.5 gelagert und verbindet das Trägerrad 8.1 mit dem Sonnenrad 7.2.

Die Welle 11.4, die als Hohlwelle ausgebildet ist, in Ausbildung eines Planetengetriebegehäuses, ist einerseits drehbar auf der Welle 11.3 und andererseits drehbar auf der Welle 11.5 gelagert. Weiterhin sind an Welle 11.4 das Hohlrad 10.2 und das Rotorsegment 3.3 des Rotors befestigt. Die Welle 11.4 ist zugleich mit der Rücklaufsperre 12.3 verbunden. Die Rücklaufsperre 12.3 ist zudem fest mit dem Gehäuse 1 verbunden.

Die Welle 11.5 ist im Ausführungsbeispiel die Abtriebswelle der erfindungsgemäßen Antriebseinheit. Sie ist auf der Hauptachse 2 angeordnet und drehbar im Gehäuse 1 gelagert. Die Welle 11.5 ist fest mit dem Trägerrad 8.2 verbunden.

Das einfache Planetengetriebe 6.1 des mehrgängigen Planetengetriebes wird bei dieser Ausführung der erfindungsgemäßen Antriebseinheit über Rotorsegment 3.1, Rotorsegment 3.2 und die weitere elektrische Maschine 16 angetrieben. Das Rotorsegment 3.1 ist in diesem Ausführungsbeispiel fest über die Welle 11.1 mit dem Sonnenrad 7.1 verbunden. Die Welle 11.1 ist zugleich die Abtriebswelle der weiteren elektrischen Maschine 16. Das Rotorsegment 3.2 ist in diesem Ausführungsbeispiel fest über Welle 11.2 mit dem Hohlrad 10.1 verbunden.

Das einfache Planetengetriebe 6.2 des mehrgängigen Planetengetriebes wird bei dieser Ausführung der erfindungsgemäßen Antriebseinheit über das Rotorsegment 3.3 und die Welle 11.3 angetrieben. Das Rotorsegment 3.3 ist in diesem Ausführungsbeispiel fest über Welle 11.4 mit dem Hohlrad 10.2 verbunden. Die Welle 11.3 ist in diesem Ausführungsbeispiel fest mit dem Sonnenrad 7.2 verbunden.

Die Richtung des Drehsinns des Antriebs von Rotorsegment 3.1, Rotorsegment 3.2 und Rotorsegment 3.3 entspricht der Richtung des Drehsinns des Antriebs der Welle 11.5, welche die Abtriebswelle der erfindungsgemäßen Antriebseinheit ist.

Die Richtung des Drehsinns des Antriebs der Welle 11.1, welche die Abtriebswelle der weiteren elektrischen Maschine 16 darstellt, entspricht der Richtung des Drehsinns des Antriebs der Welle 11.5, welche die Abtriebswelle der erfindungsgemäßen Antriebseinheit darstellt.

Rücklaufsperre 12.1, Rücklaufsperre 12.2 und Rücklaufsperre 12.3 verhindern, dass sich Rotorsegment 3.1, Rotorsegment 3.2 und Rotorsegment 3.3 und alle mit ihnen fest verbundenen Bestandteile von Planetengetriebe 6.1 und Planetengetriebe 6.2 des mehrgängigen Planetengetriebes entgegen der Richtung des Drehsinns des Antriebs der Welle 11.5 drehen können.

Statorsegment 4.1 und Statorsegment 4.2 des Stators sind jeweils an einer Befestigung 19 der Verschiebevorrichtung 21 befestigt. Jede Befestigung 19 ist parallel zur Hauptachse 2 verschiebbar in einer Führung 20 gelagert, welche fest mit dem Gehäuse 1 verbunden ist. Jede Befestigung 19 weist zwei Innengewinde auf, durch welche jeweils eine Gewindespindel 17, welche parallel zur Hauptachse 2 angeordnet ist, läuft. Die jeweilige Gewindespindel 17 ist einerseits drehbar im Gehäuse 1 gelagert und andererseits fest mit einem Servomotor 18 verbunden, welcher wiederum fest mit dem Gehäuse 1 verbunden ist. Die Steuerung des jeweiligen Servomotors 18 erfolgt durch elektronische Steuergeräte. Je nach benötigter Bewegungsrichtung von Statorsegment 4.1 und Statorsegment 4.2 wird diese durch Links- oder Rechtslauf der jeweils zugeordneten Servomotoren 18 sichergestellt.

Die Funktionsweise der erfindungsgemäßen Antriebseinheit im dritten Ausführungsbeispiel wird im Folgenden anhand ihrer verschiedenen Schaltzustände und deren Übergängen erläutert. Dabei erfolgt die Beschreibung der Abfolge der Schaltzustände von Gang 1 mit dem höchsten Drehmoment an der Welle 11.5, welche die Abtriebswelle der erfindungsgemäßen Antriebseinheit darstellt, in Bezug auf die Leistung der elektrischen Maschine und der weiteren elektrischen Maschine 16 bis zum 6. Gang mit dem geringsten Drehmoment an der Welle 11.5 in Bezug auf die Leistung der elektrischen Maschine und der weiteren elektrischen Maschine 16.

Im ersten Gang sind Statorsegment 4.1 und Statorsegment 4.2 so positioniert, dass sie das Rotorsegment 3.1 antreiben, sobald durch elektronische Steuergeräte der elektrische Energiefluss von einer elektrischen Energiequelle zu Statorsegment 4.1 und Statorsegment 4.2 geschaltet wird. Diese versetzen bei Zuschaltung des elektrischen Energieflusses das Rotorsegment 3.1 gemeinsam mit der weiteren elektrischen Maschine 16, zu der zeitgleich der elektrische Energiefluss von einer elektrischen Energiequelle durch elektronische Steuergeräte geschaltet wird, in eine Drehbewegung. Dies erfolgt bis zu der Drehzahl, die maximal durch die elektrische Maschine und die weitere elektrische Maschine 16 erreicht werden kann.

Das Rotorsegment 3.1 und die weitere elektrische Maschine 16 treiben über die Welle 11.1 das Sonnenrad 7.1 an. Die an der Welle 11.1 angeordnete Rücklaufsperre 12.1 befindet sich im Freilauf. Ein Rücklauf des Hohlrades 10.1 entgegen des Drehsinns des Antriebs der Welle 11.5 wird durch die Rücklaufsperre 12.2 verhindert.

Somit treibt das Sonnenrad 7.1 in diesem Schaltzustand über die Planetenräder 9 das Trägerrad 8.1 und damit die Welle 11.3 an. Die Welle 11.3 treibt das Sonnenrad 7.2 an, welches über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.2 entgegen des Drehsinns des Antriebs der Welle 11.5 wird durch die Rücklaufsperre 12.3 verhindert.

Dieser Schaltzustand der erfindungsgemäßen Antriebseinheit stellt an der Welle 11.5 das maximale Drehmoment in Bezug auf die Summe der Leistung der elektrischen Maschine und der weiteren elektrischen Maschine 16 im ersten Gang bereit. Dieser Schaltzustand ist in Fig. 8 dargestellt.

Der Wechsel vom ersten Gang in den zweiten Gang erfolgt durch Neupositionierung von Statorsegment 4.1 und Statorsegment 4.2 mit der Verschiebevorrichtung 21 so, dass sie das Rotorsegment 3.2 antreiben können, sobald durch elektronische Steuergeräte der elektrische Energiefluss von einer elektrischen Energiequelle zu Statorsegment 4.1 und Statorsegment 4.2 geschaltet wird.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen.

Im zweiten Gang wird durch elektronische Steuergeräte der elektrische Energiefluss von einer elektrischen Energiequelle zu Statorsegment 4.1 und Statorsegment 4.2 geschaltet. Vor dem Zuschalten des elektrischen Energieflusses zu Statorsegment 4.1 und Statorsegment 4.2 wird durch elektronische Steuergeräte der elektrische Energiefluss von einer elektrischen Energiequelle zur weiteren elektrischen Maschine 16 unterbrochen. Statorsegment 4.1 und Statorsegment 4.2 versetzen das Rotorsegment 3.2 in eine Drehbewegung.

Das Rotorsegment 3.2 treibt das Hohlrad 10.1 an. Die Rücklaufsperre 12.2 befindet sich im Freilauf. Die Drehzahl des Hohlrades 10.1 erhöht sich. Das führt dazu, dass das Sonnenrad 7.1 negativ beschleunigt wird und zeitgleich eine Erhöhung der Drehzahl des Trägerrades 8.1, welches durch das Hohlrad 10.1 über die Planetenräder 9 angetrieben wird, zu verzeichnen ist. Da das Sonnenrad 7.1 nicht mehr durch das Rotorsegment 3.1 und die weitere elektrische Maschine 16 angetrieben wird, verringert sich die Drehzahl des Sonnenrades 7.1 bis zum Stillstand. Der Rücklauf des Sonnenrades 7.1 entgegen des Drehsinns des Antriebs der Welle 11.5 wird durch die Rücklaufsperre 12.1 verhindert. Die Drehzahl des Trägerrades 8.1 erhöht sich. Dies erfolgt bis zu der Drehzahl, die maximal durch die elektrische Maschine erreicht werden kann.

Das Trägerrad 8.1 treibt über die Welle 11.3 das Sonnenrad 7.2 an, welches über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.2 entgegen des Drehsinns des Antriebs der Welle 11.5 wird durch die Rücklaufsperre 12.3 verhindert.

Dieser Schaltzustand der erfindungsgemäßen Antriebseinheit im zweiten Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im ersten Gang bereit. Dieser Schaltzustand ist in Fig. 9 dargestellt.

Der Wechsel vom zweiten Gang in den dritten Gang erfolgt durch Neupositionierung des Statorsegments 4.1 mit der Verschiebevorrichtung 21 so, dass es das Rotorsegment 3.1 antreiben kann, sobald durch elektronische Steuergeräte der elektrische Energiefluss von einer elektrischen Energiequelle zum Statorsegment 4.1 geschaltet wird.

Es ist erforderlich, während der Neupositionierung des Statorsegments 4.1 den elektrischen Energiefluss zum Statorsegment 4.1 durch elektronische Steuergeräte zu unterbrechen.

Das Statorsegment 4.2 treibt über das Rotorsegment 3.2 weiterhin das mehrgängige Planetengetriebe an.

Im dritten Gang wird durch elektronische Steuergeräte der elektrische Energiefluss von einer elektrischen Energiequelle zum Statorsegment 4.1 geschaltet. Dieses versetzt bei Zuschaltung des elektrischen Energieflusses das Rotorsegment 3.1 in eine Drehbewegung. Zeitgleich wird der elektrische Energiefluss von einer elektrischen Energiequelle durch elektronische Steuergeräte zur weiteren elektrischen Maschine 16 geschaltet. Somit treiben das Rotorsegment 3.1 und die weitere elektrische Maschine 16 über die Welle 11.1 das Sonnenrad 7.1 an.

Die Drehzahl des Rotorsegments 3.1 erhöht sich. Zeitgleich wird die Zufuhr der elektrischen Leistung zum Statorsegment 4.2 durch elektronische Steuergeräte soweit abgesenkt, damit auch die Drehzahl von Rotorsegment 3.2 soweit abgesenkt, bis die Drehzahlen von Rotorsegment 3.1 und Rotorsegment 3.2 annähernd synchron sind. Nachdem die Synchronisierung der Drehzahlen von Rotorsegment 3.1 und Rotorsegment 3.2 erfolgt ist, wird ihre Drehzahl bis zu der Drehzahl erhöht, die maximal durch die elektrische Maschine und die weitere elektrische Maschine 16 erreicht werden kann. Das Rotorsegment 3.1 und die weitere elektrische Maschine 16 treiben weiterhin über die Welle 11.1 das Sonnenrad 7.1 an. Die an der Welle 11.1 befestigte Rücklaufsperre 12.1 befindet sich im Freilauf. Weiterhin treibt das Rotorsegment 3.2 das Hohlrad 10.1 an. Die Rücklaufsperre 12.2 befindet sich im Freilauf.

Somit treiben das Sonnenrad 7.1 und das Hohlrad 10.1 in diesem Schaltzustand über die Planetenräder 9 das Trägerrad 8.1 an. Das Trägerrad 8.1 treibt über die Welle 11.3 das Sonnenrad 7.2 an, welches über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.2 entgegen des Drehsinns des Antriebs der Welle 11.5 wird durch die Rücklaufsperre 12.3 verhindert.

Dieser Schaltzustand der erfindungsgemäßen Antriebseinheit im dritten Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im zweiten Gang bereit. Dieser Schaltzustand ist in Fig. 10 dargestellt.

Der Wechsel vom dritten Gang in den vierten Gang erfolgt durch Neupositionierung von Statorsegment 4.1 und Statorsegment 4.2 mit der Verschiebevorrichtung 21 so, dass sie das Rotorsegment 3.3 antreiben können, sobald durch elektronische Steuergeräte der elektrische Energiefluss von einer elektrischen Energiequelle zu den Statorsegment 4.1 und Statorsegment 4.2 geschaltet wird.

Voraussetzung für die Möglichkeit der Neupositionierung von Statorsegment 4.1 und Statorsegment 4.2 ist die erfindungsgemäße Konstruktion und Anordnung der Haltevorrichtung 15. Diese greift erfindungsgemäß in einen ausreichend bemessenen Zwischenraum zwischen Rotorsegment 3.2 und Rotorsegment 3.3 ein. Sie ist so angeordnet, dass sie zudem in einen ausreichend bemessenen Zwischenraum zwischen die Bogensegmente des Stators, also die Statorsegment 4.1 und Statorsegment 4.2, eingreift. Dies ermöglicht es, die Statorsegment 4.1 und Statorsegment 4.2 ungehindert an der Haltevorrichtung 15 vorbei mit der Verschiebevorrichtung 21 parallel zur Hauptachse 2 so neu zu positionieren, dass sie das Rotorsegment 3.3 antreiben können.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen. Zeitgleich wird durch elektronische Steuergeräte der elektrische Energiefluss von einer elektrischen Energiequelle zur weiteren elektrischen Maschine 16 unterbrochen.

Im vierten Gang wird durch elektronische Steuergeräte der elektrische Energiefluss von einer elektrischen Energiequelle zu Statorsegment 4.1 und Statorsegment 4.2 geschaltet. Statorsegment 4.1 und Statorsegment 4.2 versetzen das Rotorsegment 3.3 in eine Drehbewegung.

Das Rotorsegment 3.3 treibt das Hohlrad 10.2 an. Die Rücklaufsperre 12.3 befindet sich im Freilauf. Das Sonnenrad 7.1 und das Hohlrad 10.1 werden nicht mehr angetrieben. Die Drehzahl des Hohlrades 10.2 erhöht sich. Das führt dazu, dass das Sonnenrad 7.2 und somit das über die Welle 11.3 verbundene Trägerrad 8.1 und in Folge auch Sonnenrad 7.1 und Hohlrad 10.1 negativ beschleunigt werden und zeitgleich eine Erhöhung der Drehzahl des Trägerrades 8.2, welches durch das Hohlrad 10.2 über die Planetenräder 9 angetrieben wird, zu verzeichnen ist. Die Drehzahlen des Sonnenrades 7.1 und des Hohlrades 10.1 verringern sich bis zum Stillstand. Der Rücklauf des Sonnenrades 7.1 wird durch die Rücklaufsperre 12.1 verhindert. Der Rücklauf des Hohlrades 10.1 wird durch die Rücklaufsperre 12.2 verhindert, welche über die Haltevorrichtung 15 über eine feste Verbindung mit dem Gehäuse 1 verfügt. Die Drehzahl des Trägerrades 8.2 erhöht sich weiter.

Das Trägerrad 8.2 treibt die Welle 11.5 an, welche im Ausführungsbeispiel die Abtriebswelle der erfindungsgemäßen Antriebseinheit ist.

Die Drehzahl der Welle 11.5 wird bis zu der Drehzahl erhöht, welche maximal durch die elektrische Maschine erreicht werden kann.

Dieser Schaltzustand der erfindungsgemäßen Antriebseinheit im vierten Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im dritten Gang bereit. Dieser Schaltzustand ist in Fig. 11 dargestellt.

Der Wechsel vom vierten Gang in den fünften Gang erfolgt durch das Zuschalten des elektrischen Energieflusses zur weiteren elektrischen Maschine 16 durch elektronische Steuergeräte. Die Statorsegment 4.1 und Statorsegment 4.2 treiben weiterhin das Rotorsegment 3.3 und somit das mehrgängige Planetengetriebe an.

Im fünften Gang versetzt nach Zuschaltung des elektrischen Energieflusses zur weiteren elektrischen Maschine 16 diese weitere elektrische Maschine 16 über die Welle 11.1 das Sonnenrad 7.1 in eine Drehbewegung.

Zeitgleich wird die Zufuhr der elektrischen Leistung zu Statorsegment 4.1 und Statorsegment 4.2 durch elektronische Steuergeräte soweit abgesenkt, damit auch die Drehzahl von Rotorsegment 3.3 soweit abgesenkt, bis die Drehzahlen von Rotorsegment 3.3 und Welle 11.1 annähernd synchron sind.

Nachdem die Synchronisierung der Drehzahlen von Welle 11.1 und Rotorsegment 3.3 erfolgt ist, wird ihre Drehzahl bis zu der Drehzahl erhöht, die maximal durch die elektrische Maschine und die weitere elektrische Maschine 16 erreicht werden kann.

Die weitere elektrische Maschine 16 treibt über die Welle 11.1 das Sonnenrad 7.1 an. Die an der Welle 11.1 befestigte Rücklaufsperre 12.1 befindet sich im Freilauf. Weiterhin treibt das Rotorsegment 3.3 das Hohlrad 10.2 an. Die Rücklaufsperre 12.3 befindet sich im Freilauf.

Somit treibt das Sonnenrad 7.1 in diesem Schaltzustand über die Planetenräder 9 das Trägerrad 8.1 an. Das Trägerrad 8.1 treibt über die Welle 11.3 das Sonnenrad 7.2 an, welches gemeinsam mit dem Hohlrad 10.2 über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.1 entgegen des Drehsinns des Antriebs der Welle 11.5 wird durch die Rücklaufsperre 12.2 verhindert.

Dieser Schaltzustand der erfindungsgemäßen Antriebseinheit im fünften Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im vierten Gang bereit. Dieser Schaltzustand ist in Fig. 12 dargestellt.

Der Wechsel vom fünften in den sechsten Gang erfolgt durch Neupositionierung des Statorsegments 4.1 mit der Verschiebevorrichtung 21 so, dass es das Rotorsegment 3.2 antreiben kann, sobald durch elektronische Steuergeräte der elektrische Energiefluss von einer elektrischen Energiequelle zum Statorsegment 4.1 geschaltet wird.

Voraussetzung für die Möglichkeit der Neupositionierung des Statorsegments 4.1 ist die erfindungsgemäße Konstruktion und Anordnung der Haltevorrichtung 15. Diese greift erfindungsgemäß in einen ausreichend bemessenen Zwischenraum zwischen Rotorsegment 3.2 und Rotorsegment 3.3 ein. Sie ist so angeordnet, dass sie zudem in einen ausreichend bemessenen Zwischenraum zwischen die Bogensegmente des Stators, also Statorsegment 4.1 und Statorsegment 4.2, eingreift. Dies ermöglicht es, das Statorsegment 4.1 ungehindert an der Haltevorrichtung 15 vorbei mit der Verschiebevorrichtung 21 parallel zur Hauptachse 2 so neu zu positionieren, dass es das Rotorsegment 3.2 antreiben kann. Die Anordnung der Haltevorrichtung 15 im dritten Ausführungsbeispiel ist im Schaltzustand des sechsten Gangs in einer schematisierten Schnittdarstellung in Fig. 16 dargestellt.

Es ist erforderlich, während der Neupositionierung des Statorsegments 4.1 den elektrischen Energiefluss zum Statorsegment 4.1 durch elektronische Steuergeräte zu unterbrechen.

Das mehrgängige Planetengetriebe wird zu diesem Zeitpunkt zum Einen über das Statorsegment 4.2 und zum Anderen über die weitere elektrische Maschine 16 und damit über die Welle 11.1 angetrieben.

Im sechsten Gang wird durch elektronische Steuergeräte der elektrische Energiefluss von einer elektrischen Energiequelle zum Statorsegment 4.1 geschaltet. Dieses versetzt bei Zuschaltung des elektrischen Energieflusses das Rotorsegment 3.2 in eine Drehbewegung.

Die Drehzahl des Rotorsegments 3.2 erhöht sich. Zeitgleich wird die Zufuhr der elektrischen Leistung zum Statorsegment 4.2 und zur weiteren elektrischen Maschine 16 durch elektronische Steuergeräte soweit abgesenkt, damit auch die Drehzahl von Welle 11.1 und Rotorsegment 3.3 soweit abgesenkt, bis die Drehzahlen von Welle 11.1, Rotorsegment 3.2 und Rotorsegment 3.3 annähernd synchron sind.

Nachdem die Synchronisierung der Drehzahlen von Rotorsegment 3.2, Rotorsegment 3.3 und der Welle 11.1 erfolgt ist, wird ihre Drehzahl bis zu der Drehzahl erhöht, die maximal durch die elektrische Maschine und die weitere elektrische Maschine 16 erreicht werden kann.

Im sechsten Gang ist bei exakter Synchronisierung der Drehzahlen von Welle 11.1, Rotorsegment 3.2 und Rotorsegment 3.3 innerhalb der einfachen Planetengetriebe, Planetengetriebe 6.1 und Planetengetriebe 6.2, keine Drehbewegung der einzelnen Zahnräder zueinander mehr zu verzeichnen. Somit drehen sich die Welle 11.1, das einfache Planetengetriebe 6.1, die Welle 11.2, das einfache Planetengetriebe 6.2 und die Welle 11.5, welche im Ausführungsbeispiel die Abtriebswelle der erfindungsgemäßen Antriebseinheit ist, synchron um die Hauptachse 2.

Die weitere elektrische Maschine 16 treibt über die Welle 11.1 das Sonnenrad 7.1 an. Die an der Welle 11.1 befestigte Rücklaufsperre 12.1 befindet sich im Freilauf. Weiterhin treibt das Rotorsegment 3.2 das Hohlrad 10.1 an. Die Rücklaufsperre 12.2 befindet sich im Freilauf. Weiterhin treibt das Rotorsegment 3.3 das Hohlrad 10.2 an. Die Rücklaufsperre 12.3 befindet sich im Freilauf.

Somit treiben das Sonnenrad 7.2, das durch das Trägerrad 8.1, welches wiederum durch das Sonnenrad 7.1 und das Hohlrad 10.1 angetrieben wird, und das Hohlrad 10.2 in diesem Schaltzustand über die Planetenräder 9 das Trägerrad 8.2 und somit die Welle 11.5 an, welche im Ausführungsbeispiel die Abtriebswelle der erfindungsgemäßen Antriebseinheit ist.

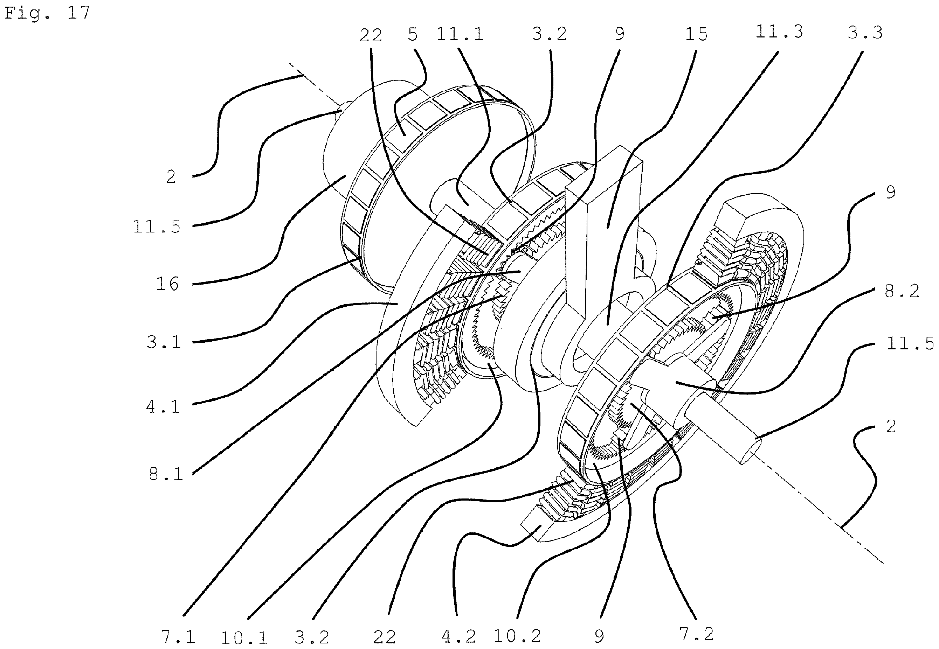

Dieser Schaltzustand der erfindungsgemäßen Antriebseinheit im sechsten Gang stellt an der Welle 11.5 das geringste Drehmoment in Bezug auf die Summe der Leistung der elektrischen Maschine und der weiteren elektrischen Maschine 16, jedoch bei höchstmöglicher Drehzahl an der Welle 11.5 bereit. Dieser Schaltzustand ist in Fig. 13 und in perspektivischer Darstellung in Fig. 17 dargestellt.

Das beschriebene dritte Ausführungsbeispiel der erfindungsgemäßen Antriebseinheit ermöglicht in dieser Ausgestaltung die in Tabelle 3 dargestellten Übersetzungsverhältnisse und Stufensprünge zwischen den Gängen.

**Tabelle 3**

| Gang | Übersetzungsverhältnis | Stufensprung zum nächsten Gang |
|---|---|---|
| 1 | 1 zu ~0,146 | ~1,618 |
| 2 | 1 zu ~0,236 | ~1,618 |
| 3 | 1 zu ~0,382 | ~1,618 |
| 4 | 1 zu ~0,618 | ~1,618 |
| 6 | 1 zu 1 | - |

Die Größe der Stufensprünge vom ersten in den zweiten, vom zweiten in den dritten und vom dritten in den vierten Gang und vom vierten in den sechsten Gang entsprechen näherungsweise 1,618. Der fünfte Gang stellt einen sinnvollen Zwischengang dar. Er wurde in der Beschreibung des Ausführungsbeispiels aus diesem Grunde berücksichtigt. Wird er bei der Darstellung der Übersetzungsverhältnisse der Gänge und der Stufensprünge zwischen den Gängen berücksichtigt, ergeben sich Größen der Stufensprünge, wie in Tabelle 4 dargestellt. Insgesamt ergibt sich eine Spreizung für das mehrgängige Planetengetriebe der erfindungsgemäßen Antriebseinheit von näherungsweise 6,854.

**Tabelle 4**

| Gang | Übersetzungsverhältnis | Stufensprung zum nächsten Gang |
|---|---|---|
| 1 | 1 zu ~0,146 | ~1,618 |
| 2 | 1 zu ~0,236 | ~1,618 |
| 3 | 1 zu ~0,382 | ~1,618 |
| 4 | 1 zu ~0,618 | ~1,234 |
| 5 | 1 zu ~0,763 | ~1,310 |
| 6 | 1 zu 1 | - |

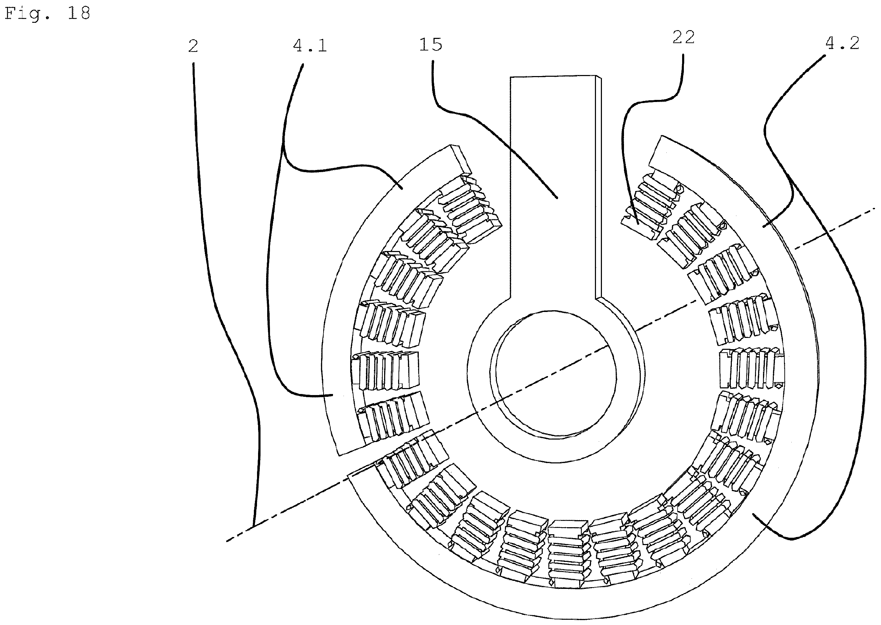

Ein viertes Ausführungsbeispiel der erfindungsgemäßen Antriebseinheit mit sechs Gängen wird im Folgenden anhand der Fig. 14, im Schaltzustand des fünften Gangs, und anhand der Fig. 18 und Fig. 19 erläutert und dargestellt. Der Unterschied im Aufbau zum dritten Ausführungsbeispiel besteht lediglich darin, dass anstatt der Rücklaufsperre 12.2 eine Bremse 13 an der Haltevorrichtung 15 befestigt ist. Dadurch wird die Funktionalität um eine Möglichkeit erweitert, auch im fünften Gang Rekuperation zu nutzen. Die Steuerung der Bremse 13 erfolgt durch elektronische Steuergeräte. Der Betrieb und auch der Wechsel zwischen den Schaltzuständen der erfindungsgemäßen Antriebseinheit im vierten Ausführungsbeispiel gestaltet sich wie folgt.

Im vierten Ausführungsbeispiel besteht die erfindungsgemäße Antriebseinheit aus einem Gehäuse 1, in den Fig. 14, Fig. 18 und Fig. 19 nicht dargestellt, einer elektrischen Maschine, einer weiteren elektrischen Maschine 16 nach Stand der Technik und einem mehrgängigen Planetengetriebe, bestehend aus dem einfachen Planetengetriebe 6.1 und dem einfachen Planetengetriebe 6.2, wobei das mehrgängige Planetengetriebe über Rotorsegment 3.1, Rotorsegment 3.2 und Rotorsegment 3.3 von der elektrischen Maschine und weiterhin über die Welle 11.1 von der weiteren elektrischen Maschine 16 angetrieben wird. Weiterer Bestandteil der erfindungsgemäßen Antriebseinheit ist eine Haltevorrichtung 15. Diese ist im vierten Ausführungsbeispiel in Fig. 18 dargestellt.

Die elektrische Maschine besteht aus einem Stator, welcher aus Statorsegment 4.1 und Statorsegment 4.2 besteht, und weiterhin aus einem Rotor, welcher aus Rotorsegment 3.1, Rotorsegment 3.2 und Rotorsegment 3.3 besteht. Statorsegment 4.1 und Statorsegment 4.2 der elektrischen Maschine sind außerhalb des Radius von Rotorsegment 3.1, Rotorsegment 3.2 und Rotorsegment 3.3 der elektrischen Maschine angeordnet. Auf Statorsegment 4.1 und Statorsegment 4.2 sind elektrische Spulen 22 und auf Rotorsegment 3.1, Rotorsegment 3.2 und Rotorsegment 3.3 sind Permanentmagnete 5 angeordnet. Das Statorsegment 4.1 verfügt im Ausführungsbeispiel über sechs elektrische Spulen 22, das Statorsegment 4.2 verfügt hingegen über fünfzehn elektrische Spulen 22 wie in Fig. 19 schematisch dargestellt.

Weiterhin besteht die elektrische Maschine aus einer Verschiebevorrichtung 21. Die Verschiebevorrichtung 21 ist aus vier Gewindespindeln 17 mit elektrischem Servomotor 18, Führungen 20, und Befestigungen 19 aufgebaut.

Die Gesamtnennleistung der elektrischen Maschine der erfindungsgemäßen Antriebseinheit sowie der weiteren elektrischen Maschine 16, ist verteilt, wie in Tabelle 5 dargestellt.

**Tabelle 5**

| | Statorsegment 4.2 mit | Statorsegment 4.1 mit | weitere |
|---|---|---|---|
| | Rotorsegment 3.1, | Rotorsegment 3.1, | elektrische |
| | Rotorsegment 3.2 oder | Rotorsegment 3.2 oder | Maschine 16 |
| | Rotorsegment 3.3 | Rotorsegment 3.3 | |
| Berechneter Anteil an der elektrischen Gesamtnennlei stung | 61,8% | 23,6% | 14,6% |

Dabei sind die maximal erreichbaren Drehzahlen von Rotorsegment 3.1, Rotorsegment 3.2 und Rotorsegment 3.3 sowie die Drehzahl der Welle 11.5, welche im Ausführungsbeispiel die Abtriebswelle der erfindungsgemäßen Antriebseinheit darstellt, und die Drehzahl der der Welle 11.1, welche im Ausführungsbeispiel die Abtriebswelle der weiteren elektrischen Maschine 16 darstellt, gleich.

Das mehrgängige Planetengetriebe besteht im Ausführungsbeispiel aus dem einfachen Planetengetriebe 6.1 und dem einfachen Planetengetriebe 6.2, jeweils in einem Planetengetriebegehäuse. Das einfache Planetengetriebe 6.1 besteht aus Sonnenrad 7.1, Hohlrad 10.1 und Trägerrad 8.1 mit Planetenrädern 9, in den Fig. 14, Fig. 18 und Fig. 19 nicht dargestellt. Das einfache Planetengetriebe 6.2 besteht aus Sonnenrad 7.2, Hohlrad 10.2 und Trägerrad 8.2 mit Planetenrädern 9.

Weiterhin besteht das mehrgängige Planetengetriebe aus der Welle 11.1, der Welle 11.2, der Welle 11.3, der Welle 11.4 und der Welle 11.5 sowie Rücklaufsperre 12.1, Rücklaufsperre 12.3 und Bremse 13.

Im vorliegenden Ausführungsbeispiel beträgt das Verhältnis der Anzahl der Zähne von Sonnenrad 7.1 zur Anzahl der Zähne von Hohlrad 10.1 im einfachen Planetengetriebe 6.1 und das Verhältnis der Anzahl der Zähne von Sonnenrad 7.2 zur Anzahl der Zähne von Hohlrad 10.2 im Planetengetriebe 6.2 1 zu ~1,618.

Die Welle 11.1, die als Hohlwelle ausgebildet ist, und zudem die Abtriebswelle der weiteren elektrischen Maschine 16 nach Stand der Technik ist, ist drehbar auf der Welle 11.5 gelagert und verbindet Rotorsegment 3.1 des Rotors mit dem Sonnenrad 7.1. Die Welle 11.1 ist zugleich mit der Rücklaufsperre 12.1 verbunden. Die Rücklaufsperre 12.1 verfügt weiterhin über eine feste Verbindung mit dem Gehäuse 1. Weiterhin verfügt auch die weitere elektrische Maschine 16 über eine feste Verbindung mit dem Gehäuse 1.

Die Welle 11.2, die als Hohlwelle ausgebildet ist, in Ausbildung eines Planetengetriebegehäuses, ist einerseits drehbar auf der Welle 11.1 und andererseits drehbar auf der Welle 11.3 gelagert. Weiterhin sind an Welle 11.2 das Hohlrad 10.1 und das Rotorsegment 3.2 des Rotors befestigt. Die Welle 11.2 ist zugleich mit der Bremse 13 verbunden. Die Bremse 13 ist zudem fest mit der Haltevorrichtung 15 verbunden, welche wiederum fest mit dem Gehäuse 1 verbunden ist.

Die Welle 11.3, die als Hohlwelle ausgebildet ist, ist drehbar auf der Welle 11.5 gelagert und verbindet das Trägerrad 8.1 mit dem Sonnenrad 7.2.

Die Welle 11.4, die als Hohlwelle ausgebildet ist, in Ausbildung eines Planetengetriebegehäuses, ist einerseits drehbar auf der Welle 11.3 und andererseits drehbar auf der Welle 11.5 gelagert. Weiterhin sind an Welle 11.4 das Hohlrad 10.2 und das Rotorsegment 3.3 des Rotors befestigt. Die Welle 11.4 ist zugleich mit der Rücklaufsperre 12.3 verbunden. Die Rücklaufsperre 12.3 ist zudem fest mit dem Gehäuse 1 verbunden.

Die Welle 11.5 ist im Ausführungsbeispiel die Abtriebswelle der erfindungsgemäßen Antriebseinheit. Sie ist auf der Hauptachse 2 angeordnet und drehbar im Gehäuse 1 gelagert. Die Welle 11.5 ist fest mit dem Trägerrad 8.2 verbunden.

Das einfache Planetengetriebe 6.1 des mehrgängigen Planetengetriebes wird bei dieser Ausführung der erfindungsgemäßen Antriebseinheit über Rotorsegment 3.1 und Rotorsegment 3.2 und die weitere elektrische Maschine 16 angetrieben. Das Rotorsegment 3.1 ist in diesem Ausführungsbeispiel fest über Welle 11.1 mit dem Sonnenrad 7.1 verbunden. Die Welle 11.1 ist zugleich die Abtriebswelle der weiteren elektrischen Maschine 16. Das Rotorsegment 3.2 ist in diesem Ausführungsbeispiel fest über Welle 11.2 mit dem Hohlrad 10.1 verbunden.

Das einfache Planetengetriebe 6.2 des mehrgängigen Planetengetriebes wird bei dieser Ausführung der erfindungsgemäßen Antriebseinheit über das Rotorsegment 3.3 und die Welle 11.3 angetrieben. Das Rotorsegment 3.3 ist in diesem Ausführungsbeispiel fest über Welle 11.4 mit dem Hohlrad 10.2 verbunden. Die Welle 11.3 ist in diesem Ausführungsbeispiel fest mit dem Sonnenrad 7.2 verbunden.

Die Richtung des Drehsinns des Antriebs von Rotorsegment 3.1, Rotorsegment 3.2 und Rotorsegment 3.3 entspricht der Richtung des Drehsinns des Antriebs der Welle 11.5, welche die Abtriebswelle der erfindungsgemäßen Antriebseinheit darstellt.

Die Richtung des Drehsinns des Antriebs der Welle 11.1, welche die Abtriebswelle der weiteren elektrischen Maschine 16 darstellt, entspricht der Richtung des Drehsinns des Antriebs der Welle 11.5, welche die Abtriebswelle der erfindungsgemäßen Antriebseinheit darstellt.

Rücklaufsperre 12.1 und Rücklaufsperre 12.3 verhindern, dass sich die Rotorsegment 3.1 und Rotorsegment 3.3 und alle mit ihnen fest verbundenen Bestandteile von Planetengetriebe 6.1 und Planetengetriebe 6.2 des mehrgängigen Planetengetriebes entgegen der Richtung des Drehsinns des Antriebs der Welle 11.5 drehen können.

Die Bremse 13 ermöglicht das Blockieren der Welle 11.2, des Rotorsegments 3.2 und damit des Hohlrads 10.1 des einfachen Planetengetriebes 6.1 des mehrgängigen Planetengetriebes, so dass sie sich nicht entgegen der Richtung des Drehsinns des Antriebs der Welle 11.5 drehen können.

Statorsegment 4.1 und Statorsegment 4.2 des Stators sind jeweils an einer Befestigung 19 der Verschiebevorrichtung 21 befestigt. Jede Befestigung 19 ist parallel zur Hauptachse 2 verschiebbar in einer Führung 20 gelagert, welche fest mit dem Gehäuse 1 verbunden ist. Jede Befestigung 19 weist zwei Innengewinde auf, durch welche jeweils eine Gewindespindel 17, welche parallel zur Hauptachse 2 angeordnet ist, läuft. Die jeweilige Gewindespindel 17 ist einerseits drehbar im Gehäuse 1 gelagert und andererseits fest mit einem Servomotor 18 verbunden, welcher wiederum fest mit dem Gehäuse 1 verbunden ist. Die Steuerung des jeweiligen Servomotors 18 erfolgt durch elektronische Steuergeräte. Je nach benötigter Bewegungsrichtung von Statorsegment 4.1 und Statorsegment 4.2 wird diese durch Links- oder Rechtslauf der jeweils zugeordneten Servomotoren 18 sichergestellt.

Die Funktionsweise der erfindungsgemäßen Antriebseinheit im vierten Ausführungsbeispiel wird im Folgenden anhand ihrer verschiedenen Schaltzustände und deren Übergängen erläutert. Dabei erfolgt die Beschreibung der Abfolge der Schaltzustände vom ersten Gang mit dem höchsten Drehmoment an der Welle 11.5, welche die Abtriebswelle der erfindungsgemäßen Antriebseinheit darstellt, in Bezug auf die Leistung der elektrischen Maschine und der weiteren elektrischen Maschine 16 bis zum sechsten Gang mit dem geringsten Drehmoment an der Welle 11.5 in Bezug auf die Leistung der elektrischen Maschine und der weiteren elektrischen Maschine 16.

Im ersten Gang sind Statorsegment 4.1 und Statorsegment 4.2 so positioniert, dass sie das Rotorsegment 3.1 antreiben, sobald durch elektronische Steuergeräte der elektrische Energiefluss von einer elektrischen Energiequelle zu Statorsegment 4.1 und Statorsegment 4.2 geschaltet wird. Diese versetzen bei Zuschaltung des elektrischen Energieflusses das Rotorsegment 3.1 gemeinsam mit der weiteren elektrischen Maschine 16, zu der zeitgleich der elektrische Energiefluss von einer elektrischen Energiequelle durch elektronische Steuergeräte geschaltet wird, in eine Drehbewegung. Dies erfolgt bis zu der Drehzahl, die maximal durch die elektrische Maschine und die weitere elektrische Maschine 16 erreicht werden kann.

Das Rotorsegment 3.1 und die weitere elektrische Maschine 16 treiben über die Welle 11.1 das Sonnenrad 7.1 an. Die an der Welle 11.1 angeordnete Rücklaufsperre 12.1 befindet sich im Freilauf. Das Hohlrad 10.1 wird durch die Bremse 13, welche durch elektronische Steuergeräte aktiviert ist und über die Haltevorrichtung 15 über eine feste Verbindung mit dem Gehäuse 1 verfügt, blockiert.

Somit treibt das Sonnenrad 7.1 in diesem Schaltzustand über die Planetenräder 9 das Trägerrad 8.1 und damit die Welle 11.3 an. Die Welle 11.3 treibt das Sonnenrad 7.2 an, welches über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.2 entgegen der Richtung des Drehsinns des Antriebs der Welle 11.5 wird durch die Rücklaufsperre 12.3 verhindert.

Dieser Schaltzustand der erfindungsgemäßen Antriebseinheit stellt an der Welle 11.5 das maximale Drehmoment in Bezug auf die Summe der Leistung der elektrischen Maschine und der weiteren elektrischen Maschine 16 im ersten Gang bereit.

Der Wechsel vom ersten Gang in den zweiten Gang erfolgt durch Neupositionierung von Statorsegment 4.1 und Statorsegment 4.2 mit der Verschiebevorrichtung 21 so, dass sie das Rotorsegment 3.2 antreiben können, sobald durch elektronische Steuergeräte der elektrische Energiefluss von einer elektrischen Energiequelle zu Statorsegment 4.1 und Statorsegment 4.2 geschaltet wird.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen.

Im zweiten Gang wird durch elektronische Steuergeräte der elektrische Energiefluss von einer elektrischen Energiequelle zu Statorsegment 4.1 und Statorsegment 4.2 geschaltet. Vor dem Zuschalten des elektrischen Energieflusses zu Statorsegment 4.1 und Statorsegment 4.2 wird durch elektronische Steuergeräte der elektrische Energiefluss von einer elektrischen Energiequelle zur weiteren elektrischen Maschine 16 unterbrochen. Durch elektronische Steuergeräte wird die Bremse 13 gelöst. Statorsegment 4.1 und Statorsegment 4.2 versetzen das Rotorsegment 3.2 in eine Drehbewegung.

Das Rotorsegment 3.2 treibt das Hohlrad 10.1 an. Die Drehzahl des Hohlrades 10.1 erhöht sich. Das führt dazu, dass das Sonnenrad 7.1 negativ beschleunigt wird und zeitgleich eine Erhöhung der Drehzahl des Trägerrades 8.1, welches durch das Hohlrad 10.1 über die Planetenräder 9 angetrieben wird, zu verzeichnen ist. Da das Sonnenrad 7.1 nicht mehr durch das Rotorsegment 3.1 und die weitere elektrische Maschine 16 angetrieben wird, verringert sich die Drehzahl des Sonnenrades 7.1 bis zum Stillstand. Der Rücklauf des Sonnenrades 7.1 entgegen des Drehsinns des Antriebs der Welle 11.5 wird durch die Rücklaufsperre 12.1 verhindert. Die Drehzahl des Trägerrades 8.1 erhöht sich. Dies erfolgt bis zu der Drehzahl, die maximal durch die elektrische Maschine erreicht werden kann.

Das Trägerrad 8.1 treibt über die Welle 11.3 das Sonnenrad 7.2 an, welches über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.2 entgegen des Drehsinns des Antriebs der Welle 11.5 wird durch die Rücklaufsperre 12.3 verhindert.

Dieser Schaltzustand der erfindungsgemäßen Antriebseinheit im zweiten Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im ersten Gang bereit.

Der Wechsel vom zweiten Gang in den dritten Gang erfolgt durch Neupositionierung des Statorsegments 4.1 mit der Verschiebevorrichtung 21 so, dass es das Rotorsegment 3.1 antreiben kann, sobald durch elektronische Steuergeräte der elektrische Energiefluss von einer elektrischen Energiequelle zum Statorsegment 4.1 geschaltet wird.

Es ist erforderlich, während der Neupositionierung des Statorsegments 4.1 den elektrischen Energiefluss zum Statorsegment 4.1 durch elektronische Steuergeräte zu unterbrechen.

Das Statorsegment 4.2 treibt über das Rotorsegment 3.2 weiterhin das mehrgängige Planetengetriebe an.

Im dritten Gang wird durch elektronische Steuergeräte der elektrische Energiefluss von einer elektrischen Energiequelle zum Statorsegment 4.1 geschaltet. Dieses versetzt bei Zuschaltung des elektrischen Energieflusses das Rotorsegment 3.1 in eine Drehbewegung. Zeitgleich wird der elektrische Energiefluss von einer elektrischen Energiequelle durch elektronische Steuergeräte zur weiteren elektrischen Maschine 16 geschaltet. Somit treiben das Rotorsegment 3.1 und die weitere elektrische Maschine 16 über die Welle 11.1 das Sonnenrad 7.1 an.

Die Drehzahl des Rotorsegments 3.1 erhöht sich. Zeitgleich wird die Zufuhr der elektrischen Leistung zum Statorsegment 4.2 durch elektronische Steuergeräte soweit abgesenkt, damit auch die Drehzahl von Rotorsegment 3.2 soweit abgesenkt, bis die Drehzahlen von Rotorsegment 3.1 und Rotorsegment 3.2 annähernd synchron sind. Nachdem die Synchronisierung der Drehzahlen von Rotorsegment 3.1 und Rotorsegment 3.2 erfolgt ist, wird ihre Drehzahl bis zu der Drehzahl erhöht, die maximal durch die elektrische Maschine und die weitere elektrische Maschine 16 erreicht werden kann.

Das Rotorsegment 3.1 und die weitere elektrische Maschine 16 treiben weiterhin über die Welle 11.1 das Sonnenrad 7.1 an. Die an der Welle 11.1 befestigte Rücklaufsperre 12.1 befindet sich im Freilauf. Weiterhin treibt das Rotorsegment 3.2 das Hohlrad 10.1 an. Die Bremse 13 ist weiterhin gelöst.

Somit treiben das Sonnenrad 7.1 und das Hohlrad 10.1 in diesem Schaltzustand über die Planetenräder 9 das Trägerrad 8.1 an. Das Trägerrad 8.1 treibt über die Welle 11.3 das Sonnenrad 7.2 an, welches über die Planetenräder 9 wiederum das Trägerrad 8.2 und somit die Welle 11.5 antreibt, welche im Ausführungsbeispiel die Abtriebswelle der erfindungsgemäßen Antriebseinheit ist. Ein Rücklauf des Hohlrades 10.2 entgegen des Drehsinns des Antriebs der Welle 11.5 wird durch die Rücklaufsperre 12.3 verhindert.

Dieser Schaltzustand der erfindungsgemäßen Antriebseinheit im dritten Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im zweiten Gang bereit.

Der Wechsel vom dritten Gang in den vierten Gang erfolgt durch Neupositionierung von Statorsegment 4.1 und Statorsegment 4.2 mit der Verschiebevorrichtung 21 so, dass sie das Rotorsegment 3.3 antreiben können, sobald durch elektronische Steuergeräte der elektrische Energiefluss von einer elektrischen Energiequelle zu Statorsegment 4.1 und Statorsegment 4.2 geschaltet wird.

Voraussetzung für die Möglichkeit der Neupositionierung von Statorsegment 4.1 und Statorsegment 4.2 ist die erfindungsgemäße Konstruktion und Anordnung der Haltevorrichtung 15. Diese greift erfindungsgemäß in einen ausreichend bemessenen Zwischenraum zwischen Rotorsegment 3.2 und Rotorsegment 3.3 ein. Sie ist so angeordnet, dass sie zudem in einen ausreichend bemessenen Zwischenraum zwischen die Bogensegmente des Stators, also Statorsegment 4.1 und Statorsegment 4.2, eingreift. Dies ermöglicht es, Statorsegment 4.1 und Statorsegment 4.2 ungehindert an der Haltevorrichtung 15 vorbei mit der Verschiebevorrichtung 21 parallel zur Hauptachse 2 so neu zu positionieren, dass sie das Rotorsegment 3.3 antreiben können.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen. Zeitgleich wird durch elektronische Steuergeräte der elektrische Energiefluss von einer elektrischen Energiequelle zur weiteren elektrischen Maschine 16 unterbrochen.

Im vierten Gang wird durch elektronische Steuergeräte der elektrische Energiefluss von einer elektrischen Energiequelle zu Statorsegment 4.1 und Statorsegment 4.2 geschaltet. Statorsegment 4.1 und Statorsegment 4.2 versetzen das Rotorsegment 3.3 in eine Drehbewegung.

Das Rotorsegment 3.3 treibt das Hohlrad 10.2 an. Die Rücklaufsperre 12.3 befindet sich im Freilauf. Das Sonnenrad 7.1 und das Hohlrad 10.1 werden nicht mehr angetrieben. Die Drehzahl des Hohlrades 10.2 erhöht sich. Das führt dazu, dass das Sonnenrad 7.2 und somit das über die Welle 11.3 verbundene Trägerrad 8.1 und in Folge auch Sonnenrad 7.1 und Hohlrad 10.1 negativ beschleunigt werden und zeitgleich eine Erhöhung der Drehzahl des Trägerrades 8.2, welches durch das Hohlrad 10.2 über die Planetenräder 9 angetrieben wird, zu verzeichnen ist. Die Drehzahlen des Sonnenrades 7.1 und des Hohlrades 10.1 verringern sich bis zum Stillstand. Der Rücklauf des Sonnenrades 7.1 wird durch die Rücklaufsperre 12.1 verhindert. Das Hohlrad 10.1 wird durch die Bremse 13, welche durch elektronische Steuergeräte nun aktiviert wird und welche über die Haltevorrichtung 15 über eine feste Verbindung mit dem Gehäuse 1 verfügt, blockiert. Die Drehzahl des Trägerrades 8.2 erhöht sich weiter.

Das Trägerrad 8.2 treibt die Welle 11.5 an, welche im Ausführungsbeispiel die Abtriebswelle der erfindungsgemäßen Antriebseinheit ist.

Die Drehzahl der Welle 11.5 wird bis zu der Drehzahl erhöht, welche maximal durch die elektrische Maschine erreicht werden kann.

Dieser Schaltzustand der erfindungsgemäßen Antriebseinheit im vierten Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im dritten Gang bereit.

Der Wechsel vom vierten Gang in den fünften Gang erfolgt durch das Zuschalten des elektrischen Energieflusses zur weiteren elektrischen Maschine 16 durch elektronische Steuergeräte. Statorsegment 4.1 und Statorsegment 4.2 treiben weiterhin das Rotorsegment 3.3 und somit das mehrgängige Planetengetriebe an.

Im fünften Gang versetzt nach Zuschaltung des elektrischen Energieflusses zur weiteren elektrischen Maschine 16 diese weitere elektrische Maschine 16 über die Welle 11.1 das Sonnenrad 7.1 in eine Drehbewegung.

Zeitgleich wird die Zufuhr der elektrischen Leistung zu Statorsegment 4.1 und Statorsegment 4.2 durch elektronische Steuergeräte soweit abgesenkt, damit auch die Drehzahl von Rotorsegment 3.3 soweit abgesenkt, bis die Drehzahlen von Rotorsegment 3.3 und Welle 11.1 annähernd synchron sind.

Nachdem die Synchronisierung der Drehzahlen von Welle 11.1 und Rotorsegment 3.3 erfolgt ist, wird ihre Drehzahl bis zu der Drehzahl erhöht, die maximal durch die elektrische Maschine und die weitere elektrische Maschine 16 erreicht werden kann.

Die weitere elektrische Maschine 16 treibt über die Welle 11.1 das Sonnenrad 7.1 an. Die an der Welle 11.1 befestigte Rücklaufsperre 12.1 befindet sich im Freilauf. Weiterhin treibt das Rotorsegment 3.3 das Hohlrad 10.2 an. Die Rücklaufsperre 12.3 befindet sich im Freilauf. Das Hohlrad 10.1 wird durch die Bremse 13 weiterhin blockiert.

Somit treibt das Sonnenrad 7.1 in diesem Schaltzustand über die Planetenräder 9 das Trägerrad 8.1 an. Das Trägerrad 8.1 treibt über die Welle 11.3 das Sonnenrad 7.2 an, welches gemeinsam mit dem Hohlrad 10.2 über die Planetenräder 9 wiederum das Trägerrad 8.2 und somit die Welle 11.5 antreibt, welche im Ausführungsbeispiel die Abtriebswelle der erfindungsgemäßen Antriebseinheit ist.

Dieser Schaltzustand der erfindungsgemäßen Antriebseinheit im fünften Gang stellt an der Welle 11.5 ein geringeres Drehmoment in Bezug auf die Summe der Leistung der elektrischen Maschine und der weiteren elektrischen Maschine 16, jedoch bei höherer Drehzahl an der Welle 11.5 als im vierten Gang bereit.

Der Wechsel vom fünften in den sechsten Gang erfolgt durch Neupositionierung des Statorsegments 4.1 mit der Verschiebevorrichtung 21 so, dass es das Rotorsegment 3.2 antreiben kann, sobald durch elektronische Steuergeräte der elektrische Energiefluss von einer elektrischen Energiequelle zum Statorsegment 4.1 geschaltet wird.

Voraussetzung für die Möglichkeit der Neupositionierung des Statorsegments 4.1 ist die erfindungsgemäße Konstruktion und Anordnung der Haltevorrichtung 15. Diese greift in einen ausreichend bemessenen Zwischenraum zwischen Rotorsegment 3.2 und Rotorsegment 3.3 ein. Sie ist so angeordnet, dass sie zudem in einen ausreichend bemessenen Zwischenraum zwischen die Bogensegmente des Stators, also Statorsegment 4.1 und Statorsegment 4.2, eingreift. Dies ermöglicht es, das Statorsegment 4.1 ungehindert an der Haltevorrichtung 15 vorbei mit der Verschiebevorrichtung 21 parallel zur Hauptachse 2 so neu zu positionieren, dass es das Rotorsegment 3.2 antreiben kann.

Es ist erforderlich, während der Neupositionierung des Statorsegments 4.1 den elektrischen Energiefluss zum Statorsegment 4.1 durch elektronische Steuergeräte zu unterbrechen.

Das mehrgängige Planetengetriebe wird zu diesem Zeitpunkt zum Einen über das Statorsegment 4.2 und zum Anderen über die weitere elektrische Maschine 16 und damit über die Welle 11.1 angetrieben.

Im sechsten Gang wird durch elektronische Steuergeräte der elektrische Energiefluss von einer elektrischen Energiequelle zum Statorsegment 4.1 geschaltet. Dieses versetzt bei Zuschaltung des elektrischen Energieflusses das Rotorsegment 3.2 in eine Drehbewegung. Zeitgleich wird durch elektronische Steuergeräte die Bremse 13 gelöst.

Die Drehzahl des Rotorsegments 3.2 erhöht sich. Zeitgleich wird die Zufuhr der elektrischen Leistung zum Statorsegment 4.2 und zur weiteren elektrischen Maschine 16 durch elektronische Steuergeräte soweit abgesenkt, damit auch die Drehzahl von Welle 11.1 und Rotorsegment 3.3 soweit abgesenkt, bis die Drehzahlen von Welle 11.1, Rotorsegment 3.2 und Rotorsegment 3.3 annähernd synchron sind.

Nachdem die Synchronisierung der Drehzahlen von Rotorsegment 3.2, Rotorsegment 3.3 und der Welle 11.1 erfolgt ist, wird ihre Drehzahl bis zu der Drehzahl erhöht, die maximal durch die elektrische Maschine und die weitere elektrische Maschine 16 erreicht werden kann.

Im sechsten Gang ist bei exakter Synchronisierung der Drehzahlen von Welle 11.1, Rotorsegment 3.2 und Rotorsegment 3.3 innerhalb von Planetengetriebe 6.1 und Planetengetriebe 6.2 keine Drehbewegung der einzelnen Zahnräder zueinander mehr zu verzeichnen. Somit drehen sich die Welle 11.1, das einfache Planetengetriebe 6.1, die Welle 11.2, das einfache Planetengetriebe 6.2 und die Welle 11.5, welche im Ausführungsbeispiel die Abtriebswelle der erfindungsgemäßen Antriebseinheit ist, synchron um die Hauptachse 2.

Die weitere elektrische Maschine 16 treibt über die Welle 11.1 das Sonnenrad 7.1 an. Die an der Welle 11.1 befestigte Rücklaufsperre 12.1 befindet sich im Freilauf. Weiterhin treibt das Rotorsegment 3.2 das Hohlrad 10.1 an. Die Rücklaufsperre 12.2 befindet sich im Freilauf. Weiterhin treibt das Rotorsegment 3.3 das Hohlrad 10.2 an. Die Bremse 13 ist gelöst.

Somit treiben das Sonnenrad 7.2, das durch das Trägerrad 8.1, welches wiederum durch das Sonnenrad 7.1 und das Hohlrad 10.1 angetrieben wird, und das Hohlrad 10.2 in diesem Schaltzustand über die Planetenräder 9 das Trägerrad 8.2 und somit die Welle 11.5 an, welche im Ausführungsbeispiel die Abtriebswelle der erfindungsgemäßen Antriebseinheit ist.

Dieser Schaltzustand der erfindungsgemäßen Antriebseinheit im sechsten Gang stellt an der Welle 11.5 das geringste Drehmoment in Bezug auf die Summe der Leistung der elektrischen Maschine und der weiteren elektrischen Maschine 16, jedoch bei höchstmöglicher Drehzahl an der Welle 11.5 bereit.

Das beschriebene vierte Ausführungsbeispiel der erfindungsgemäßen Antriebseinheit ermöglicht in dieser Ausgestaltung die in Tabelle 6 dargestellten Übersetzungsverhältnisse und Stufensprünge zwischen den Gängen.

**Tabelle 6**

| Gang | Übersetzungsverhältnis | Stufensprung zum nächsten Gang |
|---|---|---|
| 1 | 1 zu ~0,146 | ~1,618 |
| 2 | 1 zu ~0,236 | ~1,618 |
| 3 | 1 zu ~0,382 | ~1,618 |
| 4 | 1 zu ~0,618 | ~1,618 |
| 6 | 1 zu 1 | - |

Die Größe der Stufensprünge vom ersten in den zweiten, vom zweiten in den dritten und vom dritten in den vierten Gang und vom vierten in den sechsten Gang entsprechen näherungsweise 1,618. Der fünfte Gang stellt einen sinnvollen Zwischengang dar. Er wurde in der Beschreibung des Ausführungsbeispiels aus diesem Grunde berücksichtigt. Wird er bei der Darstellung der Übersetzungsverhältnisse der Gänge und der Stufensprünge zwischen den Gängen berücksichtigt, ergeben sich Größen der Stufensprünge, wie in Tabelle 7 dargestellt. Insgesamt ergibt sich eine Spreizung von näherungsweise 6,854.

**Tabelle 7**

| Gang | Übersetzungsverhältnis | Stufensprung zum nächsten Gang |
|---|---|---|
| 1 | 1 zu ~0,146 | ~1,618 |
| 2 | 1 zu ~0,236 | ~1,618 |
| 3 | 1 zu ~0,382 | ~1,618 |
| 4 | 1 zu ~0,618 | ~1,234 |
| 5 | 1 zu ~0,763 | ~1,310 |
| 6 | 1 zu 1 | - |

Der fünfte Gang bietet in diesem Ausführungsbeispiel eine Besonderheit gegenüber dem dritten Ausführungsbeispiel. Da die Bremse 13 im vierten Ausführungsbeispiel die Rücklaufsperre 12.2 im dritten Ausführungsbeispiel ersetzt, wird in diesem Gang Rekuperation möglich, da durch den Einsatz der Bremse 13 das Hohlrad 10.1 in beide Drehrichtungen sowohl angetrieben als auch blockiert werden kann. Ohne Einsatz der Bremse 13, wie im dritten Ausführungsbeispiel, ist Rekuperation ausschließlich im sechsten Gang möglich.

Ein fünftes Ausführungsbeispiel der erfindungsgemäßen Antriebseinheit mit drei Gängen wird im Folgenden anhand der Fig. 20 bis 22 und Fig. 26 erläutert und dargestellt und besteht aus einem Gehäuse 1, in den Fig. 20 bis 22 und Fig. 26 nicht dargestellt, einer elektrischen Maschine und einem mehrgängigen Planetengetriebe, bestehend aus einem einfachen Planetengetriebe 6.1, wobei dieses über Rotorsegment 3.1 und Rotorsegment 3.2 von der elektrischen Maschine angetrieben wird.

Die elektrische Maschine besteht aus einem Stator, welcher aus Statorsegment 4.1 und Statorsegment 4.2 besteht, und weiterhin aus einem Rotor, welcher aus Rotorsegment 3.1 und Rotorsegment 3.2 besteht. Das Statorsegment 4.1 der elektrischen Maschine ist innerhalb des Radius von Rotorsegment 3.1 und Rotorsegment 3.2 der elektrischen Maschine angeordnet. Das Statorsegment 4.2 der elektrischen Maschine ist außerhalb des Radius von Rotorsegment 3.1 und Rotorsegment 3.2 der elektrischen Maschine angeordnet. Auf Statorsegment 4.1 und Statorsegment 4.2 sind elektrische Spulen 22, in den Fig. 20 bis 22 nicht dargestellt, und auf Rotorsegment 3.1 und Rotorsegment 3.2 sind Permanentmagnete 5, in den Fig. 20 bis 22 nicht dargestellt, angeordnet. Weiterhin besteht die elektrische Maschine aus einer Verschiebevorrichtung 21. Die Verschiebevorrichtung 21 ist aus vier Gewindespindeln 17 mit elektrischem Servomotor 18, in Fig. 20 bis 22 und Fig. 26 nicht dargestellt, Führungen 20 und Befestigungen 19 aufgebaut.

Das mehrgängige Planetengetriebe besteht aus einem einfachen Planetengetriebe 6.1 in einem Planetengetriebegehäuse. Das einfache Planetengetriebe 6.1 besteht aus Sonnenrad 7.1, Hohlrad 10.1 und Trägerrad 8.1 mit Planetenrädern 9, in den Fig. 20 bis 22 und Fig. 26 nicht dargestellt. Weiterhin besteht das mehrgängige Planetengetriebe aus der Welle 11.1, der Welle 11.2 und der Welle 11.3 sowie Rücklaufsperre 12.1 und Rücklaufsperre 12.2.

Die Welle 11.1, die als Hohlwelle ausgebildet ist, ist drehbar auf der Welle 11.3 gelagert und verbindet Rotorsegment 3.1 des Rotors mit dem Sonnenrad 7.1. Die Welle 11.1 ist zugleich mit der Rücklaufsperre 12.1 verbunden. Die Rücklaufsperre 12.1 verfügt weiterhin über eine feste Verbindung mit dem Gehäuse 1.

Die Welle 11.2 in Ausbildung eines Planetengetriebegehäuses ist einerseits drehbar auf der Welle 11.1 und andererseits drehbar auf der Welle 11.3 gelagert. Weiterhin sind an Welle 11.2 das Hohlrad 10.1 und das Rotorsegment 3.2 des Rotors befestigt. Die Welle 11.2 ist zugleich mit der Rücklaufsperre 12.2 verbunden. Die Rücklaufsperre 12.2 verfügt weiterhin über eine feste Verbindung mit dem Gehäuse 1.

Die Welle 11.3 ist im Ausführungsbeispiel die Abtriebswelle der erfindungsgemäßen Antriebseinheit. Sie ist auf der Hauptachse 2 angeordnet und drehbar im Gehäuse 1 gelagert. Die Welle 11.3 ist fest mit dem Trägerrad 8.1 verbunden.

Das einfache Planetengetriebe 6.1 des mehrgängigen Planetengetriebes wird bei dieser Ausführung der Antriebseinheit über Rotorsegment 3.1 und Rotorsegment 3.2 angetrieben. Das Rotorsegment 3.1 ist in diesem Ausführungsbeispiel fest über Welle 11.1 mit dem Sonnenrad 7.1 verbunden. Das Rotorsegment 3.2 ist in diesem Ausführungsbeispiel fest über Welle 11.2 mit dem Hohlrad 10.1 verbunden.

Die Richtung des Drehsinns des Antriebs von Rotorsegment 3.1 und Rotorsegment 3.2 entspricht der Richtung des Drehsinns des Antriebs der Welle 11.3, welche die Abtriebswelle der erfindungsgemäßen Antriebseinheit ist. Rücklaufsperre 12.1 und Rücklaufsperre 12.2 verhindern, dass sich Rotorsegment 3.1 und Rotorsegment 3.2 und alle mit ihnen fest verbundenen Bestandteile des einfachen Planetengetriebes 6.1 entgegen der Richtung des Drehsinns des Antriebs der Welle 11.3 drehen können. Statorsegment 4.1 und Statorsegment 4.2 des Stators sind jeweils an einer Befestigung 19 der Verschiebevorrichtung 21 befestigt. Jede Befestigung 19 ist parallel zur Hauptachse 2 verschiebbar in einer Führung 20 gelagert, welche fest mit dem Gehäuse 1 verbunden ist. Jede Befestigung 19 weist zwei Innengewinde auf, durch welche jeweils eine Gewindespindel 17, welche parallel zur Hauptachse 2 angeordnet ist, läuft. Die jeweilige Gewindespindel 17 ist einerseits drehbar im Gehäuse 1 gelagert und andererseits fest mit einem Servomotor 18 verbunden, welcher wiederum fest mit dem Gehäuse 1 verbunden ist. Die Steuerung des jeweiligen Servomotors 18 erfolgt durch elektronische Steuergeräte. Je nach benötigter Bewegungsrichtung von Statorsegment 4.1 und Statorsegment 4.2 wird diese durch Links- oder Rechtslauf der jeweils zugeordneten Servomotoren 18 sichergestellt.

Die Funktionsweise der erfindungsgemäßen Antriebseinheit im fünften Ausführungsbeispiel wird im Folgenden anhand ihrer verschiedenen Schaltzustände und deren Übergängen erläutert. Dabei erfolgt die Beschreibung der Abfolge der Schaltzustände vom ersten Gang mit dem höchsten Drehmoment an der Abtriebswelle in Bezug auf die Leistung der elektrischen Maschine bis zum dritten Gang mit dem geringsten Drehmoment an der Abtriebswelle in Bezug auf die Leistung der elektrischen Maschine.

Im ersten Gang sind Statorsegment 4.1 und Statorsegment 4.2 so positioniert, dass sie das Rotorsegment 3.1 antreiben, sobald durch elektronische Steuergeräte der elektrische Energiefluss von einer elektrischen Energiequelle zu Statorsegment 4.1 und Statorsegment 4.2 geschaltet wird. Diese versetzen bei Zuschaltung des elektrischen Energieflusses das Rotorsegment 3.1 nunmehr in eine Drehbewegung. Dies erfolgt bis zu der Drehzahl, die maximal durch die elektrische Maschine erreicht werden kann. Das Rotorsegment 3.1 treibt über die Welle 11.1 das Sonnenrad 7.1 an. Die an der Welle 11.1 angeordnete Rücklaufsperre 12.1 befindet sich im Freilauf. Ein Rücklauf des Hohlrades 10.1 entgegen der Richtung des Drehsinns des Antriebs der Welle 11.3 wird durch die Rücklaufsperre 12.2 verhindert.

Somit treibt das Sonnenrad 7.1 in diesem Schaltzustand über die Planetenräder 9 das Trägerrad 8.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit stellt an der Welle 11.3 das maximale Drehmoment in Bezug auf die Leistung der elektrischen Maschine im ersten Gang bereit. Dieser Schaltzustand ist in Fig. 20 dargestellt.

Der Wechsel vom ersten Gang in den zweiten Gang erfolgt durch Neupositionierung von Statorsegment 4.1 und Statorsegment 4.2 mit der Verschiebevorrichtung 21 so, dass sie das Rotorsegment 3.2 antreiben können, sobald durch elektronische Steuergeräte der elektrische Energiefluss von einer elektrischen Energiequelle zu Statorsegment 4.1 und Statorsegment 4.2 geschaltet wird.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen.

Im zweiten Gang wird durch elektronische Steuergeräte der elektrische Energiefluss von einer elektrischen Energiequelle zu Statorsegment 4.1 und Statorsegment 4.2 geschaltet. Diese versetzen das Rotorsegment 3.2 nunmehr in eine Drehbewegung.

Das Rotorsegment 3.2 treibt das Hohlrad 10.1 an. Die Rücklaufsperre 12.2 befindet sich im Freilauf. Die Drehzahl des Hohlrades 10.1 erhöht sich. Das führt dazu, dass das Sonnenrad 7.1 negativ beschleunigt wird und zeitgleich eine Erhöhung der Drehzahl des Trägerrades 8.1, welches durch das Hohlrad 10.1 über die Planetenräder 9 angetrieben wird, zu verzeichnen ist. Da das Sonnenrad 7.1 nicht mehr durch das Rotorsegment 3.1 angetrieben wird, verringert sich die Drehzahl des Sonnenrades 7.1 bis zum Stillstand. Der Rücklauf des Sonnenrades 7.1 wird durch die Rücklaufsperre 12.1 verhindert. Die Drehzahl des Trägerrades 8.1 erhöht sich. Dies erfolgt bis zu der Drehzahl, die maximal durch die elektrische Maschine erreicht werden kann.

Das Trägerrad 8.1 treibt die Welle 11.3 an, welche im Ausführungsbeispiel die Abtriebswelle der erfindungsgemäßen Antriebseinheit ist.

Dieser Schaltzustand der erfindungsgemäßen Antriebseinheit im zweiten Gang stellt an der Welle 11.3 ein geringeres Drehmoment in Bezug auf die Leistung der elektrischen Maschine, jedoch bei höherer Drehzahl an der Welle 11.3 als im ersten Gang, bereit. Dieser Schaltzustand ist in Fig. 21 dargestellt.

Der Wechsel vom zweiten Gang in den dritten Gang erfolgt durch Neupositionierung des Statorsegments 4.1 mit der Verschiebevorrichtung 21 so, dass es das Rotorsegment 3.1 antreiben kann, sobald durch elektronische Steuergeräte der elektrische Energiefluss von einer elektrischen Energiequelle zum Statorsegment 4.1 geschaltet wird.

Es ist erforderlich, während der Neupositionierung des Statorsegments 4.1 den elektrischen Energiefluss zum Statorsegment 4.1 durch elektronische Steuergeräte zu unterbrechen.

Das Statorsegment 4.2 treibt über das Rotorsegment 3.2 weiterhin das mehrgängige Planetengetriebe an.

Im dritten Gang wird durch elektronische Steuergeräte der elektrische Energiefluss von einer elektrischen Energiequelle zum Statorsegment 4.1 geschaltet. Dieses versetzt das Rotorsegment 3.1 nunmehr in eine Drehbewegung.

Die Drehzahl des Rotorsegments 3.1 erhöht sich. Zeitgleich wird die Zufuhr der elektrischen Leistung zum Statorsegment 4.2 durch elektronische Steuergeräte abgesenkt, damit auch die Drehzahl von Rotorsegment 3.2 abgesenkt, bis die Drehzahlen von Rotorsegment 3.1 und Rotorsegment 3.2 annähernd synchron sind. Nachdem die Synchronisierung der Drehzahlen Rotorsegment 3.1 und Rotorsegment 3.2 erfolgt ist, wird ihre Drehzahl bis zu der Drehzahl erhöht, die maximal durch die elektrische Maschine erreicht werden kann.

Das Rotorsegment 3.1 treibt über die Welle 11.1 das Sonnenrad 7.1 an. Die an der Welle 11.1 angeordnete Rücklaufsperre 12.1 befindet sich im Freilauf. Weiterhin treibt das Rotorsegment 3.2 das Hohlrad 10.1 an. Die Rücklaufsperre 12.2 befindet sich im Freilauf.

Somit treiben das Sonnenrad 7.1 und das Hohlrad 10.1 in diesem Schaltzustand über die Planetenräder 9 das Trägerrad 8.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit im dritten Gang stellt an der Welle 11.3 das geringste Drehmoment in Bezug auf die Leistung der elektrischen Maschine bei maximaler Drehzahl an der Welle 11.3 bereit. Dieser Schaltzustand ist in Fig. 22 dargestellt.

Ein sechstes Ausführungsbeispiel der erfindungsgemäßen Antriebseinheit mit drei Gängen wird im Folgenden anhand der Fig. 23 bis 25 und Fig. 27 erläutert und dargestellt und besteht aus einem Gehäuse 1, in den Fig. 23 bis 25 und Fig. 27 nicht dargestellt, einer elektrischen Maschine und einem mehrgängigen Planetengetriebe, bestehend aus einem einfachen Planetengetriebe 6.1, wobei dieses über Rotorsegment 3.1 und Rotorsegment 3.2 von der elektrischen Maschine angetrieben wird.

Die elektrische Maschine besteht aus einem Stator, welcher aus Statorsegment 4.1 und Statorsegment 4.2 besteht, und weiterhin aus einem Rotor, welcher aus Rotorsegment 3.1 und Rotorsegment 3.2 besteht. Statorsegment 4.1 und Statorsegment 4.2 der elektrischen Maschine sind innerhalb des Radius von Rotorsegment 3.1 und Rotorsegment 3.2 der elektrischen Maschine angeordnet. Auf Statorsegment 4.1 und Statorsegment 4.2 sind elektrische Spulen 22, in den Fig. 23 bis 25 und Fig. 27 nicht dargestellt, und auf Rotorsegment 3.1 und Rotorsegment 3.2 sind Permanentmagnete 5, in den Fig. 23 bis 25 und Fig. 27 nicht dargestellt, angeordnet. Weiterhin besteht die elektrische Maschine aus einer Verschiebevorrichtung 21. Die Verschiebevorrichtung 21 ist aus vier Gewindespindeln 17 mit elektrischem Servomotor 18, in den Fig. 23 bis 25 und Fig. 27 nicht dargestellt, Führungen 20, und Befestigungen 19 aufgebaut.

Das mehrgängige Planetengetriebe besteht aus einem einfachen Planetengetriebe 6.1 in einem Planetengetriebegehäuse. Das einfache Planetengetriebe 6.1 besteht aus Sonnenrad 7.1, Hohlrad 10.1 und Trägerrad 8.1 mit Planetenrädern 9, in den Fig. 23 bis 25 und Fig. 27 nicht dargestellt. Weiterhin besteht das mehrgängige Planetengetriebe aus der Welle 11.1, der Welle 11.2 und der Welle 11.3 sowie Rücklaufsperre 12.1 und Rücklaufsperre 12.2.

Die Welle 11.1, die als Hohlwelle ausgebildet ist, ist drehbar auf der Welle 11.3 gelagert und verbindet Rotorsegment 3.1 des Rotors mit dem Sonnenrad 7.1. Die Welle 11.1 ist zugleich mit der Rücklaufsperre 12.1 verbunden. Die Rücklaufsperre 12.1 verfügt weiterhin über eine feste Verbindung mit dem Gehäuse 1.

Die Welle 11.2 in Ausbildung eines Planetengetriebegehäuses ist einerseits drehbar auf der Welle 11.1 und andererseits drehbar auf der Welle 11.3 gelagert. Weiterhin sind an Welle 11.2 das Hohlrad 10.1 und das Rotorsegment 3.2 des Rotors befestigt. Die Welle 11.2 ist zugleich mit der Rücklaufsperre 12.2 verbunden. Die Rücklaufsperre 12.2 verfügt weiterhin über eine feste Verbindung mit dem Gehäuse 1.

Die Welle 11.3 ist im Ausführungsbeispiel die Abtriebswelle der erfindungsgemäßen Antriebseinheit. Sie ist auf der Hauptachse 2 angeordnet und drehbar im Gehäuse 1 gelagert. Die Welle 11.3 ist fest mit dem Trägerrad 8.1 verbunden.

Das einfache Planetengetriebe 6.1 des mehrgängigen Planetengetriebes wird bei dieser Ausführung der Antriebseinheit über die Rotorsegment 3.1 und Rotorsegment 3.2 angetrieben. Das Rotorsegment 3.1 ist in diesem Ausführungsbeispiel fest über Welle 11.1 mit dem Sonnenrad 7.1 verbunden. Das Rotorsegment 3.2 ist in diesem Ausführungsbeispiel fest über Welle 11.2 mit dem Hohlrad 10.1 verbunden.

Die Richtung des Drehsinns des Antriebs von Rotorsegment 3.1 und Rotorsegment 3.2 entspricht der Richtung des Drehsinns des Antriebs der Welle 11.3, welche die Abtriebswelle der erfindungsgemäßen Antriebseinheit ist. Rücklaufsperre 12.1 und Rücklaufsperre 12.2 verhindern, dass sich Rotorsegment 3.1 und Rotorsegment 3.2 und alle mit ihnen fest verbundenen Bestandteile des einfachen Planetengetriebes 6.1 entgegen der Richtung des Drehsinns des Antriebs der Welle 11.3 drehen können.

Statorsegment 4.1 und Statorsegment 4.2 des Stators sind jeweils an einer Befestigung 19 der Verschiebevorrichtung 21 befestigt. Jede Befestigung 19 ist parallel zur Hauptachse 2 verschiebbar in einer Führung 20 gelagert, welche fest mit dem Gehäuse 1 verbunden ist. Jede Befestigung 19 weist zwei Innengewinde auf, durch welche jeweils eine Gewindespindel 17, welche parallel zur Hauptachse 2 angeordnet ist, läuft. Die jeweilige Gewindespindel 17 ist einerseits drehbar im Gehäuse 1 gelagert und andererseits fest mit einem Servomotor 18 verbunden, welcher wiederum fest mit dem Gehäuse 1 verbunden ist. Die Steuerung des jeweiligen Servomotors 18 erfolgt durch elektronische Steuergeräte. Je nach benötigter Bewegungsrichtung von Statorsegment 4.1 und Statorsegment 4.2 wird diese durch Links- oder Rechtslauf der jeweils zugeordneten Servomotoren 18 sichergestellt.

Die Funktionsweise der erfindungsgemäßen Antriebseinheit im sechsten Ausführungsbeispiel wird im Folgenden anhand ihrer verschiedenen Schaltzustände und deren Übergängen erläutert. Dabei erfolgt die Beschreibung der Abfolge der Schaltzustände vom ersten Gang mit dem höchsten Drehmoment an der Abtriebswelle in Bezug auf die Leistung der elektrischen Maschine bis zum dritten Gang mit dem geringsten Drehmoment an der Abtriebswelle in Bezug auf die Leistung der elektrischen Maschine.

Im ersten Gang sind Statorsegment 4.1 und Statorsegment 4.2 so positioniert, dass sie das Rotorsegment 3.1 antreiben, sobald durch elektronische Steuergeräte der elektrische Energiefluss von einer elektrischen Energiequelle zu Statorsegment 4.1 und Statorsegment 4.2 geschaltet wird. Diese versetzen bei Zuschaltung des elektrischen Energieflusses das Rotorsegment 3.1 nunmehr in eine Drehbewegung. Dies erfolgt bis zu der Drehzahl, die maximal durch die elektrische Maschine erreicht werden kann. Das Rotorsegment 3.1 treibt über die Welle 11.1 das Sonnenrad 7.1 an. Die an der Welle 11.1 angeordnete Rücklaufsperre 12.1 befindet sich im Freilauf. Ein Rücklauf des Hohlrades 10.1 entgegen der Richtung des Drehsinns des Antriebs der Welle 11.3 wird durch die Rücklaufsperre 12.2 verhindert.

Somit treibt das Sonnenrad 7.1 in diesem Schaltzustand über die Planetenräder 9 das Trägerrad 8.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit stellt an der Welle 11.3 das maximale Drehmoment in Bezug auf die Leistung der elektrischen Maschine im ersten Gang bereit. Dieser Schaltzustand ist in Fig. 23 dargestellt.

Der Wechsel vom ersten Gang in den zweiten Gang erfolgt durch Neupositionierung von Statorsegment 4.1 und Statorsegment 4.2 mit der Verschiebevorrichtung 21 so, dass sie das Rotorsegment 3.2 antreiben können, sobald durch elektronische Steuergeräte der elektrische Energiefluss von einer elektrischen Energiequelle zu Statorsegment 4.1 und Statorsegment 4.2 geschaltet wird.

Es ist erforderlich, während der Neupositionierung von Statorsegment 4.1 und Statorsegment 4.2 den elektrischen Energiefluss zu Statorsegment 4.1 und Statorsegment 4.2 durch elektronische Steuergeräte zu unterbrechen.

Im zweiten Gang wird durch elektronische Steuergeräte der elektrische Energiefluss von einer elektrischen Energiequelle zu Statorsegment 4.1 und Statorsegment 4.2 geschaltet. Diese versetzen das Rotorsegment 3.2 nunmehr in eine Drehbewegung.

Das Rotorsegment 3.2 treibt das Hohlrad 10.1 an. Die Rücklaufsperre 12.2 befindet sich im Freilauf. Die Drehzahl des Hohlrades 10.1 erhöht sich. Das führt dazu, dass das Sonnenrad 7.1 negativ beschleunigt wird und zeitgleich eine Erhöhung der Drehzahl des Trägerrades 8.1, welches durch das Hohlrad 10.1 über die Planetenräder 9 angetrieben wird, zu verzeichnen ist. Da das Sonnenrad 7.1 nicht mehr durch das Rotorsegment 3.1 angetrieben wird, verringert sich die Drehzahl des Sonnenrades 7.1 bis zum Stillstand. Der Rücklauf des Sonnenrades 7.1 wird durch die Rücklaufsperre 12.1 verhindert. Die Drehzahl des Trägerrades 8.1 erhöht sich. Dies erfolgt bis zu der Drehzahl, die maximal durch die elektrische Maschine erreicht werden kann.

Das Trägerrad 8.1 treibt die Welle 11.3 an, welche im Ausführungsbeispiel die Abtriebswelle der erfindungsgemäßen Antriebseinheit ist.

Dieser Schaltzustand der erfindungsgemäßen Antriebseinheit im zweiten Gang stellt an der Welle 11.3 ein geringeres Drehmoment in Bezug auf die Leistung der elektrischen Maschine, jedoch bei höherer Drehzahl an der Welle 11.3 als im ersten Gang, bereit. Dieser Schaltzustand ist in Fig. 24 dargestellt.

Der Wechsel vom zweiten Gang in den dritten Gang erfolgt durch Neupositionierung des Statorsegments 4.1 mit der Verschiebevorrichtung 21 so, dass es das Rotorsegment 3.1 antreiben kann, sobald durch elektronische Steuergeräte der elektrische Energiefluss von einer elektrischen Energiequelle zum Statorsegment 4.1 geschaltet wird.

Es ist erforderlich, während der Neupositionierung des Statorsegments 4.1 den elektrischen Energiefluss zum Statorsegment 4.1 durch elektronische Steuergeräte zu unterbrechen.

Das Statorsegment 4.2 treibt über das Rotorsegment 3.2 weiterhin das mehrgängige Planetengetriebe an.

Im dritten Gang wird durch elektronische Steuergeräte der elektrische Energiefluss von einer elektrischen Energiequelle zum Statorsegment 4.1 geschaltet. Dieses versetzt das Rotorsegment 3.1 nunmehr in eine Drehbewegung.

Die Drehzahl des Rotorsegments 3.1 erhöht sich. Zeitgleich wird die Zufuhr der elektrischen Leistung zum Statorsegment 4.2 durch elektronische Steuergeräte abgesenkt, damit auch die Drehzahl von Rotorsegment 3.2 abgesenkt, bis die Drehzahlen von Rotorsegment 3.1 und Rotorsegment 3.2 annähernd synchron sind. Nachdem die Synchronisierung der Drehzahlen von Rotorsegment 3.1 und Rotorsegment 3.2 erfolgt ist, wird ihre Drehzahl bis zu der Drehzahl erhöht, die maximal durch die elektrische Maschine erreicht werden kann.

Das Rotorsegment 3.1 treibt über die Welle 11.1 das Sonnenrad 7.1 an. Die an der Welle 11.1 angeordnete Rücklaufsperre 12.1 befindet sich im Freilauf. Weiterhin treibt das Rotorsegment 3.2 das Hohlrad 10.1 an. Die Rücklaufsperre 12.2 befindet sich im Freilauf.

Somit treiben das Sonnenrad 7.1 und das Hohlrad 10.1 in diesem Schaltzustand über die Planetenräder 9 das Trägerrad 8.1 und damit die Welle 11.3 an, welche im Ausführungsbeispiel die Abtriebswelle der erfindungsgemäßen Antriebseinheit ist.

Dieser Schaltzustand der erfindungsgemäßen Antriebseinheit im dritten Gang stellt an der Welle 11.3 das geringste Drehmoment in Bezug auf die Leistung der elektrischen Maschine bei maximaler Drehzahl an der Welle 11.3 bereit. Dieser Schaltzustand ist in Fig. 25 dargestellt.

Liste der Bezugszeichen
- 1: Gehäuse
- 2: Hauptachse
- 3.1: Rotorsegment
- 3.2: Rotorsegment
- 3.3: Rotorsegment
- 4.1: Statorsegment
- 4.2: Statorsegment
- 5: Permanentmagnet
- 6.1: Planetengetriebe
- 6.2: Planetengetriebe
- 7.1: Sonnenrad
- 7.2: Sonnenrad
- 8.1: Trägerrad
- 8.2: Trägerrad
- 9: Planetenrad
- 10.1: Hohlrad
- 10.2: Hohlrad
- 11.1: Welle
- 11.2: Welle
- 11.3: Welle
- 11.4: Welle
- 11.5: Welle
- 12.1: Rücklaufsperre
- 12.2: Rücklaufsperre
- 12.3: Rücklaufsperre
- 13: Bremse
- 14: Überholkupplung
- 15: Haltevorrichtung
- 16: weitere elektrische Maschine
- 17: Gewindespindel
- 18: Servomotor
- 19: Befestigung
- 20: Führung
- 21: Verschiebevorrichtung
- 22: elektrische Spule

## Patentansprüche

1. Antriebseinheit zumindest enthaltend ein Gehäuse (1), darin zumindest angeordnet
- eine elektrische Maschine,
bestehend aus einem Stator, welcher zumindest zwei Statorsegmente besitzt,
und weiterhin bestehend aus einem Rotor, welcher zumindest zwei Rotorsegmente besitzt, die jeweils über zumindest eine Bremse (13) oder eine Rücklaufsperre verfügen, welche über eine feste Verbindung mit dem Gehäuse (1) verfügt,
- und ein mehrgängiges Planetengetriebe, bestehend aus zumindest einem, koaxial zur Hauptachse (2) angeordneten, einfachen Planetengetriebe (6.1), bestehend aus zumindest einem Hohlrad (10.1), einem Trägerrad (8.1) und einem Sonnenrad (7.1), **dadurch gekennzeichnet, dass** zumindest zwei Statorsegmente des Stators der elektrischen Maschine mit zumindest einer Verschiebevorrichtung (21) parallel zur Hauptachse (2) verschiebbar sind und die zumindest zwei Rotorsegmente jeweils getrennt voneinander drehfest mit dem Sonnenrad (7.1), mit dem Hohlrad (10.1) oder mit dem Trägerrad (8.1) verbunden sind.

2. Antriebseinheit nach Anspruch 1, **dadurch gekennzeichnet, dass** die zwei Statorsegmente des Stators das Statorsegment (4.1) und das Statorsegment (4.2) sind, die zwei Rotorsegmente des Rotors das Rotorsegment (3.1) und das Rotorsegment (3.2) sind und die Rücklaufsperren die Rücklaufsperre (12.1) und die Rücklaufsperre (12.2) sind.

3. Antriebseinheit nach Anspruch 1 oder 2, **dadurch gekennzeichnet, dass** der Rotor zumindest drei Rotorsegmente besitzt und das mehrgängige Planetengetriebe aus zumindest zwei, koaxial zur Hauptachse (2) angeordneten, einfachen Planetengetrieben besteht, wobei das Sonnenrad (7.1), das Hohlrad (10.1) oder das Trägerrad (8.1), welches nicht drehfest mit Rotorsegment (3.1), mit Rotorsegment (3.2) oder mit Rotorsegment (3.3) verbunden ist, mit dem Sonnenrad (7.2), mit dem Hohlrad (10.2) oder mit dem Trägerrad (8.2) verbunden ist, welches weder mit dem Rotorsegment (3.1), mit dem Rotorsegment (3.2), mit dem Rotorsegment (3.3) noch mit der Abtriebswelle der erfindungsgemäßen Antriebseinheit verbunden ist, wobei am Planetengetriebe (6.1) zwei Rotorsegmente, **nämlich** das Rotorsegment (3.1) und das Rotorsegment (3.2), befestigt sind und am Planetengetriebe (6.2) ein Rotorsegment, **nämlich** das Rotorsegment (3.3), befestigt ist, und die Antriebseinheit zumindest eine Haltevorrichtung (15), die an zumindest einem Haltepunkt fest mit dem Gehäuse (1) verbunden ist, enthält, die so angeordnet ist, dass mit einer an ihr befestigten Rücklaufsperre (12.2) oder mit einer an ihr befestigten Bremse (13) zumindest das Rotorsegment, welches zwischen zwei benachbarten Rotorsegmenten angeordnet ist, blockierbar ist.

4. Antriebseinheit nach Anspruch 3, **dadurch gekennzeichnet, dass** die Rotorsegmente das Rotorsegment (3.1), das Rotorsegment (3.2) und das Rotorsegment (3.3) sind und die einfachen Planetengetriebe das Planetengetriebe (6.1) und das Planetengetriebe (6.2) sind.

5. Antriebseinheit nach Anspruch 3 oder 4 **dadurch gekennzeichnet, dass** durch eine weitere elektrische Maschine (16), nämlich einen Elektromotor, das Sonnenrad (7.1), das Hohlrad (10.1) oder das Trägerrad (8.1) des Planetengetriebes (6.1), welches drehfest mit dem Rotorsegment (3.1) verbunden ist, antreibbar ist.

6. Antriebseinheit gemäß einem der Ansprüche 3, 4 oder 5, **dadurch gekennzeichnet, dass** das Verhältnis der Anzahl der Zähne von Sonnenrad (7.1) zur Anzahl der Zähne von Hohlrad (10.1) im Planetengetriebe (6.1) und das Verhältnis der Anzahl der Zähne von Sonnenrad (7.2) zur Anzahl der Zähne von Hohlrad (10.2) im Planetengetriebe (6.2) im Bereich zwischen 1 zu 1,46 und 1 zu 1,77, besonders bevorzugt bei 1 zu 1,618, liegt.

7. Antriebseinheit nach Anspruch 6, **dadurch gekennzeichnet, dass** das Verhältnis der Anzahl der Zähne von Sonnenrad (7.1) zur Anzahl der Zähne von Hohlrad (10.1) im Planetengetriebe (6.1) und das Verhältnis der Anzahl der Zähne von Sonnenrad (7.2) zur Anzahl der Zähne von Hohlrad (10.2) im Planetengetriebe (6.2) im Bereich zwischen 1 zu 1,46 und 1 zu 1,77, besonders bevorzugt bei 1 zu 1,618, liegt und das Statorsegment (4.1) des Stators über sechs elektrische Spulen (22) verfügt und das Statorsegment (4.2) des Stators über fünfzehn elektrische Spulen (22) verfügt, wobei durch die Statorsegmente, nämlich Statorsegment (4.1) und Statorsegment (4.2), ausschließlich dreiphasige Drehfelder erzeugbar sind.

8. Verwendung einer Antriebseinheit gemäß zumindest einem der Ansprüche 1 bis 7 für ein Kraftfahrzeug, Luft- oder Wasserfahrzeug, für Werkzeugmaschinen oder als Generator in einer Windkraftanlage.
